# EUROPEAN PATENT APPLICATION

(11) **EP 4 704 420 A1**
(43) Date of publication of application: **04.03.2026**
(21) Application number: 24796728.4
(22) Date of filing: 03.04.2024
(51) Int. Cl.: H04N 19/90

(54) **DECODING DEVICE, ENCODING DEVICE, BIT STREAM GENERATION DEVICE, DECODING METHOD, AND ENCODING METHOD**

(30) Priority: 28.04.2023 US 202363462648 P
(71) Applicant: Panasonic Intellectual Property Corporation of America, Torrance, CA 90504 (US)
(72) Inventor: THONG, Jing Yuan, Singapore 469332 (SG); KARLEKAR, Jayashree, Singapore 469332 (SG); TEO, Han Boon, Singapore 469332 (SG); LIM, Chong Soon, Singapore 469332 (SG); LIM, Sugiri Pranata, Singapore 469332 (SG); ABE, Kiyofumi, Kadoma-shi, Osaka 571-0057 (JP); NISHI, Takahiro, Kadoma-shi, Osaka 571-0057 (JP); TOMA, Tadamasa, Kadoma-shi, Osaka 571-0057 (JP)
(74) Representative: Grünecker Patent- und Rechtsanwälte PartG mbB
(86) International application number: PCT/JP2024/013848
(87) International publication number: WO 2024/224970

(57) **Abstract**

A decoder (200) includes memory (252) and circuitry (251) coupled to the memory (252). In operation, the circuitry (251): decodes, from one or more streams, (i) a fundamental image that is an image including a face, (ii) geometric information indicating geometric attributes of a subject and corresponding to each of frames of a captured video by a camera, and (iii) background information regarding a background image (S401); and generates a synthesized face video using a generative model from the fundamental image, the geometric information, and the background information (S402). The synthesized face video is a video including the face and synthesized with the background image.

## Description

### [Technical Field]

The present disclosure relates to a decoder, etc.

### [Background Art]

With advancement in video coding technology, from H.261 and MPEG-1 to H.264/AVC (Advanced Video Coding), MPEG-LA, H.265/HEVC (High Efficiency Video Coding) and H.266/VVC (Versatile Video Codec), there remains a constant need to provide improvements and optimizations to the video coding technology to process an ever-increasing amount of digital video data in various applications. The present disclosure relates to further advancements, improvements and optimizations in video coding.

Note that Non Patent Literature (NPL) 1 relates to one example of a conventional standard regarding the above-described video coding technology. Moreover, NPL 2 relates to a new proposal regarding the above-described video coding technology.

### Citation List

### Non Patent Literature

NPL 1: H.265 (ISO/IEC 23008-2 HEVC)/HEVC (High Efficiency Video Coding)
NPL 2: "AHG9/AHG16: Common text for proposed generative face video SEI message", JVET-AG0203-v1

### [Summary of Invention]

### [Technical Problem]

Regarding the encoding scheme as described above, proposals of new schemes have been desired in order to (i) improve coding efficiency, enhance image quality, reduce processing amounts, reduce circuit scales, or (ii) appropriately select an element or an operation. The element is, for example, a filter, a block, a size, a motion vector, a reference picture, or a reference block.

The present disclosure provides, for example, a configuration or a method which can contribute to at least one of increase in coding efficiency, increase in image quality, reduction in processing amount, reduction in circuit scale, appropriate selection of an element or an operation, etc. It is to be noted that the present disclosure may encompass possible configurations or methods which can contribute to advantages other than the above advantages.

### [Solution to Problem]

For example, a decoder according to one aspect of the present disclosure includes memory and circuitry coupled to the memory, in which, in operation, the circuitry: decodes, from one or more streams, (i) a fundamental image that is an image including a face, (ii) geometric information indicating geometric attributes of a subject and corresponding to each of frames of a captured video by a camera, and (iii) background information regarding a background image; and generates a synthesized face video using a generative model from the fundamental image, the geometric information, and the background information, the synthesized face video being a video including the face and synthesized with the background image.

Each of embodiments, or each of part of constituent elements and methods in the present disclosure enables, for example, at least one of the following: improvement in coding efficiency, enhancement in image quality, reduction in processing amount of encoding/decoding, reduction in circuit scale, improvement in processing speed of encoding/decoding, etc. Alternatively, each of embodiments, or each of part of constituent elements and methods in the present disclosure enables, in encoding and decoding, appropriate selection of an element or an operation. The element is, for example, a filter, a block, a size, a motion vector, a reference picture, or a reference block. It is to be noted that the present disclosure includes disclosure regarding configurations and methods which may provide advantages other than the above-described ones. Examples of such configurations and methods include a configuration or method for improving coding efficiency while reducing increase in processing amount.

Additional benefits and advantages according to an aspect of the present disclosure will become apparent from the specification and drawings. The benefits and/or advantages may be individually obtained by the various embodiments and features of the specification and drawings, and not all of which need to be provided in order to obtain one or more of such benefits and/or advantages.

It is to be noted that these general or specific aspects may be implemented using a system, an integrated circuit, a computer program, or a computer readable medium (recording medium) such as a CD-ROM, or any combination of systems, methods, integrated circuits, computer programs, and media.

### [Advantageous Effects of Invention]

A configuration or method according to an aspect of the present disclosure enables, for example, at least one of the following: improvement in coding efficiency, enhancement in image quality, reduction in processing amount, reduction in circuit scale, improvement in processing speed, appropriate selection of an element or an operation, etc. It is to be noted that the configuration or method according to an aspect of the present disclosure may provide advantages other than the above-described ones.

### [Brief Description of Drawings]

[FIG. 1]

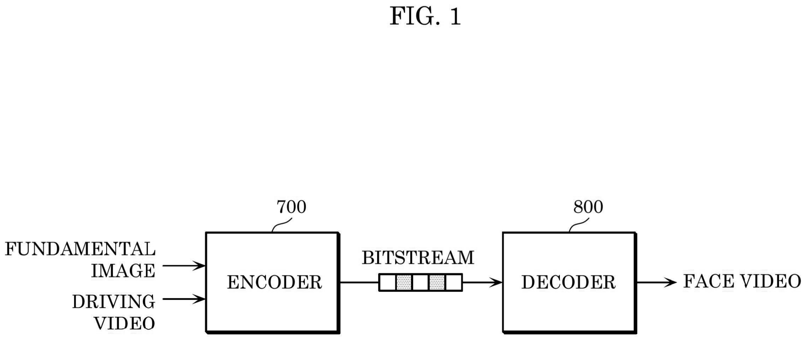

   FIG. 1 is a block diagram illustrating the configuration of an encoding and decoding system according to a reference example.
[FIG. 2]

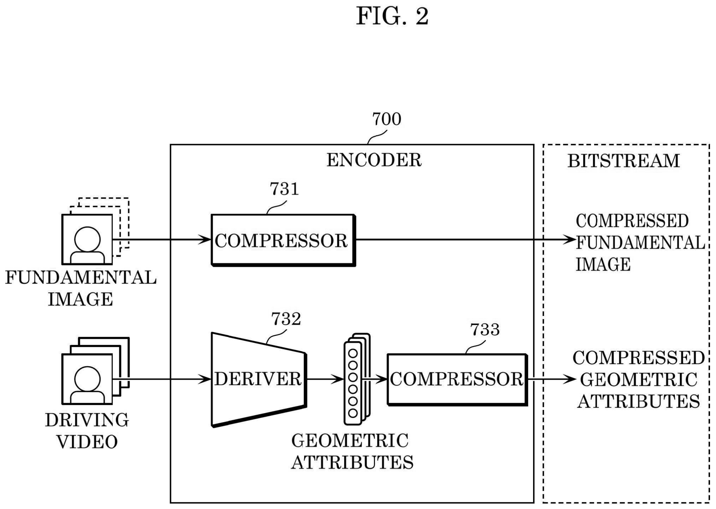

   FIG. 2 is a block diagram illustrating the configuration of an encoder according to the reference example.
[FIG. 3]

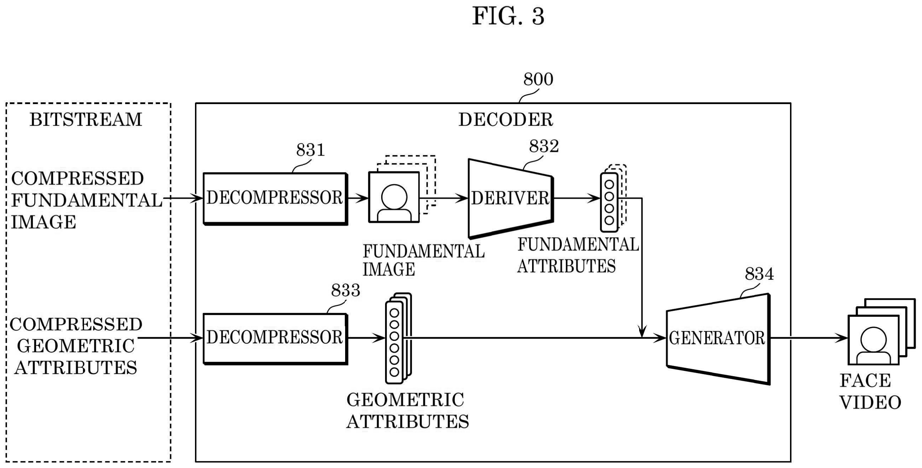

   FIG. 3 is a block diagram illustrating the configuration of a decoder according to the reference example.
[FIG. 4]

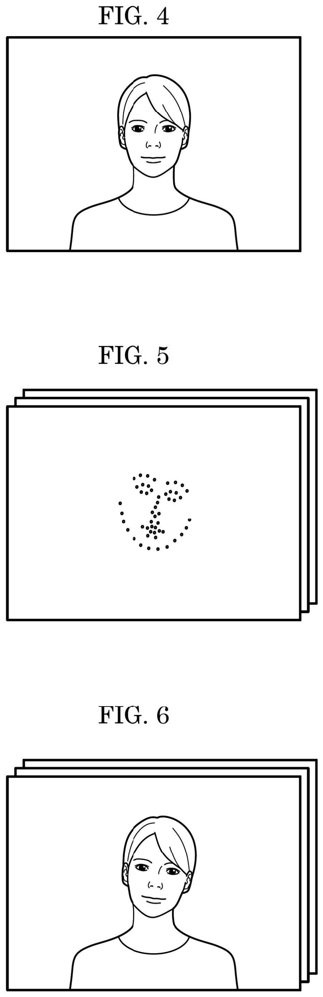

   FIG. 4 is a conceptual diagram illustrating an example of a fundamental image.
[FIG. 5]
   FIG. 5 is a conceptual diagram illustrating an example of geometric attributes.
[FIG. 6]
   FIG. 6 is a conceptual diagram illustrating an example of a face video.
[FIG. 7]

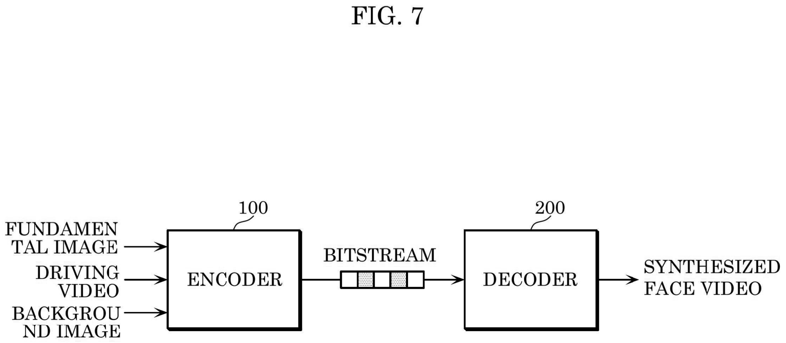

   FIG. 7 is a block diagram illustrating a configuration example of an encoding and decoding system according to an embodiment.
[FIG. 8]

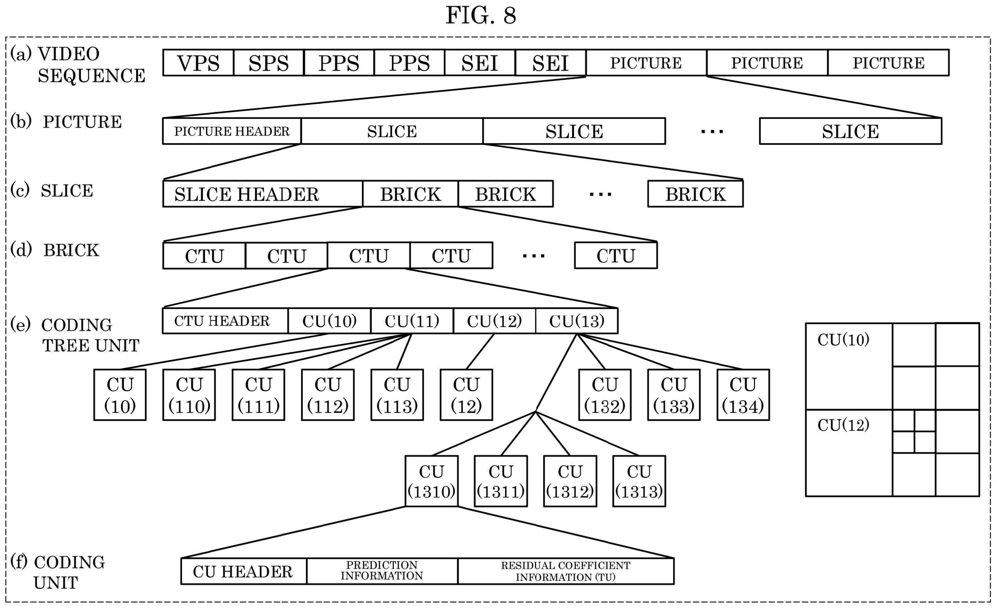

   FIG. 8 is a diagram illustrating one example of a hierarchical structure of data in a stream.
[FIG. 9]

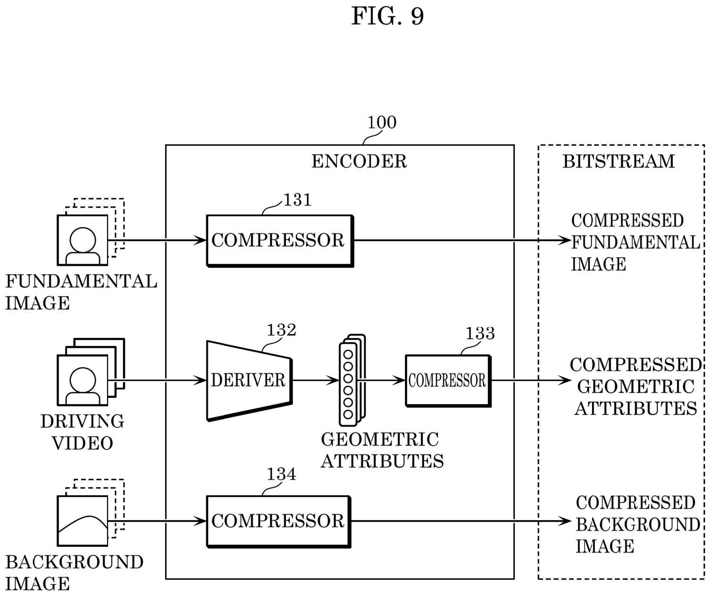

   FIG. 9 is a block diagram illustrating a configuration example of an encoder according to the embodiment.
[FIG. 10]

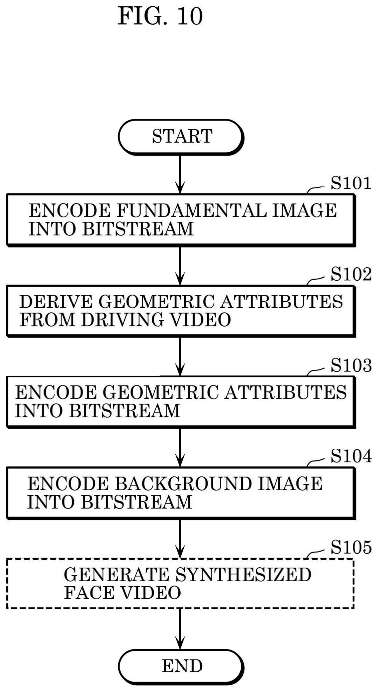

   FIG. 10 is a flow chart illustrating an operation example performed by the encoder according to the embodiment.
[FIG. 11]

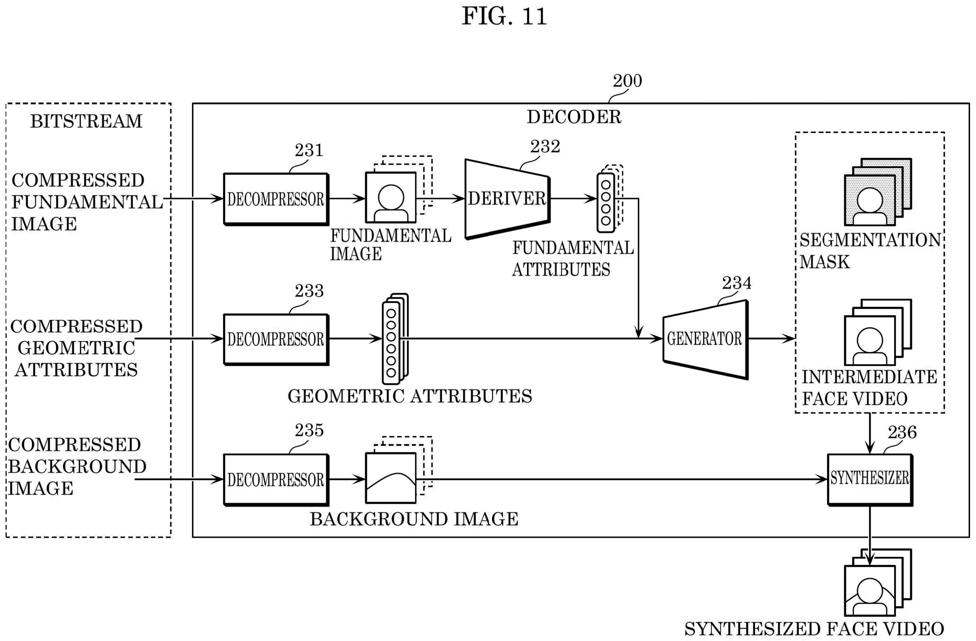

   FIG. 11 is a block diagram illustrating a configuration example of a decoder according to the embodiment.
[FIG. 12]

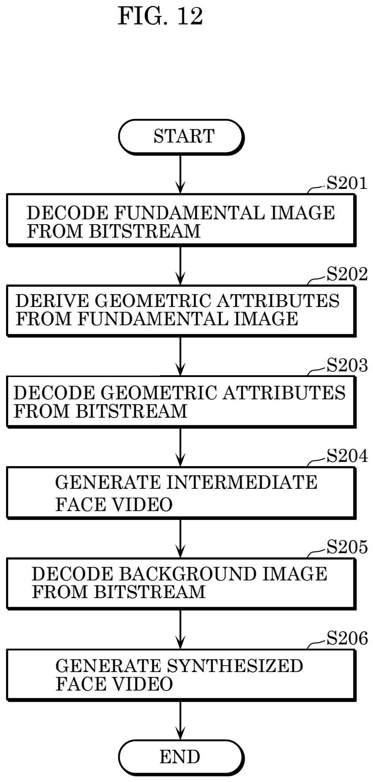

   FIG. 12 is a flow chart illustrating an operation example performed by the decoder according to the embodiment.
[FIG. 13]

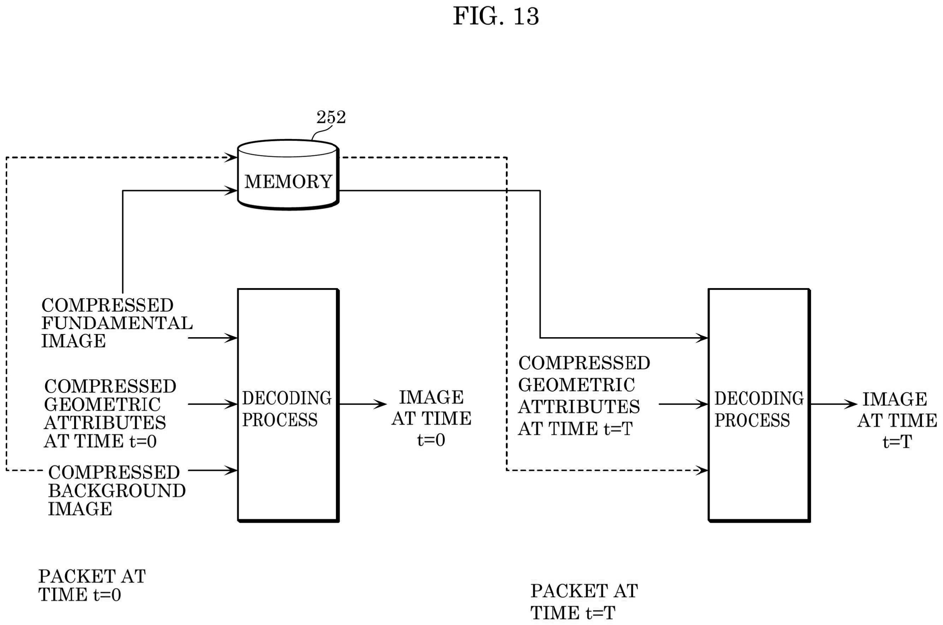

   FIG. 13 is a concept diagram illustrating an example of a decoding process at each time instance.
[FIG. 14]

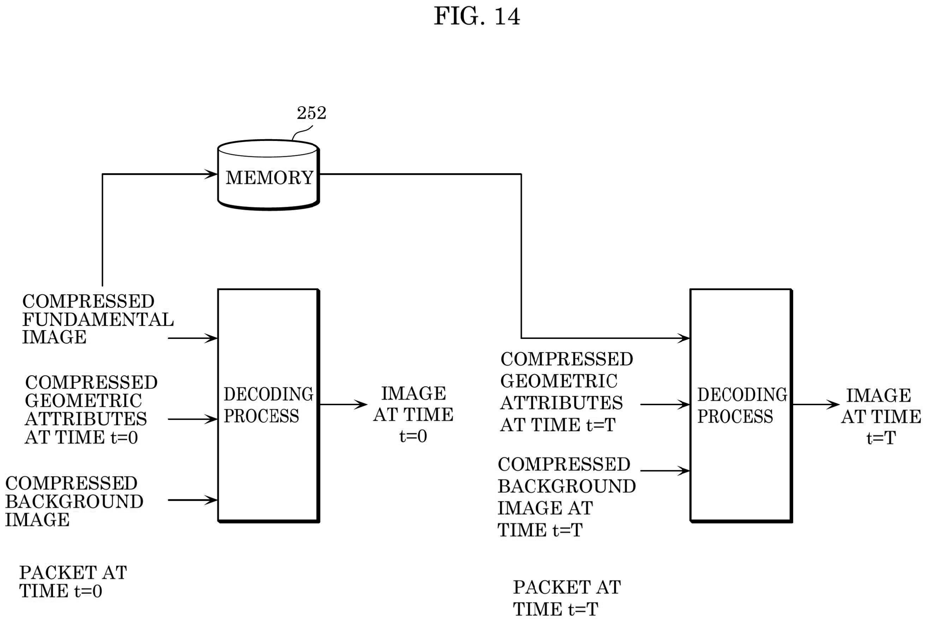

   FIG. 14 is a concept diagram illustrating another example of the decoding process at each time instance.
[FIG. 15]

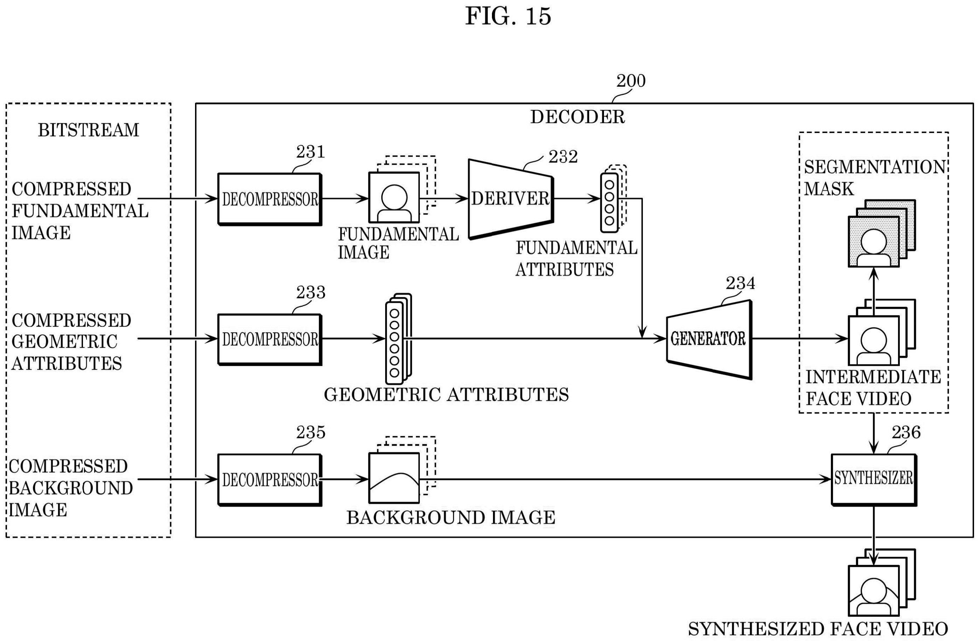

   FIG. 15 is a block diagram illustrating another configuration example of the decoder according to the embodiment.
[FIG. 16]

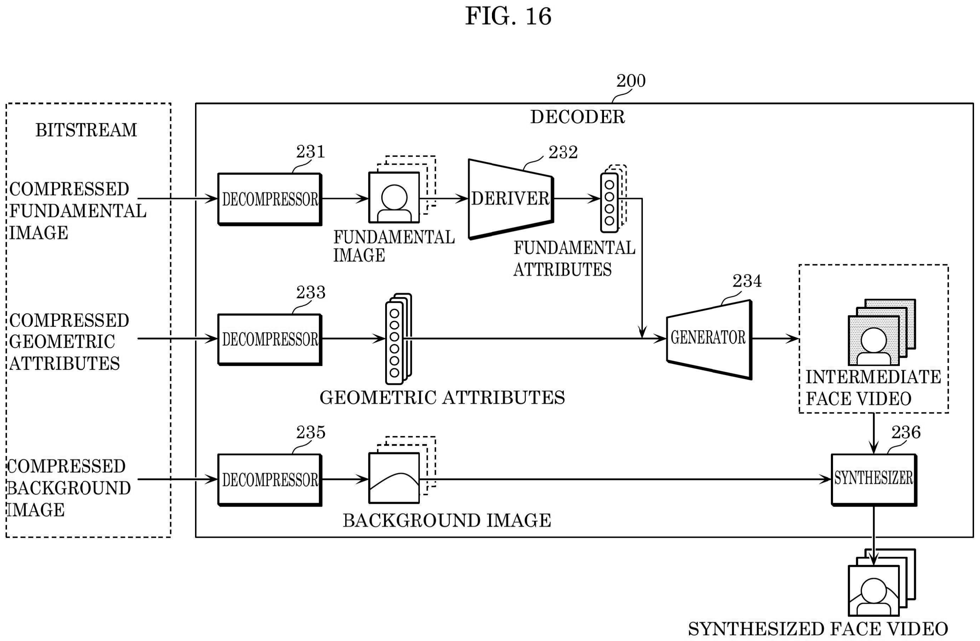

   FIG. 16 is a block diagram illustrating yet another configuration example of the decoder according to the embodiment.
[FIG. 17]

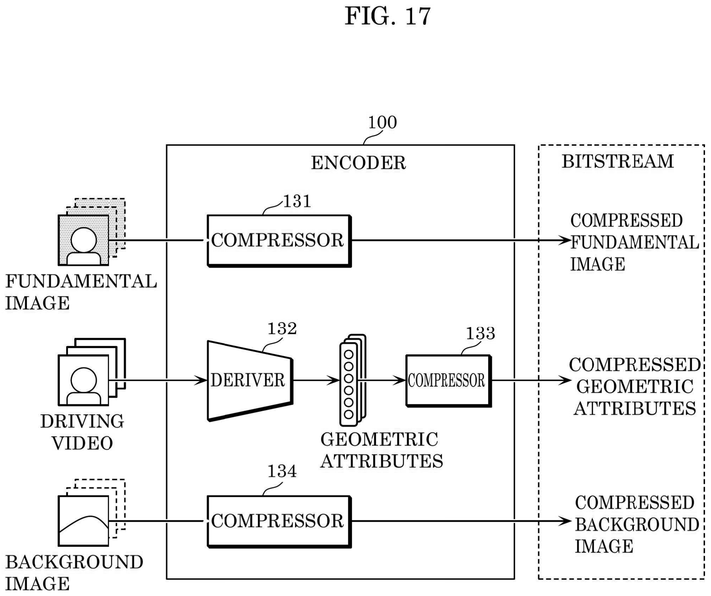

   FIG. 17 is a block diagram illustrating another configuration example of the encoder according to the embodiment.
[FIG. 18]

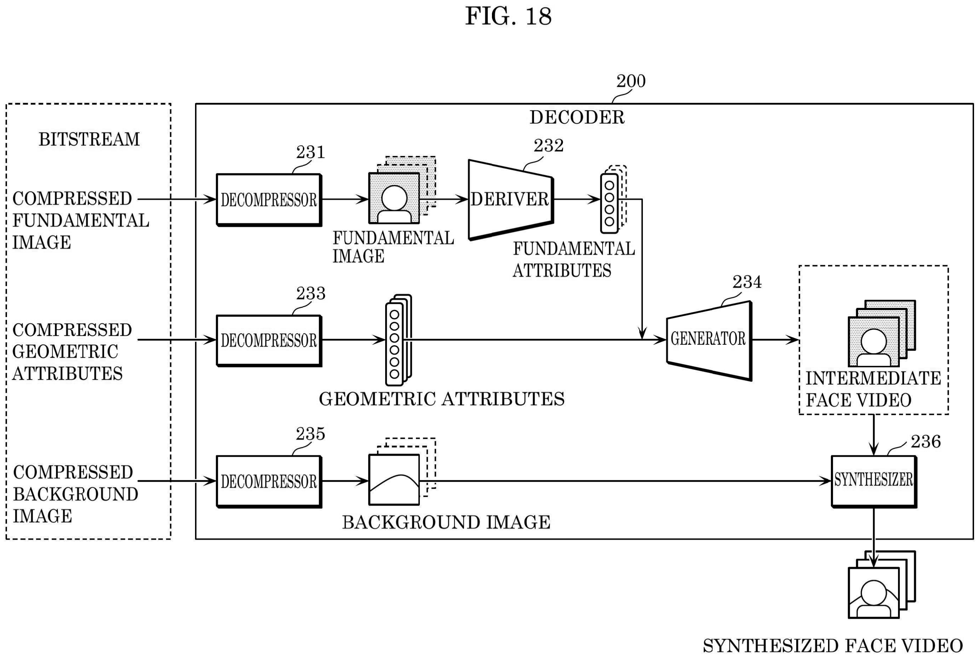

   FIG. 18 is a block diagram illustrating yet another configuration example of the decoder according to the embodiment.
[FIG. 19]

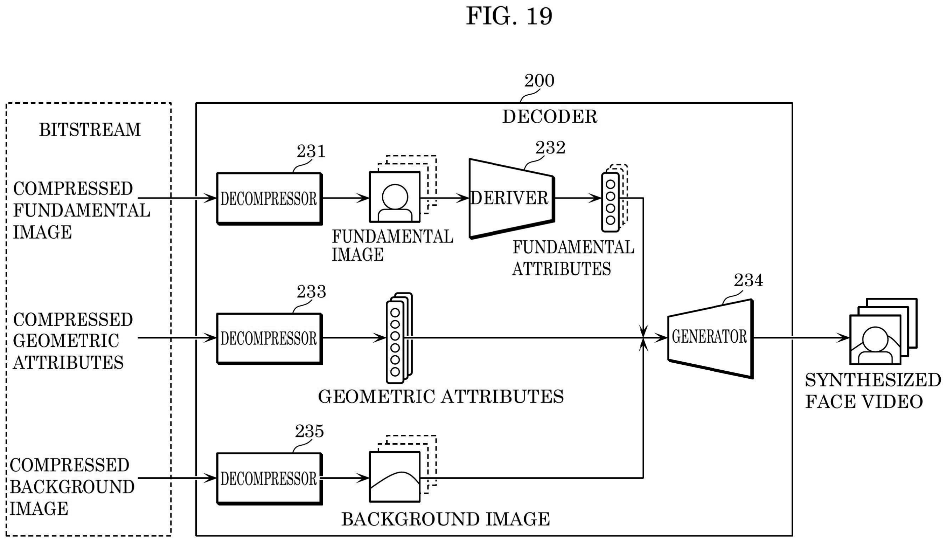

   FIG. 19 is a block diagram illustrating yet another configuration example of the decoder according to the embodiment.
[FIG. 20]

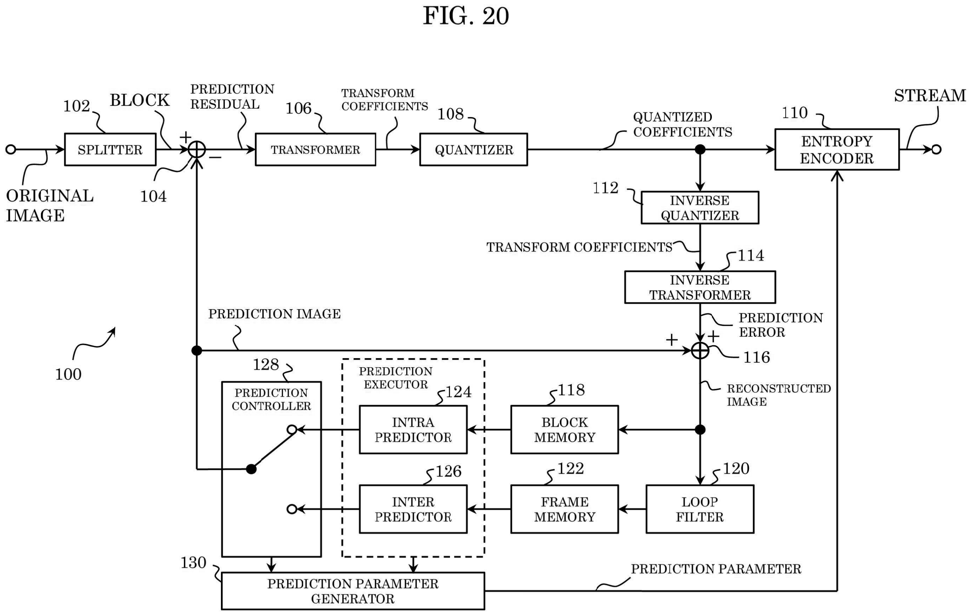

   FIG. 20 is a block diagram illustrating a configuration example for the encoder according to the embodiment to encode a video.
[FIG. 21]

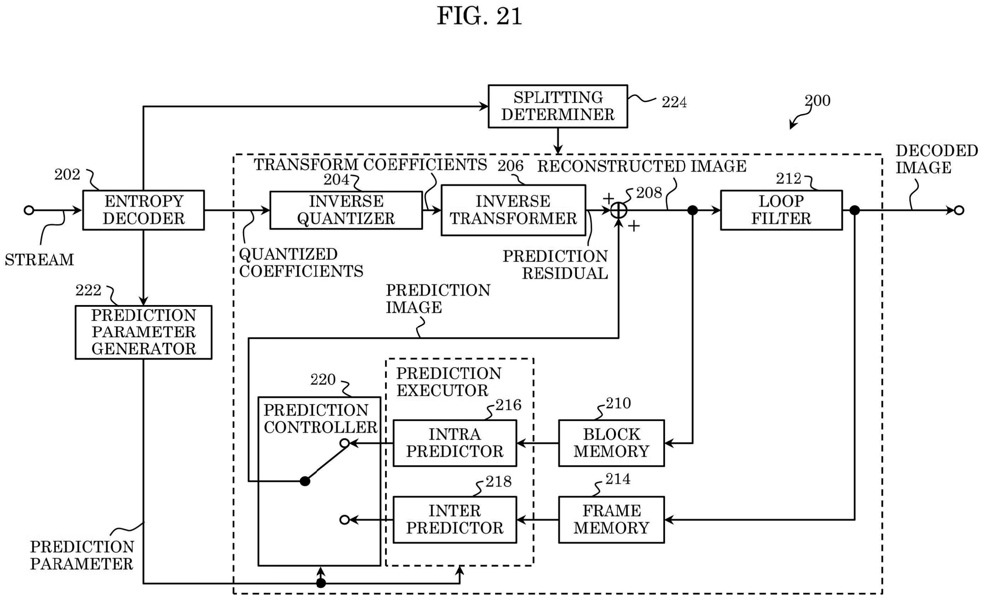

   FIG. 21 is a block diagram illustrating a configuration example for the decoder according to the embodiment to decode a video.
[FIG. 22]

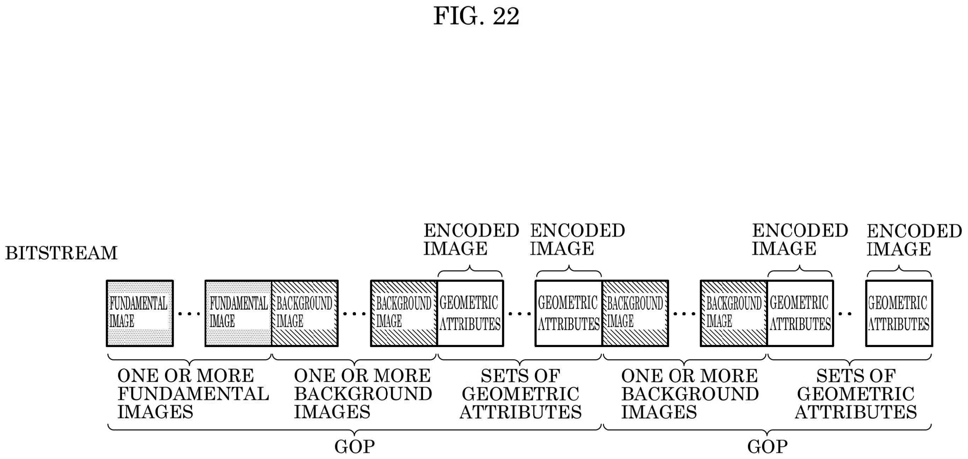

   FIG. 22 is a conceptual diagram illustrating a configuration example of a bitstream.
[FIG. 23]

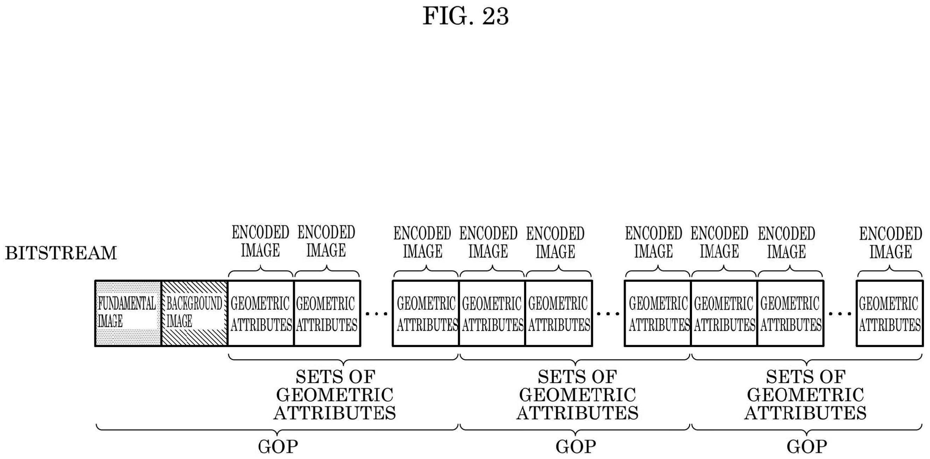

   FIG. 23 is a conceptual diagram illustrating another configuration example of the bitstream.
[FIG. 24]

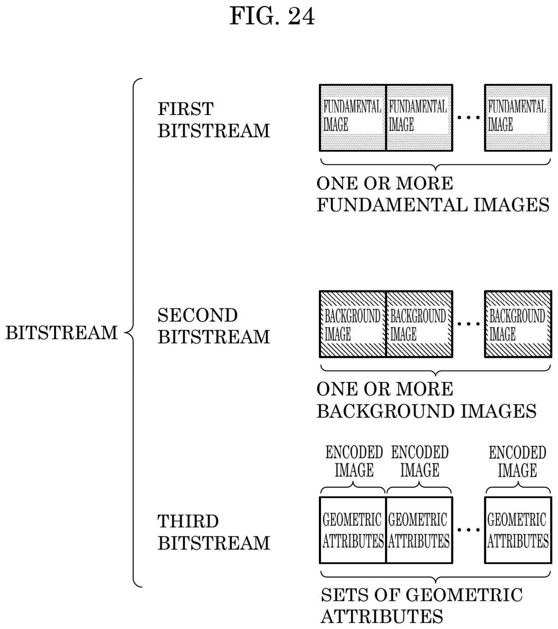

   FIG. 24 is a conceptual diagram illustrating yet another configuration example of the bitstream.
[FIG. 25]

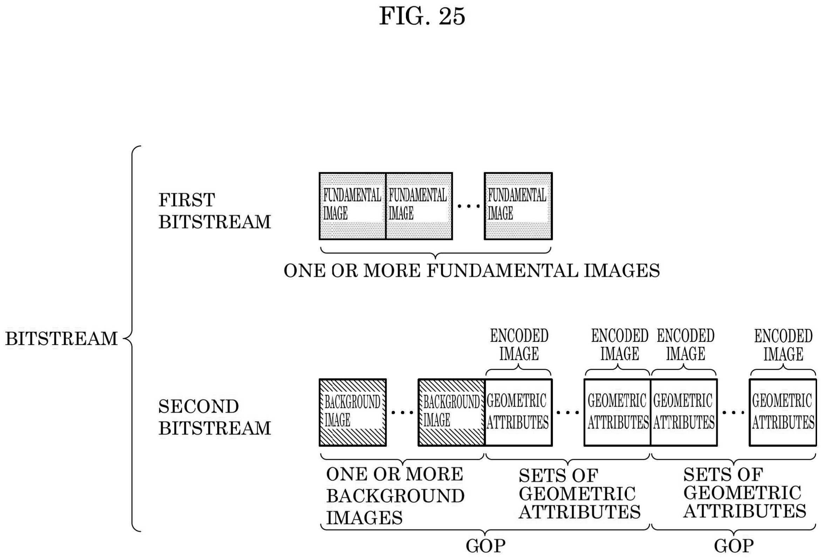

   FIG. 25 is a conceptual diagram illustrating yet another configuration example of the bitstream.
[FIG. 26]

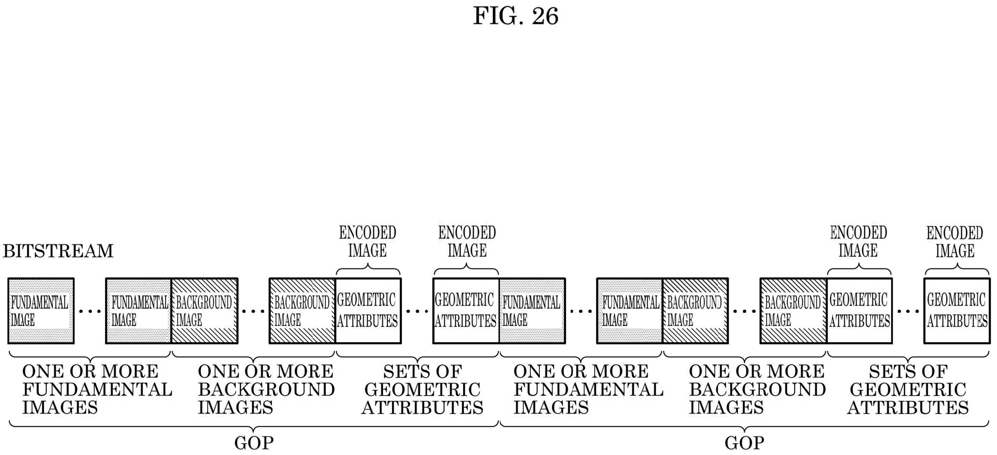

   FIG. 26 is a conceptual diagram illustrating yet another configuration example of the bitstream.
[FIG. 27]

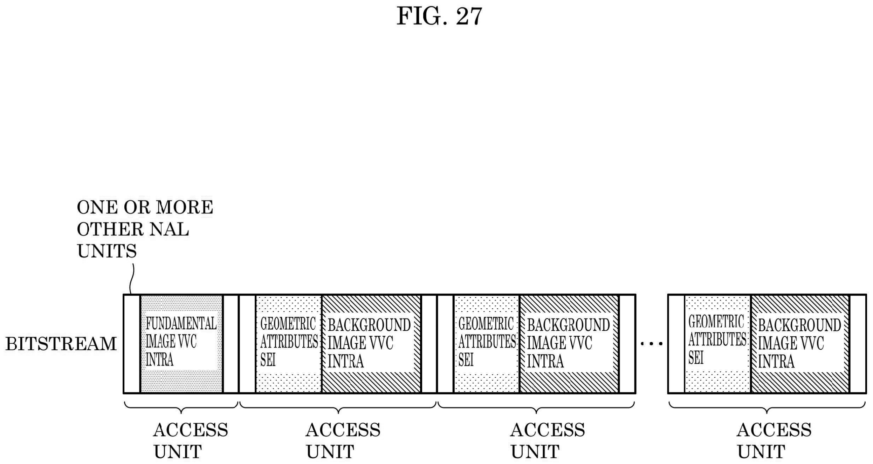

   FIG. 27 is a conceptual diagram illustrating a configuration example of a bitstream compliant to VVC.
[FIG. 28]

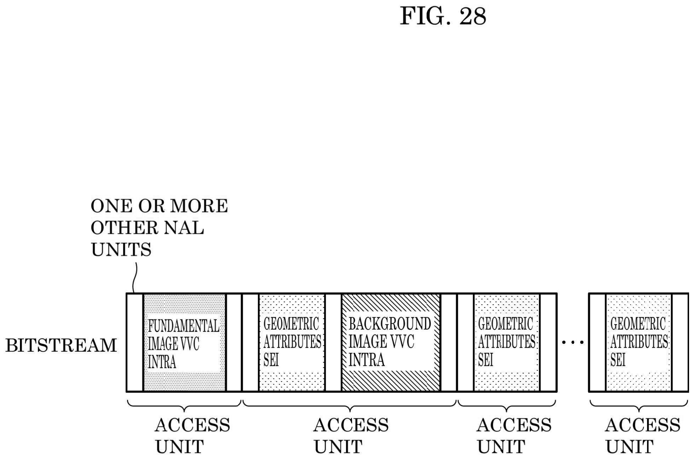

   FIG. 28 is a conceptual diagram illustrating another configuration example of the bitstream compliant to VVC.
[FIG. 29]

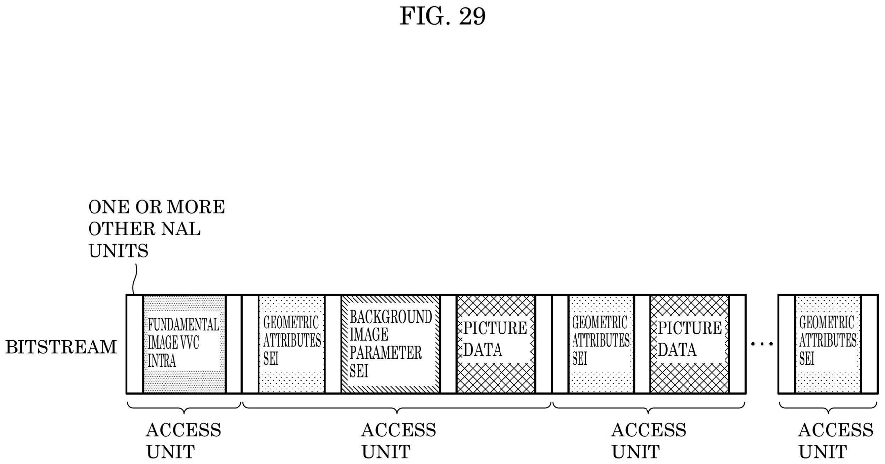

   FIG. 29 is a conceptual diagram illustrating yet another configuration example of the bitstream compliant to VVC.
[FIG. 30]

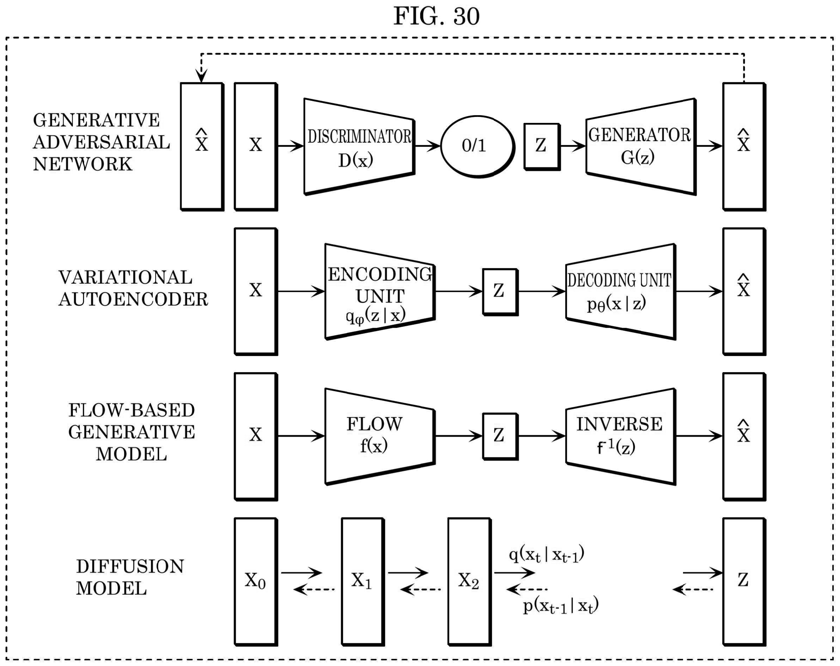

   FIG. 30 is a diagram illustrating an example of different neural networks applicable as a generative model.
[FIG. 31]

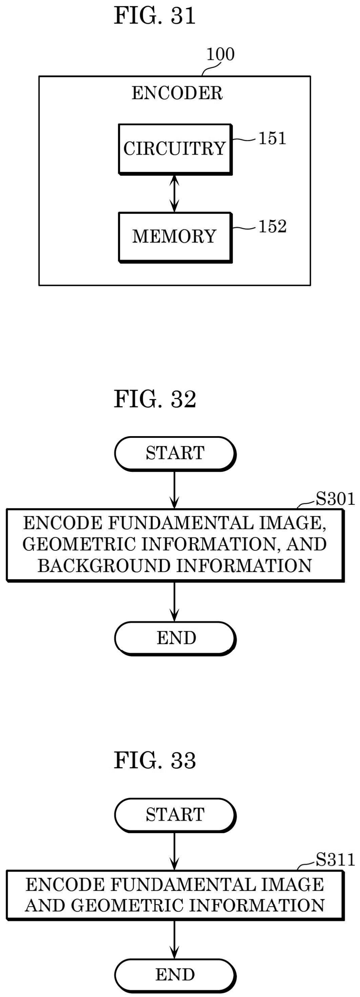

   FIG. 31 is a block diagram illustrating an implementation example of the encoder according to the embodiment.
[FIG. 32]
   FIG. 32 is a flow chart illustrating a first basic operation example performed by the encoder according to the embodiment.
[FIG. 33]
   FIG. 33 is a flow chart illustrating a second basic operation example performed by the encoder according to the embodiment.
[FIG. 34]

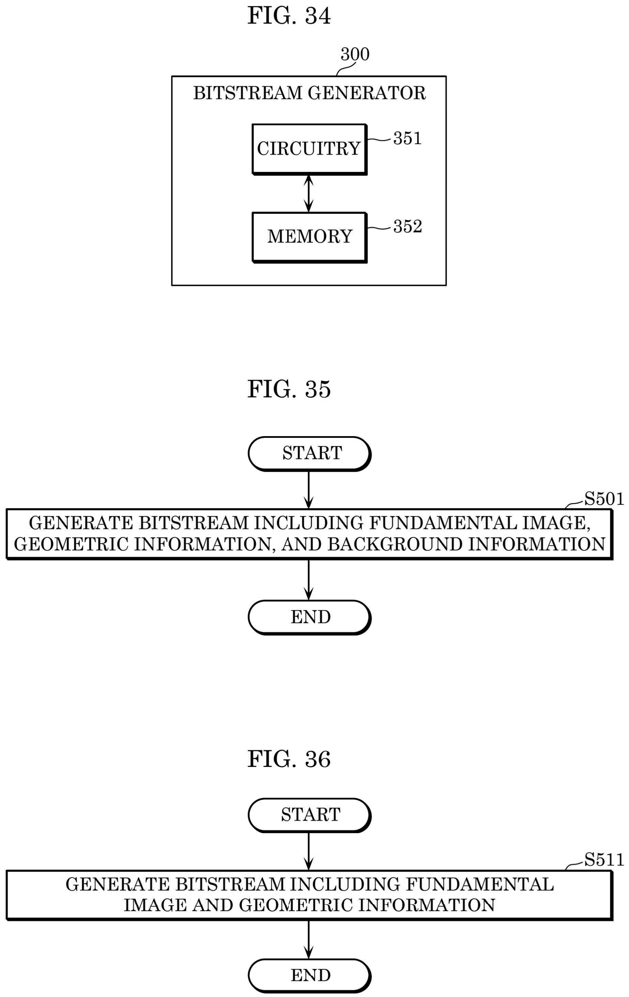

   FIG. 34 is a block diagram illustrating an implementation example of a bitstream generator according to the embodiment.
[FIG. 35]
   FIG. 35 is a flow chart illustrating a first basic operation example performed by the bitstream generator according to the embodiment.
[FIG. 36]
   FIG. 36 is a flow chart illustrating a second basic operation example performed by the bitstream generator according to the embodiment.
[FIG. 37]

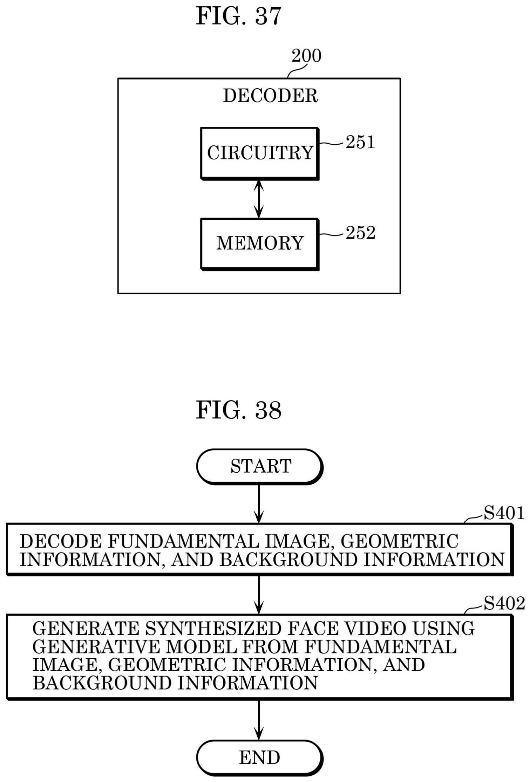

   FIG. 37 is a block diagram illustrating an implementation example of the decoder according to the embodiment.
[FIG. 38]
   FIG. 38 is a flow chart illustrating a first basic operation example performed by the decoder according to the embodiment.
[FIG. 39]

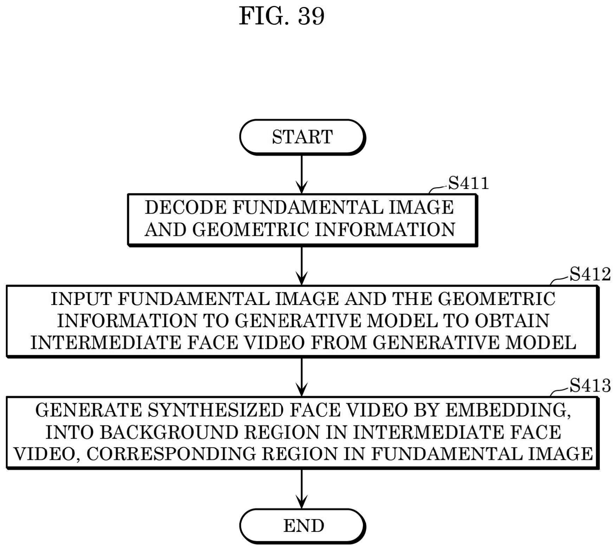

   FIG. 39 is a flow chart illustrating a second basic operation example performed by the decoder according to the embodiment.
[FIG. 40]

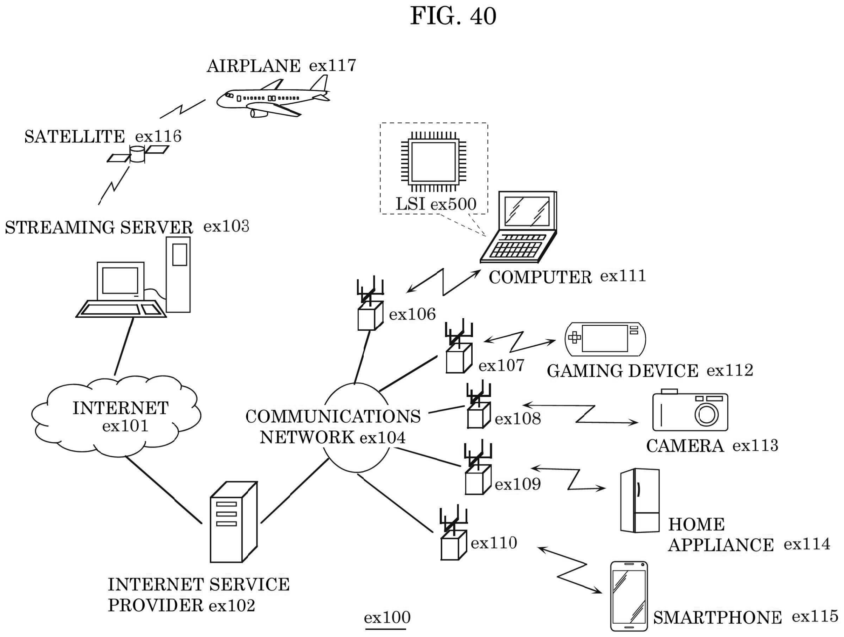

   FIG. 40 is a diagram illustrating an overall configuration of a content providing system for implementing a content distribution service.
[FIG. 41]

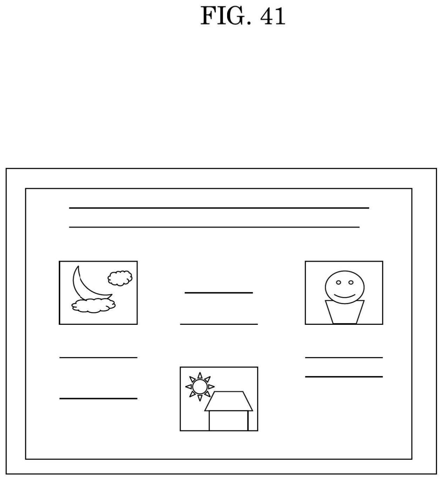

   FIG. 41 is a diagram illustrating an example of a display screen of a web page.
[FIG. 42]

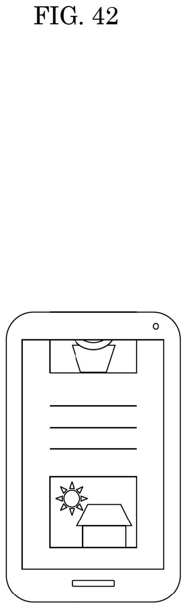

   FIG. 42 is a diagram illustrating an example of a display screen of a web page.
[FIG. 43]

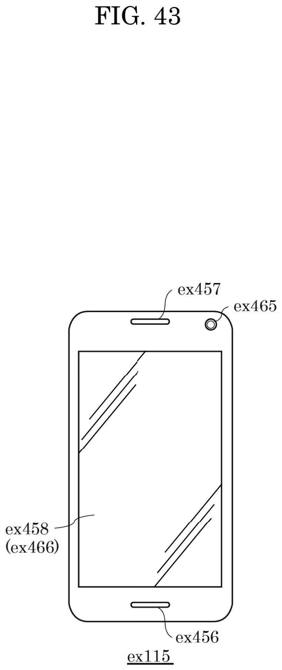

   FIG. 43 is a diagram illustrating one example of a smartphone.
[FIG. 44]

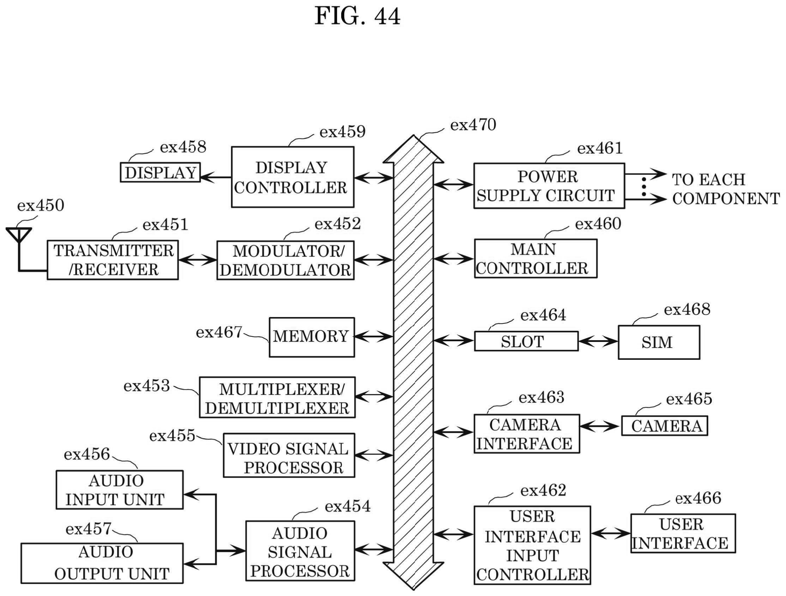

   FIG. 44 is a block diagram illustrating an example of a configuration of a smartphone.

### [Description of Embodiments]

### [Introduction]

Facial re-enactment is the process of mapping the expressions and pose of a person to a face image, while ensuring that the identity of the person is being preserved. Currently, facial re-enactment techniques are being used in a wide variety of applications that include video conferencing, the entertainment industry, and social media. This disclosure can be used in data coding regarding facial re-enactment.

FIG. 1 is a block diagram illustrating the configuration of an encoding and decoding system according to a reference example. For example, the encoding and decoding system includes encoder 700 and decoder 800. First, encoder 700 receives a fundamental image and a driving video, and generates a bitstream. Subsequently, encoder 700 transmits the bitstream to decoder 800 through a transmission channel. Finally, decoder 800 reconstructs the face video from the received bitstream.

For example, the fundamental image is an image including a face, and can be also referred to as a face image or an identity image. The fundamental image represents static and visual characteristics for reconstructing the face video. The driving video is a video including a face, and a captured video by a camera. The driving video plays a role of giving motion to the fundamental image.

FIG. 2 is a block diagram illustrating the configuration of encoder 700 according to the reference example. In this example, encoder 700 includes compressor 731, deriver 732, and compressor 733.

Compressor 731 encodes at least one fundamental image using video compression techniques. The fundamental image may be a frame of the driving video, a pre-obtained image containing the face of a person, or an avatar.

Deriver 732 derives geometric information indicating geometric attributes and corresponding to each frame of the driving video. The geometric information indicating the geometric attributes is also referred to just as geometric attributes. Here, for example, the geometric attributes correspond to dynamic attributes, and may be represented by a group of points such as facial landmarks, or may be represented by a polygon model for representing the shape of an object using a combination of polygons. Moreover, the geometric attributes may be represented by another geometric model. Moreover, the geometric attributes may be represented by the locations of parts of the face.

Compressor 733 compresses the geometric attributes into a bitstream using methods such as entropy encoding. Compressor 731 and compressor 733 may be the same component, or may be different components.

Finally, the bitstream is transmitted to decoder 800 via a transmission channel. For example, the compressed geometric attributes are transmitted from encoder 700 to decoder 800 for each of frames of the driving video, i.e., at every time instance.

FIG. 3 is a block diagram illustrating the configuration of decoder 800 according to the reference example. In this example, decoder 800 includes decompressor 831, deriver 832, decompressor 833, and generator 834.

Decompressor 831 decodes and reconstructs at least one fundamental image from a bitstream. Thereafter, decompressor 831 feeds the fundamental image to deriver 832. Deriver 832 derives fundamental attributes from a fundamental image. Here, the fundamental attributes are static and visual attributes, and can be also referred to as identity. Decompressor 833 decodes and reconstructs the geometric attributes for each of the frames.

Generator 834 generates a face video from the fundamental attributes and the geometric attributes using a neural network. Instead of or in addition to the fundamental attributes, generator 834 may render the face video using the fundamental image per se.

FIG. 4 is a conceptual diagram illustrating an example of a fundamental image. As illustrated in this example, the fundamental image is an image including a face.

FIG. 5 is a conceptual diagram illustrating an example of geometric attributes. In this example, the geometric attributes refer to facial landmarks. For example, the geometric attributes are derived for each of frames of the captured video.

FIG. 6 is a conceptual diagram illustrating an example of a face video. As illustrated in this example, the face video is a video including a face. In the face video, for each of the frames, the geometric attributes of the frame are reflected in the fundamental image. With this, motion is given to the fundamental image.

The information amount of the fundamental image and sets of geometric attributes corresponding to frames is less than the information amount of frames included in the captured video. Accordingly, code amount is more reduced by encoding the fundamental image and sets of geometric attributes corresponding to frames than by encoding frames included in the captured video. Moreover, motion is given to the fundamental image by each set of geometric attributes. With this, motion is given to the face to be displayed, thereby allowing rich expression.

However, a background region included in the fundamental image may be distorted by giving motion to the face included in the fundamental image. For example, the background may be scaled up and down or partially missing since the face is shifted from the position in FIG. 4 to the position in FIG. 6. This may deteriorate the image quality.

In view of this, a decoder of Example 1 is a decoder including memory and circuitry coupled to the memory, in which, in operation, the circuitry: decodes, from one or more streams, (i) a fundamental image that is an image including a face, (ii) geometric information indicating geometric attributes of a subject and corresponding to each of frames of a captured video by a camera, and (iii) background information regarding a background image; and generates a synthesized face video using a generative model from the fundamental image, the geometric information, and the background information, the synthesized face video being a video including the face and synthesized with the background image.

With this, it may be possible to apply the fundamental image, the geometric attributes, and the background image in generating the synthesized face video. Accordingly, it may be possible to reduce the background distortion in the fundamental image using the background image while giving motion to the face in the fundamental image using the geometric attributes corresponding to each frame. Accordingly, it may be possible to reduce the degradation of the image quality in generating the synthesized face video.

Moreover, a decoder of Example 2 may be the decoder of Example 1, in which the circuitry inputs the fundamental image, the geometric information, and the background image to the generative model to obtain the synthesized face video from the generative model.

With this, it may be possible to easily obtain the synthesized face video from the generative model. Then, in the generative model, it may be possible to apply the fundamental image, the geometric attributes, and the background image in generating the synthesized face video. Accordingly, it may be possible to reduce the background distortion in the fundamental image using the background image while giving motion to the face in the fundamental image using the geometric attributes corresponding to each frame.

Moreover, a decoder of Example 3 may be the decoder of Example 1, in which the circuitry: inputs the fundamental image and the geometric information to the generative model to obtain an intermediate face video from the generative model, the intermediate face video being a video including the face and not yet synthesized with the background image; and generates the synthesized face video by embedding, into a background region in the intermediate face video, a corresponding region in the background image.

With this, it may be possible to obtain, from the generative model, the intermediate face video in which motion is given to the face in the fundamental image using the geometric attributes corresponding to each frame. It may be possible to apply the background image to the intermediate face video. Accordingly, it may be possible to reduce the background distortion in the fundamental image using the background image while giving motion to the face in the fundamental image using the geometric attributes corresponding to each frame.

Moreover, a decoder of Example 4 may be the decoder of Example 3, in which the circuitry: performs a segmentation process on the intermediate face video to obtain intermediate-face-video segmentation information indicating a foreground region and the background region in the intermediate face video; and identifies the background region in the intermediate face video using the intermediate-face-video segmentation information.

With this, it may be possible to appropriately identify the background region in the intermediate face video according to the intermediate-face-video segmentation information obtained as the result of the segmentation process for the intermediate face video. Accordingly, it may be possible to appropriately apply, to the background region in the intermediate face video, the corresponding region in the background image.

Moreover, a decoder of Example 5 may be the decoder of Example 3, in which the circuitry: decodes, from the one or more streams, captured-video segmentation information indicating a foreground region and a background region in the captured video; and identifies the background region in the intermediate face video using the captured-video segmentation information.

With this, it may be possible to appropriately identify the background region in the intermediate face video according to the captured-video segmentation information obtained from the one or more streams. Accordingly, it may be possible to appropriately apply, to the background region in the intermediate face video, the corresponding region in the background image.

Moreover, a decoder of Example 6 may be the decoder of Example 3, in which a specified background color code is embedded in a background region in the fundamental image.

With this, it may be possible to efficiently identify the background region in the fundamental image according to the specified background color code. Moreover, it may be possible to reduce the distortion to be generated in the background in the fundamental image even when motion is given to the face in the fundamental image.

Moreover, a decoder of Example 7 may be the decoder of Example 6, in which the circuitry identifies, as the background region in the intermediate face video, a region having the specified background color code in the intermediate face video.

With this, it may be possible to efficiently identify the background region in the intermediate face video according to the specified background color code. Specifically, it is assumed that the specified background color code is embedded in the background region in the intermediate face video obtained by giving motion to the face in the fundamental image including the background region into which the specified background color code has been embedded. Accordingly, it may be possible to efficiently identify the background region in the intermediate face video according to the specified background color code.

Moreover, a decoder of Example 8 may be the decoder of Example 6 or 7, in which the circuitry decodes, from the one or more streams, background color-code information indicating the specified background color code.

With this, it may be possible to efficiently identify the background region in the fundamental image according to the specified background color code obtained from the one or more streams. Then, it may be possible to change the specified background color code according to the fundamental image.

Moreover, a decoder of Example 9 may be the decoder of Example 8, in which the background color-code information indicates, as the specified background color code, a range including continuous values, and the specified background color code is specified within the range indicated by the background color-code information.

With this, it may be possible to flexibly specify the specified background color code. It may be possible to flexibly apply the specified background color code to the background region.

Moreover, a decoder of Example 10 may be the decoder of any one of Examples 6 to 9, in which the specified background color code is specified to be a color code whose occurrence frequency is less than or equal to a threshold in the foreground region in the fundamental image.

With this, it may be possible to reduce misidentification of the foreground-region portion as the background-region portion. Accordingly, it may be possible to appropriately identify the background region.

Moreover, a decoder of Example 11 may be the decoder of Example 3, in which the circuitry: decodes, from the one or more streams, fundamental-image segmentation information indicating a foreground region and a background region in the fundamental image; and embeds a specified background color code into the background region in the fundamental image using the fundamental-image segmentation information.

With this, it may be possible to efficiently identify the background region in the fundamental image according to the fundamental-image segmentation information obtained from the one or more streams. Moreover, the specified background color code is embedded into the background region in the fundamental image, and thus it may be possible to reduce the distortion to be generated in the background in the fundamental image even when motion is given to the face in the fundamental image.

Moreover, a decoder of Example 12 may be the decoder of any one of Examples 1 to 11, in which the background image is an image prepared regardless of the fundamental image and the captured video.

With this, it may be possible to apply, to the synthesized face video, the background image prepared separately from the fundamental image and the captured video. Accordingly, it may be possible to reduce the effect from the foreground region in the background image, or the like.

Moreover, a decoder of Example 13 may be the decoder of any one of Examples 1 to 11, in which the circuitry: decodes an identifier of the background image as the background information; and selects the background image from among background image candidates using the identifier.

With this, it may be possible to flexibly select the background image from among background image candidates. Accordingly, it may be possible to apply an appropriate background image to the synthesized face video according to the intended use of the synthesized face video.

Moreover, a decoder of Example 14 may be the decoder of any one of Examples 1 to 11, in which the background image is an image included in the captured video, or a synthesized image of images included in the captured video.

With this, it may be possible to apply, to the synthesized face video, the background image obtained from the captured video. Accordingly, it may be possible to apply, to the synthesized face video, the background image corresponding to a capturing state.

Moreover, a decoder of Example 15 may be the decoder of any one of Examples 1 to 11, in which the circuitry decodes the fundamental image as the background information, and the fundamental image is applied to the background image.

With this, it may be possible to use the fundamental image as the background image. It may be possible to reduce the background distortion in the fundamental image by using the original fundamental image as the background image while giving motion to the face in the fundamental image using the geometric attributes corresponding to each frame.

Moreover, a decoder of Example 16 may be the decoder of Example 14 or 15, in which when the background image includes a foreground region, the circuitry interpolates a missing portion of a background region in the background image using a region surrounding the foreground region in the background image or using a background region in a previous synthesized face video.

With this, even when the background image includes the foreground region, it may be possible to appropriately interpolate the missing portion of the background region. Accordingly, it may be possible to reduce a missing portion of the background region in the synthesized face video.

Moreover, a decoder of Example 17 may be the decoder of Example 16, in which the circuitry: performs a segmentation process on the background image to obtain background-image segmentation information indicating the foreground region and the background region in the background image; and identifies the foreground region and the background region in the background image using the background-image segmentation information.

With this, it may be possible to appropriately identify the foreground region and the background region in the background image according to the background-image segmentation information obtained as the result of the segmentation process for the background image. Accordingly, it may be possible to appropriately interpolate a missing portion of the background region in the background image.

Moreover, a decoder of Example 18 may be the decoder of Example 16, in which a specified foreground color code is embedded in the foreground region in the background image.

With this, it may be possible to efficiently identify the foreground region in the background image according to the specified foreground color code. Moreover, it may be possible to reduce the reflection of the foreground such as a face on the background region in the synthesized face video.

Moreover, a decoder of Example 19 may be the decoder of Example 18, in which the circuitry: decodes, from the one or more streams, foreground color-code information indicating the specified foreground color code; and identifies, as the foreground region in the background image, a region having the specified foreground color code in the background image.

With this, it may be possible to efficiently identify the foreground region in the background image according to the specified foreground color code obtained from the one or more streams. Then, it may be possible to change the specified foreground color code according to the background image.

Moreover, a decoder of Example 20 may be the decoder of Example 19, in which the foreground color-code information indicates, as the specified foreground color code, a range including continuous values, and the specified foreground color code is specified within the range indicated by the foreground color-code information.

With this, it may be possible to flexibly specify the specified foreground color code. It may be possible to flexibly apply the specified foreground color code to the foreground region.

Moreover, a decoder of Example 21 may be the decoder of any one of Examples 18 to 20, in which the specified foreground color code is specified to be a color code whose occurrence frequency is less than or equal to a threshold in the background region in the background image.

With this, it may be possible to reduce misidentification of the background-region portion as the foreground-region portion. Accordingly, it may be possible to appropriately identify the foreground region.

Moreover, a decoder of Example 22 may be the decoder of any one of Examples 1 to 21, in which, in the one or more streams, a stream from which the background information is decoded is the same as either a stream from which the fundamental image is decoded or a stream from which the geometric information is decoded.

With this, it may be possible to decode the background information from the same stream as the fundamental image or the geometric information instead of a different stream. Accordingly, it may be possible to efficiently decode the background information together with the fundamental image or the geometric information.

Moreover, a decoder of Example 23 may be the decoder of any one of Examples 1 to 14, in which, in the one or more streams, a stream from which the background information is decoded is different from both a stream from which the fundamental image is decoded and a stream from which the geometric information is decoded.

With this, it may be possible to decode the background information from a different stream from the fundamental image and the geometric information instead of the same stream. Accordingly, it may be possible to decode the background information at any time separately from the fundamental image or the geometric information.

Moreover, a decoder of Example 24 may be the decoder of any one of Examples 1 to 22, in which the background image is decoded as a top picture in a sequence including pictures, or as a top picture in the group of pictures (GOP).

With this, it may be possible to obtain the background image earlier. Accordingly, it may be possible to apply the background image to the synthesized face video earlier.

Moreover, a decoder of Example 25 may be the decoder of any one of Examples 1 to 14, in which the background image is decoded as a picture from an access unit in the one or more streams.

With this, it may be possible to process the background image as a picture in the access unit. In other words, it may be possible to process the background image in the same manner as a normal picture.

Moreover, a decoder of Example 26 may be the decoder of Example 25, in which the access unit from which the background image is decoded is the same as the access unit from which the fundamental image is decoded.

With this, it may be possible to decode the background image from the same access unit as the fundamental image instead of a different access unit. Accordingly, it may be possible to efficiently decode the background information together with the fundamental image.

Moreover, a decoder of Example 27 may be the decoder of Example 25, in which the access unit from which the background image is decoded is different from the access unit from which the fundamental image is decoded.

With this, it may be possible to decode the background image from a different access unit from the fundamental image instead of the same access unit. Accordingly, it may be possible to decode the background image at any time separately from the fundamental image.

Moreover, a decoder of Example 28 may be the decoder of any one of Examples 25 to 27, in which a signal indicating that the background image is present in the access unit is decoded from supplemental enhancement information (SEI) associated with the access unit including the background image.

With this, it may be possible to recognize the presence of the background image in the access unit according to the signal obtained from SEI in the access unit. Accordingly, it may be possible to appropriately communicate the background image.

Moreover, a decoder of Example 29 may be the decoder of any one of Examples 1 to 14 and 25 to 28, in which the background image is decoded as a picture from an access unit in the one or more streams, and a signal indicating that the background image is present in the access unit is decoded from supplemental enhancement information (SEI) associated with the access unit including the background image.

With this, it may be possible to process the background image as a picture in the access unit. In other words, it may be possible to process the background image in the same manner as a normal picture. With this, it may be possible to recognize the presence of the background image in the access unit according to the signal obtained from SEI in the access unit. Accordingly, it may be possible to appropriately communicate the background image.

Moreover, a decoder of Example 30 may be the decoder of any one of Examples 1 to 29, in which the background image is decoded as the intra picture.

With this, it may be possible to process the background image as the intra picture. In other words, it may be possible to process the background image independently from another picture.

Moreover, a decoder of Example 31 may be the decoder of any one of Examples 1 to 30, in which the background image is applied in common to frames of the synthesized face video.

With this, it may be possible to reduce the total code amount of the synthesized face video. Moreover, it may be possible to reduce the processing amount of decoding the background image.

Moreover, a decoder of Example 32 may be the decoder of Example 8, in which the circuitry decodes the background color-code information from supplemental enhancement information (SEI) in the one or more streams.

With this, it may be possible to efficiently identify the background region in the fundamental image according to the specified background color code obtained from SEI. Then, it may be possible to change the specified background color code according to the fundamental image.

Moreover, a decoder of Example 33 may be the decoder of Example 19, in which the circuitry decodes the foreground color-code information from supplemental enhancement information (SEI) in the one or more streams.

With this, it may be possible to efficiently identify the foreground region in the background image according to the specified foreground color code obtained from SEI. Then, it may be possible to change the specified foreground color code according to the background image.

Moreover, a decoder of Example 34 may be the decoder of any one of Examples 1 to 33, in which the circuitry decodes at least one of: background color-code information indicating a specified background color code; or foreground color-code information indicating a specified foreground color code, from supplemental enhancement information (SEI) in the one or more streams.

With this, it may be possible to efficiently identify the background region according to the specified background color code obtained from SEI.

Moreover, a decoder of Example 35 may be the decoder of Example 5, in which the circuitry decodes the captured-video segmentation information from supplemental enhancement information (SEI) in the one or more streams.

With this, it may be possible to appropriately identify the background region in the intermediate face video according to the captured-video segmentation information obtained from SEI. Accordingly, it may be possible to appropriately apply, to the background region in the intermediate face video, the corresponding region in the background image.

Moreover, a decoder of Example 36 may be the decoder of Example 11, in which the circuitry decodes the fundamental-image segmentation information from supplemental enhancement information (SEI) in the one or more streams.

With this, it may be possible to efficiently identify the background region in the fundamental image according to the fundamental-image segmentation information obtained from SEI. Then, it may be possible to appropriately embed the specified background color code into the background region in the fundamental image.

Moreover, a decoder of Example 37 may be the decoder of any one of Examples 1 to 36, in which the circuitry decodes at least one of: captured-video segmentation information indicating a foreground region and a background region in the captured video; or fundamental-image segmentation information indicating a foreground region and a background region in the fundamental image, from supplemental enhancement information (SEI) in the one or more streams.

With this, it may be possible to efficiently identify the background region according to the segmentation information obtained from SEI.

Moreover, a decoder of Example 38 may be a decoder including memory and circuitry coupled to the memory, in which, in operation, the circuitry: decodes, from one or more streams, (i) a fundamental image that is an image including a face and (ii) geometric information indicating geometric attributes of a subject and corresponding to each of frames of a captured video by a camera; inputs the fundamental image and the geometric information to the generative model to obtain an intermediate face video from the generative model, the intermediate face video being a video including the face; and generates a synthesized face video by embedding, into a background region in the intermediate face video, a corresponding region in the fundamental image.

With this, it may be possible to obtain, from the generative model, the intermediate face video in which motion is given to the face in the fundamental image using the geometric attributes corresponding to each frame. It may be possible to apply, to the background region in the intermediate face video, the corresponding region in the original fundamental image. Accordingly, it may be possible to reduce the background distortion in the fundamental image using the original fundamental image while giving motion to the face in the fundamental image using the geometric attributes corresponding to each frame. Accordingly, it may be possible to reduce the degradation of the image quality in generating the synthesized face video.

Moreover, an encoder of Example 39 is an encoder including memory and circuitry coupled to the memory, in which, in operation, the circuitry: encodes, into one or more streams, (i) a fundamental image that is an image including a face, (ii) geometric information indicating geometric attributes of a subject and corresponding to each of frames of a captured video by a camera, and (iii) background information regarding a background image, (i) the fundamental image, (ii) the geometric information, and (iii) the background information being for generating a synthesized face video that is a video including a face and synthesized with the background image.

With this, it may be possible to provide the fundamental image, the geometric attributes, and the background image for generating the synthesized face video. Accordingly, in generating the synthesized face video, it may be possible to reduce the background distortion in the fundamental image using the background image while giving motion to the face in the fundamental image using the geometric attributes corresponding to each frame. Accordingly, it may be possible to contribute to the reduction in degradation of the image quality.

Moreover, an encoder of Example 40 may be the encoder of Example 39, in which the circuitry: performs a segmentation process on the captured video to obtain captured-video segmentation information indicating a foreground region and a background region in the captured video; and encodes, into the one or more streams, the captured-video segmentation information.

With this, it may be possible to provide the captured-video segmentation information for identifying the foreground region and the background region in the same type of a video as the captured video, via the one or more streams. Accordingly, it may be possible to contribute to identification of the foreground region and the background region in the intermediate face video in which motion is given to the face in the fundamental image using the geometric attributes corresponding to each frame.

Moreover, an encoder of Example 41 may be the encoder of Example 39, in which the circuitry: performs a segmentation process on the fundamental image to obtain fundamental-image segmentation information indicating a foreground region and a background region in the fundamental image; embeds a specified background color code into the background region in the fundamental image using the fundamental-image segmentation information; and encodes the fundamental image in which the specified background color code has been embedded into the background region.

With this, it may be possible to appropriately identify the background region in the fundamental image according to the fundamental-image segmentation information obtained as the result of the segmentation process for the fundamental image. Moreover, the specified background color code is embedded into the background region in the fundamental image, and thus it may be possible to reduce the distortion to be generated in the background in the fundamental image even when motion is given to the face in the fundamental image.

Moreover, an encoder of Example 42 may be the encoder of Example 41, in which the circuitry encodes, into the one or more streams, background color-code information indicating the specified background color code.

With this, it may be possible to provide the specified background color code for efficiently identifying the background region in the fundamental image, via the one or more streams. Then, it may be possible to change the specified background color code according to the fundamental image.

Moreover, an encoder of Example 43 may be the encoder of Example 42, in which the background color-code information indicates, as the specified background color code, a range including continuous values, and the specified background color code is specified within the range indicated by the background color-code information.

With this, it may be possible to flexibly specify the specified background color code. It may be possible to flexibly apply the specified background color code to the background region.

Moreover, an encoder of Example 44 may be the encoder of any one of Examples 41 to 43, in which the specified background color code is specified to be a color code whose occurrence frequency is less than or equal to a threshold in the foreground region in the fundamental image.

With this, it may be possible to reduce misidentification of the foreground-region portion as the background-region portion. Accordingly, it may be possible to appropriately identify the background region.

Moreover, an encoder of Example 45 may be the encoder of Example 39, in which the circuitry: performs a segmentation process on the fundamental image to obtain fundamental-image segmentation information indicating a foreground region and a background region in the fundamental image; and encodes, into the one or more streams, the fundamental-image segmentation information.

With this, it may be possible to provide the fundamental-image segmentation information for identifying the foreground region and the background region in the fundamental image, via the one or more streams. Accordingly, it may be possible to contribute to identification of the background region in the fundamental image.

Moreover, an encoder of Example 46 may be the encoder of any one of Examples 39 to 45, in which the background image is an image prepared regardless of the fundamental image and the captured video.

With this, it may be possible to apply, to the synthesized face video, the background image prepared separately from the fundamental image and the captured video. Accordingly, it may be possible to reduce the effect from the foreground region in the background image, or the like.

Moreover, an encoder of Example 47 may be the encoder of any one of Examples 39 to 45, in which the circuitry: selects the background image from among background image candidates; and encodes an identifier of the background image as the background information.

With this, it may be possible to flexibly select the background image from among background image candidates. Accordingly, it may be possible to apply an appropriate background image to the synthesized face video according to the intended use of the synthesized face video.

Moreover, an encoder of Example 48 may be the encoder of any one of Examples 39 to 45, in which the background image is an image included in the captured video, or a synthesized image of images included in the captured video.

With this, it may be possible to apply, to the synthesized face video, the background image obtained from the captured video. Accordingly, it may be possible to apply, to the synthesized face video, the background image corresponding to a capturing state.

Moreover, an encoder of Example 49 may be the encoder of any one of Examples 39 to 45, in which the circuitry encodes the fundamental image as the background information, and the fundamental image is applied to the background image.

With this, it may be possible to use the fundamental image as the background image. It may be possible to reduce the background distortion in the fundamental image by using the original fundamental image as the background image while giving motion to the face in the fundamental image using the geometric attributes corresponding to each frame.

Moreover, an encoder of Example 50 may be the encoder of Example 48, in which when the background image includes a foreground region, the circuitry interpolates a missing portion of a background region in the background image using a region surrounding the foreground region in the background image or using a background region in another image included in the captured video.

With this, even when the background image includes the foreground region, it may be possible to appropriately interpolate the missing portion of the background region. Accordingly, it may be possible to reduce a missing portion of the background region in the synthesized face video.

Moreover, an encoder of Example 51 may be the encoder of Example 50, in which the circuitry: performs a segmentation process on the background image to obtain background-image segmentation information indicating the foreground region and the background region in the background image; and identifies the foreground region and the background region in the background image using the background-image segmentation information.

With this, it may be possible to appropriately identify the foreground region and the background region in the background image according to the background-image segmentation information obtained as the result of the segmentation process for the background image. Accordingly, it may be possible to appropriately interpolate a missing portion of the background region in the background image.

Moreover, an encoder of Example 52 may be the encoder of Example 48, in which the circuitry: performs a segmentation process on the background image to obtain background-image segmentation information indicating a foreground region and a background region in the background image; and embeds a specified foreground color code into the foreground region in the background image using the background-image segmentation information.

With this, it may be possible to efficiently identify the foreground region in the background image according to the specified foreground color code. Moreover, it may be possible to reduce the reflection of the foreground such as a face on the background region in the synthesized face video.

Moreover, an encoder of Example 53 may be the encoder of Example 52, in which the circuitry encodes, into the one or more streams, foreground color-code information indicating the specified foreground color code.

With this, it may be possible to provide the specified foreground color code for efficiently identifying the foreground region in the background image, via the one or more streams. Then, it may be possible to change the specified foreground color code according to the background image.

Moreover, an encoder of Example 54 may be the encoder of Example 53, in which the foreground color-code information indicates, as the specified foreground color code, a range including continuous values, and the specified foreground color code is specified within the range indicated by the foreground color-code information.

With this, it may be possible to flexibly specify the specified foreground color code. It may be possible to flexibly apply the specified foreground color code to the foreground region.

Moreover, an encoder of Example 55 may be the encoder of any one of Examples 52 to 54, in which the specified foreground color code is specified to be a color code whose occurrence frequency is less than or equal to a threshold in the background region in the background image.

With this, it may be possible to reduce misidentification of the background-region portion as the foreground-region portion. Accordingly, it may be possible to appropriately identify the foreground region.

Moreover, an encoder of Example 56 may be the encoder of any one of Examples 39 to 55, in which a stream into which the background information is encoded is the same as either a stream into which the fundamental image is encoded or a stream into which the geometric information is encoded.

With this, it may be possible to encode the background information into the same stream as the fundamental image or the geometric information instead of a different stream. Accordingly, it may be possible to efficiently encode the background information together with the fundamental image or the geometric information.

Moreover, an encoder of Example 57 may be the encoder of any one of Examples 39 to 48, in which a stream into which the background information is encoded is different from both a stream into which the fundamental image is encoded and a stream into which the geometric information is encoded.

With this, it may be possible to encode the background information into a different stream from the fundamental image and the geometric information instead of the same stream. Accordingly, it may be possible to encode the background information at any time separately from the fundamental image or the geometric information.

Moreover, an encoder of Example 58 may be the encoder of any one of Examples 39 to 56, in which the background image is encoded as a top picture in a sequence including pictures, or as a top picture in the group of pictures (GOP).

With this, it may be possible to provide the background image earlier. Accordingly, it may be possible to apply the background image to the synthesized face video earlier.

Moreover, an encoder of Example 59 may be the encoder of any one of Examples 39 to 48, in which the background image is encoded as a picture into an access unit in the one or more streams.

With this, it may be possible to process the background image as a picture in the access unit. In other words, it may be possible to process the background image in the same manner as a normal picture.

Moreover, an encoder of Example 60 may be the encoder of Example 59, in which the access unit into which the background image is encoded is the same as the access unit into which the fundamental image is encoded.

With this, it may be possible to encode the background image into the same access unit as the fundamental image instead of a different access unit. Accordingly, it may be possible to efficiently encode the background information together with the fundamental image.

Moreover, an encoder of Example 61 may be the encoder of Example 59, in which the access unit into which the background image is encoded is different from the access unit into which the fundamental image is encoded.

With this, it may be possible to encode the background image into an access unit different from that for the fundamental image instead of the same access unit. Accordingly, it may be possible to encode the background image at any time separately from the fundamental image.

Moreover, an encoder of Example 62 may be the encoder of any one of Examples 59 to 61, in which a signal indicating that the background image is present in the access unit is encoded into supplemental enhancement information (SEI) associated with the access unit into which the background image is encoded.

With this, it may be possible to notice the presence of the background image in the access unit using the signal of SEI in the access unit. Accordingly, it may be possible to appropriately communicate the background image.

Moreover, an encoder of Example 63 may be the encoder of any one of Examples 39 to 48 and 59 to 62, in which the background image is encoded as a picture into an access unit in the one or more streams, and a signal indicating that the background image is present in the access unit is encoded into supplemental enhancement information (SEI) associated with the access unit into which the background image is encoded.

With this, it may be possible to process the background image as a picture in the access unit. In other words, it may be possible to process the background image in the same manner as a normal picture. With this, it may be possible to notice the presence of the background image in the access unit using the signal of SEI in the access unit. Accordingly, it may be possible to appropriately communicate the background image.

Moreover, an encoder of Example 64 may be the encoder of any one of Examples 39 to 63, in which the background image is encoded as the intra picture.

With this, it may be possible to process the background image as the intra picture. In other words, it may be possible to process the background image independently from another picture.

Moreover, an encoder of Example 65 may be the encoder of Example 42, in which the circuitry encodes the background color-code information into supplemental enhancement information (SEI) in the one or more streams.

With this, it may be possible to provide the specified background color code for efficiently identifying the background region in the fundamental image via the SEI. Then, it may be possible to change the specified background color code according to the fundamental image.

Moreover, an encoder of Example 66 may be the encoder of Example 53, in which the circuitry encodes the foreground color-code information into supplemental enhancement information (SEI) in the one or more streams.

With this, it may be possible to provide the specified foreground color code for efficiently identifying the foreground region in the background image via the SEI. Then, it may be possible to change the specified foreground color code according to the background image.

Moreover, an encoder of Example 67 may be the encoder of any one of Examples 39 to 66, in which the circuitry encodes at least one of: background color-code information indicating a specified background color code; or foreground color-code information indicating a specified foreground color code, into supplemental enhancement information (SEI) in the one or more streams.

With this, it may be possible to provide the specified foreground color code for efficiently identifying the foreground region via the SEI.

Moreover, an encoder of Example 68 may be the encoder of Example 40, in which the circuitry encodes the captured-video segmentation information into supplemental enhancement information (SEI) in the one or more streams.

With this, it may be possible to provide the captured-video segmentation information for identifying the foreground region and the background region in the same type of a video as the captured video via the SEI. Accordingly, it may be possible to contribute to identification of the foreground region and the background region in the intermediate face video in which motion is given to the face in the fundamental image using the geometric attributes corresponding to each frame.

Moreover, an encoder of Example 69 may be the encoder of Example 45, in which the circuitry encodes the fundamental-image segmentation information into supplemental enhancement information (SEI) in the one or more streams.

With this, it may be possible to provide the fundamental-image segmentation information for identifying the foreground region and the background region in the fundamental image via the SEI. Accordingly, it may be possible to contribute to identification of the background region in the fundamental image.

Moreover, an encoder of Example 70 may be the encoder of any one of Examples 39 to 69, in which the circuitry encodes at least one of: captured-video segmentation information indicating a foreground region and a background region in the captured video; or fundamental-image segmentation information indicating a foreground region and a background region in the fundamental image, into supplemental enhancement information (SEI) in the one or more streams.

With this, it may be possible to provide the segmentation information for identifying the foreground region and the background region via the SEI.

Moreover, an encoder of Example 71 is an encoder including memory and circuitry coupled to the memory, in which, in operation, the circuitry encodes, into one or more streams, (i) a fundamental image that is an image including a face and (ii) geometric information indicating geometric attributes of a subject and corresponding to each of frames of a captured video by a camera, (i) the fundamental image and (ii) the geometric information being for generating a synthesized face video, and in generating the synthesized face video, the fundamental image and the geometric information are used to obtain an intermediate face video from a generative model by inputting the fundamental image and the geometric information to the generative model, and the fundamental image is further used to generate the synthesized face video by embedding, into a background region in the intermediate face video, a corresponding region in the fundamental image, the intermediate face video being a video including the face..

With this, it may be possible to provide the fundamental image and the geometric attributes for generating the synthesized face video. In generating the synthesized face video, it may be possible to reduce the background distortion in the fundamental image using the original fundamental image while giving motion to the face in the fundamental image using the geometric attributes corresponding to each frame. Accordingly, it may be possible to contribute to the reduction in degradation of the image quality.

Moreover, a bitstream generator of Example 72 is a bitstream generator including memory and circuitry coupled to the memory, in which, in operation, the circuitry generates a bitstream including: (i) a fundamental image that is an image including a face; (ii) geometric information indicating geometric attributes of a subject and corresponding to each of frames of a captured video by a camera; and (iii) background information regarding a background image, (i) the fundamental image, (ii) the geometric information, and (iii) the background information being for generating a synthesized face video that is a video including a face and synthesized with the background image.

With this, it may be possible to provide the fundamental image, the geometric attributes, and the background image for generating the synthesized face video. Accordingly, in generating the synthesized face video, it may be possible to reduce the background distortion in the fundamental image using the background image while giving motion to the face in the fundamental image using the geometric attributes corresponding to each frame. Accordingly, it may be possible to contribute to the reduction in degradation of the image quality.

Moreover, a decoding method of Example 73 is a decoding method including: decoding, from one or more streams, (i) a fundamental image that is an image including a face, (ii) geometric information indicating geometric attributes of a subject and corresponding to each of frames of a captured video by a camera, and (iii) background information regarding a background image; and generating a synthesized face video using a generative model from the fundamental image, the geometric information, and the background information, the synthesized face video being a video including the face and synthesized with the background image.

With this, it may be possible to apply the fundamental image, the geometric attributes, and the background image in generating the synthesized face video. Accordingly, it may be possible to reduce the background distortion in the fundamental image using the background image while giving motion to the face in the fundamental image using the geometric attributes corresponding to each frame. Accordingly, it may be possible to reduce the degradation of the image quality in generating the synthesized face video.

Moreover, an encoding method of Example 74 is an encoding method including encoding, into one or more streams, (i) a fundamental image that is an image including a face, (ii) geometric information indicating geometric attributes of a subject and corresponding to each of frames of a captured video by a camera, and (iii) background information regarding a background image, (i) the fundamental image, (ii) the geometric information, and (iii) the background information being for generating a synthesized face video that is a video including a face and synthesized with the background image.

With this, it may be possible to provide the fundamental image, the geometric attributes, and the background image for generating the synthesized face video. Accordingly, in generating the synthesized face video, it may be possible to reduce the background distortion in the fundamental image using the background image while giving motion to the face in the fundamental image using the geometric attributes corresponding to each frame. Accordingly, it may be possible to contribute to the reduction in degradation of the image quality.

Furthermore, these general or specific aspects may be implemented using a system, an apparatus, a method, an integrated circuit, a computer program, or a non-transitory computer readable medium such as a CD-ROM, or any combination of systems, apparatuses, methods, integrated circuits, computer programs, or media.

### [Definitions of Terms]

The respective terms may be defined as indicated below as examples.

### (1) image

An image is a data unit configured with a set of pixels, is a picture or includes blocks smaller than a picture. Images include a still image in addition to a video.

### (2) picture

A picture is an image processing unit configured with a set of pixels, and is also referred to as a frame or a field.

### (3) block

A block is a processing unit which is a set of a particular number of pixels. The block is also referred to as indicated in the following examples. The shapes of blocks are not limited. Examples include a rectangle shape of M×N pixels and a square shape of M×M pixels for the first place, and also include a triangular shape, a circular shape, and other shapes.

### (examples of blocks)

- slice/tile/brick
- CTU / super block / basic splitting unit
- VPDU / processing splitting unit for hardware
- CU / processing block unit / prediction block unit (PU) / orthogonal transform block unit (TU) / unit
- sub-block

### (4) pixel/sample

A pixel or sample is a smallest point of an image. Pixels or samples include not only a pixel at an integer position but also a pixel at a sub-pixel position generated based on a pixel at an integer position.

### (5) pixel value / sample value

A pixel value or sample value is an eigen value of a pixel. Pixel or sample values naturally include a luma value, a chroma value, an RGB gradation level and also covers a depth value, or a binary value of 0 or 1.

### (6) flag

A flag indicates one or more bits, and may be, for example, a parameter or index represented by two or more bits. Alternatively, the flag may indicate not only a binary value represented by a binary number but also a multiple value represented by a number other than the binary number.

### (7) signal

A signal is the one symbolized or encoded to convey information. Signals include a discrete digital signal and an analog signal which takes a continuous value.

### (8) stream/bitstream

A stream or bitstream is a digital data string or a digital data flow. A stream or bitstream may be one stream or may be configured with a plurality of streams having a plurality of hierarchical layers. A stream or bitstream may be transmitted in serial communication using a single transmission path, or may be transmitted in packet communication using a plurality of transmission paths.

### (9) difference

In the case of scalar quantity, it is only necessary that a simple difference (x - y) and a difference calculation be included. Differences include an absolute value of a difference (|x - y|), a squared difference (x^2 - y^2), a square root of a difference (√(x - y)), a weighted difference (ax - by: a and b are constants), an offset difference (x - y + a: a is an offset).

### (10) sum

In the case of scalar quantity, it is only necessary that a simple sum (x + y) and a sum calculation be included. Sums include an absolute value of a sum (|x + y|), a squared sum (x^2 + y^2), a square root of a sum (√(x + y)), a weighted difference (ax + by: a and b are constants), an offset sum (x + y + a: a is an offset).

### (11) based on

A phrase "based on something" means that a thing other than the something may be considered. In addition, "based on" may be used in a case in which a direct result is obtained or a case in which a result is obtained through an intermediate result.

### (12) used, using

A phrase "something used" or "using something" means that a thing other than the something may be considered. In addition, "used" or "using" may be used in a case in which a direct result is obtained or a case in which a result is obtained through an intermediate result.

### (13) prohibit, forbid

The term "prohibit" or "forbid" can be rephrased as "does not permit" or "does not allow". In addition, "being not prohibited/forbidden" or "being permitted/allowed" does not always mean "obligation".

### (14) limit, restriction/restrict/restricted

The term "limit" or "restriction/restrict/restricted" can be rephrased as "does not permit/allow" or "being not permitted/allowed". In addition, "being not prohibited/forbidden" or "being permitted/allowed" does not always mean "obligation". Furthermore, it is only necessary that part of something be prohibited/forbidden quantitatively or qualitatively, and something may be fully prohibited/forbidden.

### (15) chroma

An adjective, represented by the symbols Cb and Cr, specifying that a sample array or single sample is representing one of the two color difference signals related to the primary colors. The term chroma may be used instead of the term chrominance.

### (16) luma

An adjective, represented by the symbol or subscript Y or L, specifying that a sample array or single sample is representing the monochrome signal related to the primary colors. The term luma may be used instead of the term luminance.

### [Notes Related to the Descriptions]

In the drawings, same reference numbers indicate same or similar components. The sizes and relative locations of components are not necessarily drawn by the same scale.

Hereinafter, embodiments will be described with reference to the drawings. Note that the embodiments described below each show a general or specific example. The numerical values, shapes, materials, components, the arrangement and connection of the components, steps, the relation and order of the steps, etc., indicated in the following embodiments are mere examples, and are not intended to limit the scope of the claims.

Embodiments of an encoder and a decoder will be described below. The embodiments are examples of an encoder and a decoder to which the processes and/or configurations presented in the description of aspects of the present disclosure are applicable. The processes and/or configurations can also be implemented in an encoder and a decoder different from those according to the embodiments. For example, regarding the processes and/or configurations as applied to the embodiments, any of the following may be implemented:

(1) Any of the components of the encoder or the decoder according to the embodiments presented in the description of aspects of the present disclosure may be substituted or combined with another component presented anywhere in the description of aspects of the present disclosure.
(2) In the encoder or the decoder according to the embodiments, discretionary changes may be made to functions or processes performed by one or more components of the encoder or the decoder, such as addition, substitution, removal, etc., of the functions or processes. For example, any function or process may be substituted or combined with another function or process presented anywhere in the description of aspects of the present disclosure.
(3) In methods implemented by the encoder or the decoder according to the embodiments, discretionary changes may be made such as addition, substitution, and removal of one or more of the processes included in the method. For example, any process in the method may be substituted or combined with another process presented anywhere in the description of aspects of the present disclosure.
(4) One or more components included in the encoder or the decoder according to embodiments may be combined with a component presented anywhere in the description of aspects of the present disclosure, may be combined with a component including one or more functions presented anywhere in the description of aspects of the present disclosure, and may be combined with a component that implements one or more processes implemented by a component presented in the description of aspects of the present disclosure.
(5) A component including one or more functions of the encoder or the decoder according to the embodiments, or a component that implements one or more processes of the encoder or the decoder according to the embodiments, may be combined or substituted with a component presented anywhere in the description of aspects of the present disclosure, with a component including one or more functions presented anywhere in the description of aspects of the present disclosure, or with a component that implements one or more processes presented anywhere in the description of aspects of the present disclosure.
(6) In methods implemented by the encoder or the decoder according to the embodiments, any of the processes included in the method may be substituted or combined with a process presented anywhere in the description of aspects of the present disclosure or with any corresponding or equivalent process.
(7) One or more processes included in methods implemented by the encoder or the decoder according to the embodiments may be combined with a process presented anywhere in the description of aspects of the present disclosure.
(8) The implementation of the processes and/or configurations presented in the description of aspects of the present disclosure is not limited to the encoder or the decoder according to the embodiments. For example, the processes and/or configurations may be implemented in a device used for a purpose different from the moving picture encoder or the moving picture decoder disclosed in the embodiments.

### [Configuration of Encoding and Decoding System]

FIG. 7 is a block diagram illustrating a configuration example of an encoding and decoding system according to an embodiment. For example, the encoding and decoding system includes encoder 100 and decoder 200. The example of FIG. 7 is similar to the example of FIG. 1, but in FIG. 7, the specific configuration and process of encoder 100, the specific configuration and process of decoder 200, and the bitstream are different from those in the example of FIG. 1.

Encoder 100 receives a fundamental image, a driving video, and a background image, and generates a bitstream. Subsequently, encoder 100 transmits the bitstream to decoder 200 through a transmission channel. Finally, decoder 200 reconstructs a synthesized face video from the bitstream.

For example, the fundamental image is an image including a face, and can be also referred to as a face image or an identity image. The fundamental image represents static and visual characteristics for reconstructing the synthesized face video. The driving video is a video including a face, and a video captured by a camera. The driving video plays a role of giving motion to the fundamental image. The bitstream is also referred to just as a stream. Moreover, the present disclosure is not limited to use of one bitstream. Multiple bitstreams may be used.

The person included in the fundamental image and the person included in the driving video may be the same, or may be different.

It is to be noted that the encoding and decoding system according to the present embodiment is applicable to video conferencing, generation and editing of videos in the entertainment industry, social media, the e-commerce industry, etc. However, the applicable range is not limited to these.

### [Data Structure]

FIG. 8 is a diagram illustrating one example of a hierarchical structure of data in a stream. A stream includes, for example, a video sequence. As illustrated in (a) of FIG. 8, the video sequence includes a video parameter set (VPS), a sequence parameter set (SPS), a picture parameter set (PPS), supplemental enhancement information (SEI), and a plurality of pictures.

In a video having a plurality of layers, a VPS includes: a coding parameter which is common between some of the plurality of layers; and a coding parameter related to some of the plurality of layers included in the video or an individual layer.

An SPS includes a parameter which is used for a sequence, that is, a coding parameter which decoder 200 refers to in order to decode the sequence. For example, the coding parameter may indicate the width or height of a picture. It is to be noted that a plurality of SPSs may be present.

A PPS includes a parameter which is used for a picture, that is, a coding parameter which decoder 200 refers to in order to decode each of the pictures in the sequence. For example, the coding parameter may include a reference value for the quantization width which is used to decode a picture and a flag indicating application of weighted prediction. It is to be noted that a plurality of PPSs may be present. Each of the SPS and the PPS may be simply referred to as a parameter set.

As illustrated in (b) of FIG. 8, a picture may include a picture header and at least one slice. A picture header includes a coding parameter which decoder 200 refers to in order to decode the at least one slice.

As illustrated in (c) of FIG. 8 a slice includes a slice header and at least one brick. A slice header includes a coding parameter which decoder 200 refers to in order to decode the at least one brick.

As illustrated in (d) of FIG. 8, a brick includes at least one coding tree unit (CTU).

It is to be noted that a picture may not include any slice and may include a tile group instead of a slice. In this case, the tile group includes at least one tile. In addition, a brick may include a slice.

A CTU is also referred to as a super block or a basis splitting unit. As illustrated in (e) of FIG. 8, a CTU like this includes a CTU header and at least one coding unit (CU). A CTU header includes a coding parameter which decoder 200 refers to in order to decode the at least one CU.

A CU may be split into a plurality of smaller CUs. As illustrated in (f) of FIG. 8, a CU includes a CU header, prediction information, and residual coefficient information. Prediction information is information for predicting the CU, and the residual coefficient information is information indicating a prediction residual to be described later. Although a CU is basically the same as a prediction unit (PU) and a transform unit (TU), it is to be noted that, for example, an SBT to be described later may include a plurality of TUs smaller than the CU. In addition, the CU may be processed for each virtual pipeline decoding unit (VPDU) included in the CU. The VPDU is, for example, a fixed unit which can be processed at one stage when pipeline processing is performed in hardware.

It is to be noted that a stream may not include part of the hierarchical layers illustrated in FIG. 8. The order of the hierarchical layers may be exchanged, or any of the hierarchical layers may be replaced by another hierarchical layer. Here, a picture which is a target for a process which is about to be performed by a device such as encoder 100 or decoder 200 is referred to as a current picture. A current picture means a current picture to be encoded when the process is an encoding process, and a current picture means a current picture to be decoded when the process is a decoding process. Likewise, for example, a CU or a block of CUs which is a target for a process which is about to be performed by a device such as encoder 100 or decoder 200 is referred to as a current block. A current block means a current block to be encoded when the process is an encoding process, and a current block means a current block to be decoded when the process is a decoding process.

Here, a region where parameters for use in encoding and decoding are described can be referred to as a header. For example, the header is a region including SEI. The header can further include VPS, SPS, PPS, SEI, a picture header, a slice header, a CTU header, and a CU header.

Moreover, for example, a picture can be classified as any of types including I picture, P picture, and B picture. I picture is an intra-predicted picture, and is also referred to as an intra picture. I picture is encoded and decoded without referring to another picture. P picture is a uni-predicted picture, and can be encoded and decoded with reference to one other picture. B picture is a bi-predicted picture, and can be encoded and decoded with reference to two other pictures.

Moreover, a moving picture can include multiple GOPs (groups of pictures). GOP means a group of pictures. GOP includes one or more I pictures. GOP may include one or more P pictures, or one or more B pictures. GOP may be a unit for which video editing, random access, and the like are allowed. GOP may include a certain number of pictures, or may include, as a GOP structure, the determined arrangement order of I pictures, P pictures, and B pictures.

### [Configuration and Process of Encoding]

FIG. 9 is a block diagram illustrating a configuration example of encoder 100 according to the present embodiment. Encoder 100 generates a bitstream from a fundamental image, a driving video, and a background image. In this example, encoder 100 includes compressor 131, deriver 132, compressor 133, and compressor 134. For example, these components are each an electric circuit that performs information processing. Two or more of compressor 131, compressor 133, and compressor 134 may be integrated.

FIG. 10 is a flow chart illustrating an operation example performed by encoder 100 according to the present embodiment. For example, the components of encoder 100 shown in FIG. 9 perform the operation according to the flow chart of FIG. 10.

In this example, first, compressor 131 encodes at least one fundamental image into a bitstream to compress the fundamental image (S101). The fundamental image may be encoded according to a video codec method such as VVC. The fundamental image may be a frame of the driving video, a pre-obtained image containing the face of a person, or an avatar.

Moreover, deriver 132 derives geometric information indicating geometric attributes corresponding to each frame of the driving video (S102). The geometric information is also referred to just as geometric attributes. Specifically, deriver 132 input each frame of the driving video into a recognition model such as a neural network, and obtains the geometric attributes corresponding to each frame from the recognition model. The geometric attributes correspond to a time instance of each frame of the driving video.

Here, for example, the geometric attributes correspond to dynamic attributes, and may be represented by a group of points such as facial landmarks, or may be represented by a polygon model for representing the shape of an object using a combination of polygons. Moreover, the geometric attributes may be represented by another geometric model. Moreover, the geometric attributes may be represented by the locations of parts of the face. Moreover, the geometric attributes also can be referred to as facial attributes. Moreover, the geometric attributes may be handled as a set of geometric attributes.

For example, facial landmarks for use as the geometric attributes indicate locations of points on a facial main region including facial contour, eyes, eyebrows, nose, mouth, lips, and chin. Such geometric attributes are interpretable to other people or other devices, and thus it is possible to correct the attributes and improve the process of the attributes.

Compressor 133 encodes the geometric attributes into the bitstream using the method such as entropy encoding to compress the geometric attributes (S103).

Compressor 134 encodes at least one background image into the bitstream to compress the background image (S104). The background image may be encoded according to a video codec method such as VVC.

The background image is used for a background region in the synthesized face video. In other words, the background image indicates a background overlaid on a face video including a face. The background image may be an image corresponding to a frame included in the driving video, or may be generated from images corresponding to frames included in the driving video. The background image may be prepared in advance separately from the fundamental image and the driving video.

Moreover, the background image may be selectable from background image candidates. Instead of the background image, a selection parameter for selecting a background image from the background image candidates may be encoded. The selection parameter may be the identifier of the background image corresponding to any one of the background image candidates.

Furthermore, as the background image, a solid-color style, a texture style, a gradation style, a pattern style, a blur style, an illustration, a high contrast style, a real world scene, a synthetic scene, or the like may be used. Moreover, as the background image, any combination thereof may be used, or another image different from these examples may be used.

As with the case of the below-mentioned operation performed by decoder 200, encoder 100 may generate the synthesized face video based on the fundamental image, the geometric attributes, and the background image (S105). In order to generate the synthesized face video, encoder 100 may include the same components as decoder 200. With this, it is possible to use encoder 100 to check the synthesized face video to be generated in decoder 200. It is to be noted that this process may be omitted.

After encoding the fundamental image, the geometric attributes, and the background image into the bitstream, encoder 100 transmits the bitstream to decoder 200 via a transmission channel. For example, the compressed geometric attributes are transmitted from encoder 100 to decoder 200 for each of frames of the driving video, i.e., at every time instance. The compressed geometric attributes may be transmitted as supplemental enhancement information (SEI).

The fundamental image may be transmitted only once to generate the synthesized face video. Then, in decoder 200, the same fundamental image may be used in generating each frame of the synthesized face video. Likewise, the background image may be transmitted only once to generate the synthesized face video. Then, in decoder 200, the same background image may be used in generating each frame of the synthesized face video.

Alternatively, as with the case of the geometric attributes, the background image may be transmitted for each of frames of the driving video, i.e., at every time instance. Alternatively, the background image may be transmitted as each of key-frames, and hence the refresh rate of the background image may correspond to a key-frame interval.

Alternatively, encoder 100 may track the location of the face in the driving video, and transmit the background image when the movement of the face such as translation or rotation exceeds a threshold. As described above, the refresh rate of the background image may be dependent on the movement of the face in the driving video.

The fundamental image, the geometric attributes, and the background image may be encoded into the same one bitstream and transmitted, or may be encoded into their respective different bitstreams and transmitted. Two of the fundamental image, the geometric attributes, and the background image may be encoded into the same one bitstream and transmitted, or the remainder of the fundamental image, the geometric attributes, and the background image may be encoded into another bitstream and transmitted.

### [Configuration and Process of Decoder]

FIG. 11 is a block diagram illustrating a configuration example of decoder 200 according to the present embodiment. Decoder 200 generates a synthesized face video from a bitstream. In this example, decoder 200 includes decompressor 231, deriver 232, decompressor 233, generator 234, decompressor 235, and synthesizer 236. For example, these components are each an electric circuit that performs information processing. Two or more of decompressor 231, decompressor 233, and decompressor 235 may be integrated.

FIG. 12 is a flow chart illustrating an operation example performed by decoder 200 according to the embodiment. For example, the components of decoder 200 shown in FIG. 11 perform the operation according to the flow chart of FIG. 12. It is to be noted that the same explanation as the encoding may be omitted hereinafter.

Decompressor 231 decodes at least one fundamental image from a bitstream to decompress the fundamental image (S201). The fundamental image may be decoded according to a video codec method such as VVC. Thereafter, decompressor 231 feeds the fundamental image to deriver 232.

Deriver 232 derives fundamental information indicating fundamental attributes from the fundamental image (S202). Here, the fundamental information indicating the fundamental attributes is also referred to just as fundamental attributes. The fundamental attributes are static and visual attributes, and can be also referred to as identity. The fundamental attributes may include information regarding at least one of hair, eyeglasses, facial hair, eyebrows, eyes, mouth, nose, skin, facial contour, clothing, and accessory.

Decompressor 233 decodes the geometric attributes from the bitstream for each of frames using the method such as entropy decoding, to decompress the geometric attributes (S203).

Generator 234 generates an intermediate face video from the fundamental attributes and the geometric attributes using a generative model such as a neural network (S204).

The generative model may be a generative adversarial network (GAN), a variational autoencoder (VAE), an autoregressive model, a diffusion model, or the like. For example, the generative model is a machine learning frame work for generating new data based on the provided data set, and may analyze and learn the basic distribution of the data set.

For example, for each of the frames, generator 234 inputs the fundamental attributes and the geometric attributes to the generative model to obtain the intermediate face video and a segmentation mask from the generative model. More specifically, for each of the frames, generator 234 inputs the fundamental attributes and the geometric attributes to the generative model to obtain a frame of the intermediate face video and a segmentation mask of the frame of the intermediate face video from the generative model. This segmentation mask indicates a foreground region and a background region in the intermediate face video (in particular, the frame of the intermediate face video).

The segmentation mask may be represented by a 2-dimesional map in which all the pixel values of the foreground region are 1 and all the pixel values of the background region are 0, or a 2-dimesional map in which all the pixel values of the foreground region are 0 and all the pixel values of the background region are 1. For example, the foreground region is a region including a face or the like and a region including motion, and the background region is a region not including a face or the like and a region not including motion. The segmentation mask is also referred to as segmentation information.

Instead of or in addition to the fundamental attributes, generator 234 may render the intermediate face video using the fundamental image per se. Moreover, deriver 232 may be included in generator 234, or need not be present. Moreover, the recognition model for deriving the fundamental attributes in deriver 232 may be included in the generative model for generating the intermediate face video or the like in generator 234. Regarding deriver 232 and the fundamental attributes, the same is applied to other variations.

In other words, generator 234 may generate the segmentation mask and the intermediate face video from the fundamental image and the geometric attributes using the generative model. In doing so, generator 234 may input the fundamental image and the geometric attributes to the generative model to obtain the segmentation mask and the intermediate face video from the generative model.

Decompressor 235 decodes at least one background image from the bitstream to decompress the background image (S205). The background image may be decoded according to a video codec method such as VVC. Instead of the background image, a selection parameter for selecting a background image from the background image candidates may be decoded. The selection parameter may be the identifier of the background image corresponding to any one of the background image candidates.

Synthesizer 236 generates a synthesized face video using the intermediate face video, the segmentation mask, and the background image by embedding, into the background region in the intermediate face video, the corresponding region in the background image (S206).

FIG. 13 is a concept diagram illustrating an example of a decoding process at each time instance. In this example, decoder 200 receives the compressed fundamental image, the compressed geometric attributes, and the compressed background image at first time instance (t = 0). Decoder 200 then stores the compressed fundamental image and the compressed background image in memory 252 of decoder 200.

Moreover, decoder 200 performs the decoding process on the compressed fundamental image, the compressed geometric attributes at first time instance (t = 0), and the compressed background image. Decoder 200 then generates an image at first time instance (t = 0) in the synthesized face video from the fundamental image, the geometric attributes, and the background image using the generative model.

Moreover, decoder 200 receives the compressed geometric attributes at the subsequent time instance (t = T), and retrieves and obtains the compressed fundamental image and the compressed background image from memory 252 of decoder 200. Decoder 200 then performs the decoding process on the compressed fundamental image, the compressed geometric attributes at this time instance (t = T), and the compressed background image. Decoder 200 then generates an image at this time instance (t = T) in the synthesized face video from the fundamental image, the geometric attributes, and the background image using the generative model.

Decoder 200 may store the fundamental image and the background image obtained by performing the decoding process on the compressed fundamental image and the compressed background image in memory 252 of decoder 200. Decoder 200 may then obtain the fundamental image and the background image to which the decoding process has been applied from memory 252 at the subsequent time instance (t = T), and apply the fundamental image and the background image obtained from memory 252 to the generation of an image in the synthesized face video.

As described in this example, the compressed geometric attributes are received at each time instance. The geometric attributes at one time instance are the geometric attributes derived from one frame in the driving video. On the other hand, the compressed fundamental image and the compressed background image may be received only at the first time instance. With this, the code amount can be reduced.

FIG. 14 is a concept diagram illustrating another example of the decoding process at each time instance. In this example, decoder 200 receives the compressed fundamental image, the compressed geometric attributes, and the compressed background image at first time instance (t = 0). Decoder 200 then stores the compressed fundamental image in memory 252 of decoder 200.

Moreover, decoder 200 performs the decoding process on the compressed fundamental image, the compressed geometric attributes at first time instance (t = 0), and the compressed background image. Decoder 200 then generates an image at first time instance (t = 0) in the synthesized face video from the fundamental image, the geometric attributes, and the background image using the generative model.

Moreover, decoder 200 receives the compressed geometric attributes and the compressed background image at the subsequent time instance (t = T), and retrieves and obtains the compressed fundamental image from memory 252 of decoder 200. Decoder 200 then performs the decoding process on the compressed fundamental image, the compressed geometric attributes at this time instance (t = T), and the compressed background image at this time instance (t = T). Decoder 200 then generates an image at this time instance (t = T) in the synthesized face video from the fundamental image, the geometric attributes, and the background image using the generative model.

Decoder 200 may store the fundamental image obtained by performing the decoding process on the compressed fundamental image in memory 252 of decoder 200. Decoder 200 may then obtain the fundamental image to which the decoding process has been applied from memory 252 at the subsequent time instance (t = T), and apply the fundamental image obtained from memory 252 to the generation of an image in the synthesized face video.

As described in this example, the compressed geometric attributes and the compressed background image are received at each time instance. The geometric attributes at one time instance are the geometric attributes derived from one frame in the driving video.

Moreover, for example, the background image at one time instance may be a background image derived from one frame in the driving video. In encoding the background image, the code amount of the background image may be reduced by reducing the resolution, performing quantization with a large quantization width, or filling the foreground region with a foreground color code.

Moreover, for example, the compressed fundamental image may be received only at the first time instance. With this, the code amount can be reduced.

### [Variations]

FIG. 15 is a block diagram illustrating another configuration example of decoder 200 according to the present embodiment. In the above-mentioned example, i.e., in the example of FIG. 11, generator 234 inputs the fundamental attributes and the geometric attributes to the generative model to obtain the intermediate face video and the segmentation mask from the generative model.

In contrast, in this example, i.e., in the example of FIG. 15, generator 234 inputs the fundamental attributes and the geometric attributes to the generative model to obtain the intermediate face video from the generative model. Generator 234 then performs the segmentation process on the intermediate face video to obtain the segmentation mask.

Specifically, for each of frames, generator 234 inputs the fundamental attributes and the geometric attributes to the generative model to obtain a frame of the intermediate face video from the generative model. Generator 234 then performs the segmentation process on each frame of the intermediate face video to obtain the segmentation mask of each frame of the intermediate face video.

With this, it may be possible to subdivide the processing and facilitate the processing. Instead of generator 234, a segmentation processor (not shown) may perform the segmentation process.

The segmentation process may be performed using a machine learning model such as a neural network. The same is applied to the other segmentation processes of the present disclosure.

The foreground region and the background region in the intermediate face video and the synthesized face video generated in decoder 200 correspond to the foreground region and the background region in the driving video. Accordingly, encoder 100 may perform the segmentation process on the driving video, and encode the segmentation mask of the driving video. Decoder 200 may then decode the segmentation mask, and generates the synthesized face video using the segmentation mask.

Specifically, in encoder 100, for each of the frames, deriver 132 may perform the segmentation process on the driving video to generate a segmentation mask indicating the foreground region and the background region in the driving video. Moreover, compressor 133 may encode the segmentation mask into a bitstream to compress the segmentation mask.

Then, in decoder 200, decompressor 233 may decode the segmentation mask from the bitstream to decompress the segmentation mask. Furthermore, synthesizer 236 may generate the synthesized face video using the segmentation mask. With this, the processing amount in decoder 200 may be reduced.

Moreover, in encoder 100, a segmentation processor different from deriver 132 (not shown) may perform the segmentation process. Moreover, a compressor different from compressor 133 (not shown) may encode the segmentation mask into a bitstream. Moreover, in decoder 200, a decompressor different from decompressor 233 (not shown) may decode the segmentation mask from the bitstream.

Moreover, the segmentation mask may be transmitted in SEI from encoder 100 to decoder 200 for each of the frames.

FIG. 16 is a block diagram illustrating another configuration example of decoder 200 according to the present embodiment. In this example, generator 234 inputs the fundamental attributes and the geometric attributes to the generative model to obtain the intermediate face video in which a specified background color code has been embedded into the background region, from the generative model. In other words, in the intermediate face video obtained from the generative model, the background region is all painted in a specified background color. In yet other words, all the pixels in the background region in the intermediate face video have, as a pixel value, the same specified background color code.

Accordingly, it is possible to identify the background region in the intermediate face video without using the segmentation mask.

Synthesizer 236 embeds, into the background region in the intermediate face video, the corresponding region in the background image. Specifically, in the intermediate face video, the pixel having the specified background color code is replaced with the corresponding pixel in the background image, and the pixel not having the specified background color code remains. In this manner, synthesizer 236 generates the synthesized face video from the background image and the intermediate face video in which the specified background color code has been embedded into the background region.

FIG. 17 is a block diagram illustrating another configuration example of encoder 100 according to the present embodiment. In this example, a fundamental image in which a specified background color code has been embedded into the background region is used. In other words, a fundamental image whose background region is all painted in a specified background color is used. In yet other words, all the pixels in the background region in the fundamental image have, as a pixel value, the same specified background color code. For example, a specified background color code may be originally embedded in the background region in the fundamental image.

Alternatively, in encoder 100, compressor 131 may embed the specified background color code into the background region in the fundamental image. Specifically, compressor 131 may perform the segmentation process on the fundamental image to obtain a segmentation mask indicating the foreground region and the background region in the fundamental image. Compressor 131 may then identify the background region in the fundamental image in accordance with the segmentation mask, and embed the specified background color code into the background region in the fundamental image.

Instead of compressor 131, a preprocessor (not shown) may perform the segmentation process on the fundamental image to embed the specified background color code into the background region in the fundamental image.

Compressor 131 encodes, into a bitstream, a fundamental image in which the specified background color code has been embedded into the background region. Compressor 131 may encode, into a bitstream, background color-code information indicating a specified background color code. For example, the background color-code information can be transmitted in SEI.

FIG. 18 is a block diagram illustrating another configuration example of decoder 200 according to the present embodiment. Decoder 200 of FIG. 18 generates a synthesized face video from a bitstream generated in encoder 100 of FIG. 17. In other words, in this example, a fundamental image in which a specified background color code has been embedded into the background region is used. In yet other words, a fundamental image whose background region is all painted in a specified background color is used.

In decoder 200, compressor 231 decodes, from the bitstream, a fundamental image in which the specified background color code has been embedded into the background region. Deriver 232 derives fundamental attributes from the fundamental image in which the specified background color code has been embedded into the background region. For example, a specified background color code is embedded in the background region in the fundamental image, and thus it is possible to appropriately derive the fundamental attributes from only the foreground region in the fundamental image.

Generator 234 then generates an intermediate face video by inputting the fundamental attributes and the geometric attributes to the generative model to obtain the intermediate face video from the generative model.

The intermediate face video generated in generator 234 correspond to the fundamental image to which motion is given by the geometric attributes. Moreover, the specified background color code is embedded in the background region in the fundamental image. For this reason, in generator 234, the intermediate face video in which the specified background color code is embedded in the background region is generated.

Accordingly, as with the case of the example of FIG. 16, it is possible to identify the background region in the intermediate face video without using the segmentation mask. Then, as with the case of the example of FIG. 16, it is possible to generate the synthesized face video from the background image and the intermediate face video in which the specified background color code has been embedded into the background region.

Compressor 231 may decode the background color-code information indicating a specified background color code. Synthesizer 236 may then identify, as the background region in the intermediate face video, a region having the specified background color code indicated in the decoded background color-code information.

In encoder 100 of the example of FIG. 17, compressor 131 may encode the segmentation mask into the bitstream (e.g., SEI in the bitstream) without embedding the specified background color code into the background region in the fundamental image. Then, in decoder 200 of the example of FIG. 18, decompressor 231 may decode the segmentation mask and the fundamental image from the bitstream, and embed the specified background color code into the background region in the fundamental image in accordance with the segmentation mask.

Moreover, the present disclosure is not limited to the examples of FIG. 17 and FIG. 18. In encoder 100 and decoder 200 corresponding to the example of FIG. 16, the background color-code information may be transmitted. Alternatively, without transmitting the background color-code information, in encoder 100 and decoder 200, the specified background color code may be specified from the fundamental image using a neural network, or may be specified regardless of the fundamental image or the like.

The background color-code information may be transmitted only once to generate the synthesized face video. Then, in decoder 200, the same background color-code information may be used in generating each frame of the synthesized face video.

For example, the specified background color code is a color code specified to be different from colors (i.e., pixel values) included in the foreground region such as a face. With this, it is possible to appropriately identify the background region in the intermediate face video or the like.

Specifically, the specified background color code may be an unorthodox color all over the typical face or body region. For example, chroma-key green or blue may be selected as the specified background color code since the chroma-key green or blue is the furthest away from the color of the human body.

Alternatively, first, a list of all possible colors may be established. Moreover, all the colors in the entire foreground region may be extracted. Next, all the extracted colors may be removed from the list. The remaining color in the list may be then selected as the specified background color code.

Alternatively, all the colors in the foreground region may be inputted to a frequency table. A color with the highest appearance rate may be then identified from the frequency table. The opposite color to the identified color in the color wheel may be then specified as the specified background color code.

Moreover, in generating the synthesized face video, the pixel values included in the foreground region and the background region into which the background color code has been embedded are changeable. Moreover, when the specified background color code is the same as the pixel value included in the foreground region, it is difficult to appropriately identify the background region.

Accordingly, the specified background color code may be specified using a range of continuous values that are not the same as the pixel values included in the foreground region. Encoder 100 may then encode the range of continuous values as the specified background color code, and decoder 200 may decode this range as the specified background color code.

For example, minimum values in continuous ranges (yₘᵢₙ, uₘᵢₙ, vₘᵢₙ) and maximum values in continuous ranges (yₘₐₓ, uₘₐₓ, vₘₐₓ) may be transmitted by the bitstream as the background color code. Alternatively, mean values in continuous ranges (yₘₑₐₙ, uₘₑₐₙ, vₘₑₐₙ) and difference values between mean values and minimum values in continuous ranges (y_{delta}, u_{delta}, v_{delta}) may be transmitted by the bitstream as the background color code.

FIG. 19 is a block diagram illustrating yet another configuration example of decoder 200 according to the present embodiment. In this example, generator 234 generates a synthesized face video from the fundamental attributes, the geometric attributes, and the background image using the generative model. Specifically, generator 234 generates a synthesized face video by inputting the fundamental attributes, the geometric attributes, and the background image to the generative model to obtain the synthesized face video from the generative model. With this, the processing can be simplified. In this case, decoder 200 need not include additional synthesizer 236.

In the above-mentioned examples, the background image may be an image not including the foreground region such as a face, or an image including the foreground region such as a face. A specified foreground color code may be embedded in the foreground region in the background image. In other words, the foreground region in the background image may be all painted in a specified foreground color. With this, it is prevented that the foreground region in the background image, such as a face, appears in the background region in the synthesized face image.

For example, in encoder 100, compressor 134 performs the segmentation process on the background image to obtain the segmentation mask indicating the foreground region and the background region in the background image. Compressor 134 may then embed a specified foreground color code into the foreground region in the background image using the segmentation mask. Compressor 134 may then encode, into a bitstream, the background image in which a specified foreground color code has been embedded into the foreground region.

In decoder 200, decompressor 235 may then decode, from the bitstream, the background image in which a specified foreground color code has been embedded into the foreground region. With this, decoder 200 can identify the foreground region and the background region in the background image.

When the foreground region is included in the background image, part or all of a missing portion of the background region in the background image may be interpolated using inpainting or another method. Specifically, the missing portion of the background region in the background image may be interpolated using a region surrounding the foreground region (i.e., the background region) in the background image. Alternatively, the missing portion of the background region in the background image may be interpolated using a background region in another image.

The missing portion of the background region in the background image may be interpolated in encoder 100 or in decoder 200.

For example, the background image may be an image included in the driving video, or a synthesized image of images included in the driving video. In this case, in encoder 100, compressor 134 may interpolate the missing portion of the background region in the background image using a region surrounding the foreground region in the background image or a background region in another image included in the driving video. Compressor 134 may then encode the background image whose missing portion of the background region has been interpolated.

Moreover, in decoder 200, decompressor 235 or synthesizer 236 may interpolate the missing portion of the background region in the background image using a region surrounding the foreground region in the background image or a background region in the previous synthesized face video. Moreover, when a corresponding region includes the foreground region at a time when the corresponding region in the background image is embedded into the background region in the intermediate video, synthesizer 236 may interpolate the missing portion of the background region in the corresponding region.

As described above, instead of the background image, a selection parameter may be transmitted by the bitstream. The selection parameter provides information regarding the background.

The selection parameter may include information regarding a content rating of the background image. Specifically, the selection parameter may indicate, as the content rating, an age group that is suitable for viewing related to the background image.

For example, the selection parameter may indicate that a rating of NC16 (Not available for children below 16 years old) is assigned to the background image. When the viewer falls within an underage category, an additional process such as blurring the background image may be performed on the background image according to the selection parameter.

With this, as with the case of the media content rating systems, it is possible to protect minors or people in other categories from viewing the background image that is thematically unsuitable for them, such as violence.

Moreover, for example, the selection parameter may include information regarding customization of the background image. Specifically, the selection parameter may include information for further customizing the background image based on the viewer's profile. For example, if the viewer is a female, a background image that is often selected by females (in particular, a pink background image, or the like) may be selected. In another example, if the viewer is a child, a background image that is often selected by children (in particular, a colorful background image, or the like) may be selected.

With such a selection parameter or the like, the final background image to be applied at each of one or more decoders 200 may be modified.

In the above-mentioned examples, separately from the fundamental image and the geometric attributes, the background image or background information regarding the background image is transmitted. For example, the background information is information for obtaining the background image. The background information may be information for selecting the background image from background image candidates, or information for obtaining the background image, such as where to obtain the background image. However, in another example, the background image or the background information need not be transmitted, or the background image need not be determined in advance.

Specifically, for example, instead of the background image transmitted separately from the fundamental image, the fundamental image may be used as the background image. Then, for example, in decoder 200, synthesizer 236 may generate the synthesized face video by embedding, into the background region in the intermediate face video, the corresponding region in the fundamental image.

Part or all of the missing portion of the background region in the fundamental image may be interpolated using inpainting or another method. Specifically, the missing portion of the background region in the fundamental image may be interpolated using a region surrounding the foreground region (i.e., the background region) in the fundamental image.

Alternatively, the missing portion of the background region in the fundamental image may be interpolated using a background region in another image. When multiple fundamental images are transmitted, another image may be another fundamental image. Alternatively, another image may be an image included in the synthesized face video or the intermediate face video generated using another fundamental image.

Moreover, the segmentation process may be performed on the fundamental image to obtain a segmentation mask indicating the foreground region and the background region in the fundamental image. The segmentation mask may then be used to identify the foreground region and the background region in the fundamental image. The segmentation process may be performed at encoder 100 or at decoder 200. When the segmentation process is performed at encoder 100, the segmentation mask may be transmitted from encoder 100 to decoder 200.

In the above-mentioned example, the fundamental image may be regarded as being encoded and decoded as the background image or the background information. Moreover, the fundamental image may be regarded as being applied to the background image. Alternatively, the background image may be regarded as being neither encoded nor decoded.

Moreover, in the above-mentioned examples, geometric information indicating the geometric attributes is used, but attribution information corresponding to each frame is not limited to this geometric information indicating the geometric attributes. Dynamic information indicating dynamic attributes in a form different from the geometric attributes may be used instead of the geometric information.

FIG. 20 is a block diagram illustrating a configuration example for encoder 100 according to the embodiment to encode a video. For example, encoder 100 may include the components illustrated in FIG. 20 as components for encoding an image in a video on a per block basis according to VVC. In addition to the above-mentioned components, encoder 100 may include the components illustrated in FIG. 20. At least part of the above-mentioned components may be integrated into the components illustrated in FIG. 20.

As illustrated in FIG. 20, encoder 100 includes splitter 102, subtractor 104, transformer 106, quantizer 108, entropy encoder 110, inverse quantizer 112, inverse transformer 114, adder 116, block memory 118, loop filter 120, frame memory 122, intra predictor 124, inter predictor 126, prediction controller 128, and prediction parameter generator 130. It is to be noted that intra predictor 124 and inter predictor 126 are configured as part of a prediction executor.

Splitter 102 splits an image into blocks, and provides a parameter related to the splitting to entropy encoder 110. Subtractor 104 subtracts a prediction image block from a current block to obtain a prediction residual block. Transformer 106 transforms the prediction residual block to obtain a transform coefficient block. Quantizer 108 quantizes the transform coefficient block to obtain a quantized coefficient block. Entropy encoder 110 entropy encodes the quantized coefficient block and the parameter to generate a bitstream.

Inverse quantizer 112 performs inverse quantization of the quantized coefficient block to obtain a transform coefficient block. Inverse transformer 114 performs inverse transformation of the transform coefficient block to obtain a prediction residual block. Adder 116 adds the prediction image block to the prediction residual block to obtain a reconstructed image block. Block memory 118 stores the reconstructed image block. Loop filter unit 120 applies a loop filter to the reconstructed image block. Frame memory 122 stores the reconstructed image block to which the loop filter is applied.

Intra predictor 124 generates a prediction image block by performing intra prediction by referring to block memory 118. Inter predictor 126 generates a prediction image block by performing inter prediction by referring to frame memory 122. Prediction controller 128 provides, to subtractor 104 and adder 116, a prediction image block generated by intra predictor 124 or a prediction image block generated by inter predictor 126. Prediction parameter generator 130 provides a parameter related to the intra prediction or the inter prediction to entropy encoder 110.

FIG. 21 is a block diagram illustrating a configuration example for decoder 200 according to the embodiment to decode a video. For example, decoder 200 may include the components illustrated in FIG. 21 as components for decoding an image in a video on a per block basis according to VVC. In addition to the above-mentioned components, decoder 200 may include the components illustrated in FIG. 21. At least part of the above-mentioned components may be integrated into the components illustrated in FIG. 21.

As illustrated in FIG. 21, decoder 200 includes entropy decoder 202, inverse quantizer 204, inverse transformer 206, adder 208, block memory 210, loop filter unit 212, frame memory 214, intra predictor 216, inter predictor 218, prediction controller 220, prediction parameter generator 222, and splitting determiner 224. It is to be noted that intra predictor 216 and inter predictor 218 are configured as part of a prediction executor.

Entropy decoder 202 entropy decodes a bitstream to obtain a quantized coefficient block and a parameter. Inverse quantizer 204 performs inverse quantization of the quantized coefficient block to obtain a transform coefficient block. Inverse transformer 206 performs inverse transformation of the transform coefficient block to obtain a prediction residual block. Adder 208 adds the prediction image block to the prediction residual block to obtain a reconstructed image block. Loop filter unit 212 applies a loop filter to the reconstructed image block.

Block memory 210 stores the reconstructed image block. Frame memory 214 stores the reconstructed image block to which the loop filter is applied.

Intra predictor 216 generates a prediction image block by performing intra prediction by referring to block memory 210. Inter predictor 218 generates a prediction image block by performing inter prediction by referring to frame memory 214. Prediction controller 220 provides, to adder 208, a prediction image block generated by intra predictor 216 or a prediction image block generated by inter predictor 218. Prediction parameter generator 222 provides a parameter related to the intra prediction or the inter prediction to prediction controller 220.

Splitting determiner 224 determines a block for decoding an image on a per block basis, according to a parameter related to the splitting.

### [Configuration Example of Bitstream]

In the present disclosure, three types of information, i.e., fundamental image, geometric attributes, and background image, are transmitted via a bitstream.

FIG. 22, FIG. 23, FIG. 24, FIG. 25, and FIG. 26 each illustrate a bitstream layout. The bitstream layout may be a combination of FIG. 22, FIG. 23, FIG. 24, FIG. 25, and FIG. 26. Moreover, the present disclosure is not limited to the bitstream layouts illustrated in FIG. 22, FIG. 23, FIG. 24, FIG. 25, and FIG. 26, and the fundamental image, the geometric attributes, and the background image can be encoded in any order.

FIG. 22 is a conceptual diagram illustrating a configuration example of a bitstream. In this example, the first GOP includes one or more fundamental images, one or more background images, and sets of geometric attributes, and the other GOPs each include one or more background images and sets of geometric attributes.

FIG. 23 is a conceptual diagram illustrating another configuration example of the bitstream. In this example, the first GOP includes a fundamental image, a background image, and sets of geometric attributes, and the other GOPs each include sets of geometric attributes.

FIG. 24 is a conceptual diagram illustrating yet another configuration example of the bitstream. In this example, the bitstream includes the first bitstream, the second bitstream, and the third bitstream. The first bitstream includes one or more fundamental images. The second bitstream includes one or more background images. The third bitstream includes sets of geometric attributes.

FIG. 25 is a conceptual diagram illustrating yet another configuration example of the bitstream. In this example, the bitstream includes the first bitstream and the second bitstream. The first bitstream includes one or more fundamental images. The first GOP in the second bitstream includes one or more background images and sets of geometric attributes. The other GOPs in the second bitstream each include sets of geometric attributes.

FIG. 26 is a conceptual diagram illustrating yet another configuration example of the bitstream. In this example, each of the GOPs includes one or more fundamental images, one or more background images, and sets of geometric attributes.

For example, when background images are included in the bitstream, one of the background images may be used to generate the synthesized face image, or a combination of the background images may be used to generate the synthesized face image. Alternatively, the background images included in the bitstream may correspond to frames of the synthesized face image, respectively.

Moreover, for example, when fundamental images are included in the bitstream, one of the fundamental images may be used to generate the synthesized face image, or a combination of the fundamental images may be used to generate the synthesized face image.

Moreover, for example, in order to identify the content included in an access unit, a header parameter indicating whether the access unit corresponds to the fundamental image, the background image, or the geometric attributes may be used. The header parameter may be encoded in SPS, PPS, PH, VUI, or SEI.

Moreover, the synthesized face video may be rendered and displayed at decoder 200 after decoding the access unit including the first geometric attributes.

In some codec standards, it is specified that picture data corresponding to one picture is included in each access unit. Accordingly, the fundamental image and the background image may be included in different access units. Alternatively, for example, in layer coding such as multi-view coding, it is sometimes allowed that picture data corresponding to pictures is included in one access unit. Accordingly, the fundamental image and the background image may be included in the same access unit according to the layer coding such as multi-view coding.

Each access unit may include other NAL units from video coding layer (VCL) or non-video coding layer.

Moreover, the geometric attributes such as facial landmark data may be included in metadata, versatile supplemental enhancement information (VSEI), or SEI in any video codec or image codec. Moreover, the geometric attributes may be included in the NAL unit with a new nal_unit_type in VCL.

FIG. 27, FIG. 28, and FIG. 29 each illustrate an example of bitstream layout using VVC codec that is an encoding standard. The VVC codec can be replaced with any other video codec or image codec, such as HEVC, AVC, AV1, SVC, EVC, or JPEG.

FIG. 27 is a conceptual diagram illustrating a configuration example of a bitstream compliant to VVC. In this example, the fundamental image and the background image are each encoded and decoded as a VVC intra picture. The geometric attributes are encoded into SEI referred to as geometric attributes SEI, and decoded from this SEI.

In this example, the background image is transmitted multiple times. The first access unit includes picture data of the fundamental image, and the other access units each include the geometric attributes SEI and picture data of the background image. In other words, the geometric attributes and the background image are included in the same access unit.

FIG. 28 is a conceptual diagram illustrating another configuration example of the bitstream compliant to VVC. In this example, the fundamental image and the background image are each encoded and decoded as a VVC intra picture. The geometric attributes are encoded into SEI referred to as geometric attributes SEI, and decoded from this SEI.

In this example, the background image is transmitted only once. The first access unit includes picture data of the fundamental image, and the next access unit includes the geometric attributes SEI and picture data of the background image. The following access units each include the geometric attributes SEI.

FIG. 29 is a conceptual diagram illustrating yet another configuration example of the bitstream compliant to VVC. In this example, the fundamental image is encoded and decoded as a VVC intra picture. The geometric attributes are encoded into SEI referred to as geometric attributes SEI, and decoded from this SEI. Moreover, instead of the background image, a background parameter such as a selection parameter for selecting the background image from background image candidates is encoded into SEI referred to as background parameter SEI, and decoded from this SEI.

Moreover, the first access unit includes picture data of the fundamental image, and the next access unit includes the geometric attributes SEI, the background parameter SEI, and picture data. The following access units each may include the geometric attributes SEI, or the geometric attributes SEI and picture data.

For example, in some codec standards, it is specified that picture data corresponding to one picture is included for each access unit. In order to ensure compatibility with such codec standards, an access unit for transmitting SEI may include not only SEI but also picture data.

Specifically, the access unit for transmitting SEI may include, as dummy picture data, picture data corresponding to a picture with the minimum allowable resolution. This picture may be a picture with a constant value for all pixels, such as zero. When the color code of each pixel is encoded into the bitstream, the pixels may be filled with the same color code.

Moreover, the access unit for transmitting SEI may include, as picture data, the slice NAL unit indicating a solid-color picture such as all black, all white, or all chroma-key green.

Alternatively, the access unit for transmitting SEI may include, as picture data, a copy of the fundamental image or the background image. This access unit may include a skip picture as picture data. Alternatively, this access unit may include, as picture data, a picture in which a skip mode is specified for all coding units (CUs). With this, it is possible to minimize overheads required per access unit.

Alternatively, a parameter indicating that the NAL unit corresponding to picture data should be ignored may be included in the access unit for transmitting SEI.

In another example, an access unit may include picture data of the fundamental image and at least one of the geometric attributes SEI or the background parameter SEI. Moreover, another access unit may include at least one of the geometric attributes SEI or the background parameter SEI. Instead of the geometric attributes SEI, the NAL unit with a new nal_unit_type may be used. Moreover, instead of the background parameter SEI, the NAL unit with a new nal_unit_type may be used.

Moreover, the geometric attributes and the background parameter need not be encoded into separate SEIs, and may be encoded into one SEI.

Moreover, as a specific example, picture data of the fundamental image, the geometric attributes SEI, and the background parameter SEI may be included in the same first access unit of each GOP. Then, in generating the synthesized face video, the first frame of the GOP in the synthesized face video may be generated based on the fundamental image, the geometric attributes, and the background information which are obtained from the same access unit. Alternatively, in order to generate the first frame of a current GOP to be processed, the fundamental image included in the first access unit of the GOP before the current GOP may be used.

Moreover, in the first GOP, the first access unit includes picture data of the fundamental image, and each access unit after the first access unit may include the geometric attributes SEI and the background parameter SEI. Then, in each GOP after the first GOP, the first access unit includes picture data of the fundamental image, the geometric attributes SEI, and the background parameter SEI, and each access unit after the first access unit may include the geometric attributes SEI and the background parameter SEI.

With this, it is possible to use the fundamental image obtained from the already processed access unit, in generating a frame using the geometric attributes SEI and the background parameter SEI.

### [Example of Generative Model]

FIG. 30 is a diagram illustrating an example of different models applicable as a generative model. For example, a neural network is used as the generative model. Specifically, a generative adversarial network, a variational autoencoder, a flow-based generative model, and a diffusion model are illustrated in FIG. 30.

The generative adversarial creates new data instances that are similar to the input data via learning characteristics in the input data. Specifically, an unsupervised task of the generative model is converted into a supervised task by two types of sub-models.

For example, a generator sub-model generates fake samples, and a discriminator sub-model distinguishes true inputs from the fake samples generated by the generator sub-model. The output images are then generated via a minimax game to maximize the discrimination probability of the discriminator sub-model in assigning accurate labels to the true inputs and the fake samples and simultaneously minimize the differences in distributions of the true inputs and the fake samples.

The variational autoencoder first compresses input data into a multivariate latent distribution for reconstructing data from the latent space as accurately as possible. With this, data compression and dimensionality reduction are efficiently performed. The flow-based generative model converts a source distribution to the distribution of training data via a sequence of one or more invertible transformations. This allows for the learning of the data distribution and exact computation of likelihood of the final target.

The diffusion model also creates new data instances similar to the training data. The diffusion model first degrades the structure of the training data via iterative infusion of perturbations and noise before starting a denoising process in an attempt to recover the original data. This results in iterative mapping of data into latent distributions via Markov chains where the latent state in each step is only dependent on the latent state in the previous step. The data is then recovered by denoising in a hierarchical fashion.

For example, the neural network may be a face picture generator neural network applicable to generate an output picture using a picture and geometric information represented in a fixed format for a facial parameter. In other words, the neural network corresponds to a process of generating samples included in the output picture that is one picture included in an output video.

Moreover, the neural network may be a neural network of generative face video SEI discussed in Moving Picture Experts Group (MPEG). Specifically, for example, the neural network may be a face picture generator neural network referred to as "GenerativeNN()" in NPL 2.

An alternative example of the above-mentioned neural network may comprise of a combination of any of the above-mentioned models. Alternatively, other types of generative models, or the like may be used.

Moreover, the machine learning model such as a neural network may be used for the segmentation process. Moreover, the machine learning model such as a neural network may be used to derive the geometric attributes or to derive the fundamental attributes.

### [Implementation Examples]

FIG. 31 is a block diagram illustrating an implementation example of encoder 100. Encoder 100 includes circuitry 151 and memory 152. For example, the components of encoder 100 described above are implemented by circuitry 151 and memory 152.

Circuitry 151 is an electrical circuit that performs information processing, and is accessible to memory 152. For example, circuitry 151 may be a dedicated circuit that performs the encoding method according to the present disclosure, or a general circuit that executes a program corresponding to the encoding method according to the present disclosure. Circuitry 151 also may be a processor such as a CPU. Circuitry 151 further may be an aggregate of multiple circuits.

Memory 152 is a dedicated or general memory that stores information for circuitry 151 to encode an image. Memory 152 may be an electrical circuit, and may be connected to circuitry 151. Memory 152 also may be included in circuitry 151. Memory 152 also may be an aggregate of multiple circuits. Memory 152 also may be a magnetic disk or an optical disk, or may be referred to as a storage, a recording medium, or the like. Memory 152 also may be a non-volatile memory, or a volatile memory.

For example, memory 152 may store data to be encoded such as an image, or encoded data such as a bitstream. Memory 152 also may store a program for causing circuitry 151 to perform image processing. Memory 152 also may store a generative model. Memory 152 also may store a fundamental image.

FIG. 32 is a flow chart illustrating the first basic operation example performed by encoder 100. In operation of this example, circuitry 151 of encoder 100 performs the following steps using memory 152.

Specifically, circuitry 151 encodes, into one or more streams, a fundamental image, geometric information, and background information for generating a synthesized face video (S301). The synthesized face video is a video including a face and synthesized with a background image. The fundamental image is an image including a face. The geometric information is information indicating geometric attributes of a subject and corresponding to each of frames of a captured video by a camera. The background information is information regarding the background image.

With this, it may be possible to provide the fundamental image, the geometric attributes, and the background image for generating the synthesized face video. Accordingly, in generating the synthesized face video, it may be possible to reduce the background distortion in the fundamental image using the background image while giving motion to the face in the fundamental image using the geometric attributes corresponding to each frame. Accordingly, it may be possible to contribute to the reduction in degradation of the image quality.

For example, circuitry 151 may perform a segmentation process on the captured video to obtain captured-video segmentation information indicating a foreground region and a background region in the captured video. Circuitry 151 may then encode, into the one or more streams, the captured-video segmentation information.

With this, it may be possible to provide the captured-video segmentation information for identifying the foreground region and the background region in the same type of a video as the captured video, via the one or more streams. Accordingly, it may be possible to contribute to identification of the foreground region and the background region in the intermediate face video in which motion is given to the face in the fundamental image using the geometric attributes corresponding to each frame.

Moreover, for example, circuitry 151 may perform a segmentation process on the fundamental image to obtain fundamental-image segmentation information indicating a foreground region and a background region in the fundamental image. Circuitry 151 also may embed a specified background color code into the background region in the fundamental image using the fundamental-image segmentation information. Circuitry 151 may then encode a fundamental image in which the specified background color code has been embedded into the background region.

With this, it may be possible to appropriately identify the background region in the fundamental image according to the fundamental-image segmentation information obtained as the result of the segmentation process for the fundamental image. Moreover, the specified background color code is embedded into the background region in the fundamental image, and thus it may be possible to reduce the distortion to be generated in the background in the fundamental image even when motion is given to the face in the fundamental image.

Moreover, for example, circuitry 151 may encode, into the one or more streams, background color-code information indicating a specified background color code. With this, it may be possible to provide the specified background color code for efficiently identifying the background region in the fundamental image, via the one or more streams. Then, it may be possible to change the specified background color code according to the fundamental image.

Moreover, for example, the background color-code information may indicate, as the specified background color code, a range including continuous values. Then, the specified background color code may be specified within the range indicated by the background color-code information. With this, it may be possible to flexibly specify the specified background color code. It may be possible to flexibly apply the specified background color code to the background region.

Moreover, for example, the specified background color code may be specified to be a color code whose occurrence frequency is less than or equal to a threshold in the foreground region in the fundamental image. With this, it may be possible to reduce misidentification of the foreground-region portion as the background-region portion. Accordingly, it may be possible to appropriately identify the background region.

Moreover, for example, circuitry 151 may perform a segmentation process on the fundamental image to obtain fundamental-image segmentation information indicating a foreground region and a background region in the fundamental image. Circuitry 151 may then encode, into the one or more streams, the fundamental-image segmentation information.

With this, it may be possible to provide the fundamental-image segmentation information for identifying the foreground region and the background region in the fundamental image, via the one or more streams. Accordingly, it may be possible to contribute to identification of the background region in the fundamental image.

Moreover, for example, the background image may be an image prepared regardless of the fundamental image and the captured video. With this, it may be possible to apply, to the synthesized face video, the background image prepared separately from the fundamental image and the captured video. Accordingly, it may be possible to reduce the effect from the foreground region in the background image, or the like.

Moreover, for example, circuitry 151 may select the background image from among background image candidates. Circuitry 151 may then encode an identifier of the background image as the background information. With this, it may be possible to flexibly select the background image from among background image candidates. Accordingly, it may be possible to apply an appropriate background image to the synthesized face video according to the intended use of the synthesized face video.

Moreover, for example, the background image may be an image included in the captured video, or a synthesized image of images included in the captured video. With this, it may be possible to apply, to the synthesized face video, the background image obtained from the captured video. Accordingly, it may be possible to apply, to the synthesized face video, the background image corresponding to a capturing state.

Moreover, for example, circuitry 151 may encode the fundamental image as the background information. Then, the fundamental image may be applied to the background image. With this, it may be possible to use the fundamental image as the background image. It may be possible to reduce the background distortion in the fundamental image by using the original fundamental image as the background image while giving motion to the face in the fundamental image using the geometric attributes corresponding to each frame.

Moreover, for example, when the background image includes a foreground region, circuitry 151 may interpolate a missing portion of a background region in the background image using a region surrounding the foreground region in the background image or using a background region in another image included in the captured video. With this, even when the background image includes the foreground region, it may be possible to appropriately interpolate the missing portion of the background region. Accordingly, it may be possible to reduce a missing portion of the background region in the synthesized face video.

Moreover, for example, circuitry 151 may perform a segmentation process on the background image to obtain background-image segmentation information indicating the foreground region and the background region in the background image. Circuitry 151 may then identify the foreground region and the background region in the background image using the background-image segmentation information.

With this, it may be possible to appropriately identify the foreground region and the background region in the background image according to the background-image segmentation information obtained as the result of the segmentation process for the background image. Accordingly, it may be possible to appropriately interpolate a missing portion of the background region in the background image.

Moreover, for example, circuitry 151 may perform a segmentation process on the background image to obtain background-image segmentation information indicating a foreground region and a background region in the background image. Circuitry 151 may then embed a specified foreground color code into the foreground region in the background image using the background-image segmentation information.

With this, it may be possible to efficiently identify the foreground region in the background image according to the specified foreground color code. Moreover, it may be possible to reduce the reflection of the foreground such as a face on the background region in the synthesized face video.

Moreover, for example, circuitry 151 may encode, into the one or more streams, foreground color-code information indicating the specified foreground color code. With this, it may be possible to provide the specified foreground color code for efficiently identifying the foreground region in the background image, via the one or more streams. Then, it may be possible to change the specified foreground color code according to the background image.

Moreover, for example, the foreground color-code information may indicate, as the specified foreground color code, a range including continuous values. Then, the specified foreground color code may be specified within the range indicated by the foreground color-code information. With this, it may be possible to flexibly specify the specified foreground color code. It may be possible to flexibly apply the specified foreground color code to the foreground region.

Moreover, for example, the specified foreground color code may be specified to be a color code whose occurrence frequency is less than or equal to a threshold in the background region in the background image. With this, it may be possible to reduce misidentification of the background-region portion as the foreground-region portion. Accordingly, it may be possible to appropriately identify the foreground region.

Moreover, for example, in the one or more streams, a stream into which the background information is encoded may be the same as either a stream into which the fundamental image is encoded or a stream into which the geometric information is encoded. With this, it may be possible to encode the background information into the same stream as the fundamental image or the geometric information instead of a different stream. Accordingly, it may be possible to efficiently encode the background information together with the fundamental image or the geometric information.

Moreover, for example, in the one or more streams, a stream into which the background information is encoded may be different from both a stream into which the fundamental image is encoded and a stream into which the geometric information is encoded. With this, it may be possible to encode the background information into a different stream from the fundamental image and the geometric information instead of the same stream. Accordingly, it may be possible to encode the background information at any time separately from the fundamental image or the geometric information.

Moreover, for example, the background image may be encoded as a top picture in a sequence including pictures, or as a top picture in the GOP. With this, it may be possible to provide the background image earlier. Accordingly, it may be possible to apply the background image to the synthesized face video earlier.

Moreover, for example, the background image may be encoded as a picture into an access unit in the one or more streams. With this, it may be possible to process the background image as a picture in the access unit. In other words, it may be possible to process the background image in the same manner as a normal picture.

Moreover, for example, the access unit into which the background image is encoded may be the same as the access unit into which the fundamental image is encoded. With this, it may be possible to encode the background image into the same access unit as the fundamental image instead of a different access unit. Accordingly, it may be possible to efficiently encode the background information together with the fundamental image.

Moreover, for example, the access unit into which the background image is encoded may be different from the access unit into which the fundamental image is encoded. With this, it may be possible to encode the background image into an access unit different from that for the fundamental image instead of the same access unit. Accordingly, it may be possible to encode the background image at any time separately from the fundamental image.

Moreover, for example, a signal indicating that the background image is present in an access unit may be encoded into SEI associated with the access unit into which the background image is encoded. With this, it may be possible to notice the presence of the background image in the access unit using the signal of SEI in the access unit. Accordingly, it may be possible to appropriately communicate the background image.

Moreover, for example, the background image may be encoded as a picture into an access unit in the one or more streams. Moreover, for example, a signal indicating that the background image is present in the access unit may be encoded into SEI associated with the access unit into which the background image is encoded.

With this, it may be possible to process the background image as a picture in the access unit. In other words, it may be possible to process the background image in the same manner as a normal picture. With this, it may be possible to notice the presence of the background image in the access unit using the signal of SEI in the access unit. Accordingly, it may be possible to appropriately communicate the background image.

Moreover, for example, the background image may be encoded as the intra picture. With this, it may be possible to process the background image as the intra picture. In other words, it may be possible to process the background image independently from another picture.

Moreover, for example, circuitry 151 may encode the background color-code information into SEI in the one or more streams. With this, it may be possible to provide the specified background color code for efficiently identifying the background region in the fundamental image via the SEI. Then, it may be possible to change the specified background color code according to the fundamental image.

Moreover, for example, circuitry 151 may encode the foreground color-code information into SEI in the one or more streams. With this, it may be possible to provide the specified foreground color code for efficiently identifying the foreground region in the background image via the SEI. Then, it may be possible to change the specified foreground color code according to the background image.

Moreover, for example, circuitry 151 may encode, into SEI in the one or more streams, at least one of: the background color-code information indicating the specified background color code; or the foreground color-code information indicating the specified foreground color code. With this, it may be possible to provide the specified foreground color code for efficiently identifying the foreground region via the SEI.

Moreover, for example, circuitry 151 may encode the captured-video segmentation information into SEI in the one or more streams. With this, it may be possible to provide the captured-video segmentation information for identifying the foreground region and the background region in the same type of a video as the captured video via the SEI. Accordingly, it may be possible to contribute to identification of the foreground region and the background region in the intermediate face video in which motion is given to the face in the fundamental image using the geometric attributes corresponding to each frame.

Moreover, for example, circuitry 151 may encode the fundamental-image segmentation information into SEI in the one or more streams. With this, it may be possible to provide the fundamental-image segmentation information for identifying the foreground region and the background region in the fundamental image via the SEI. Accordingly, it may be possible to contribute to identification of the background region in the fundamental image.

Moreover, for example, circuitry 151 may encode at least one of the captured-video segmentation information or the fundamental-image segmentation information into SEI in the one or more streams. The captured-video segmentation information indicates a foreground region and a background region in the captured video. The fundamental-image segmentation information indicates a foreground region and a background region in the fundamental image. With this, it may be possible to provide the segmentation information for identifying the foreground region and the background region via the SEI.

FIG. 33 is a flow chart illustrating the second basic operation example performed by encoder 100. In operation of this example, circuitry 151 of encoder 100 performs the following steps using memory 152.

Specifically, circuitry 151 encodes, into one or more streams, a fundamental image and geometric information for generating a synthesized face video (S311). The fundamental image is an image including a face. The geometric information is information indicating geometric attributes of a subject and corresponding to each of frames of a captured video by a camera.

In generating the synthesized face video, the fundamental image and the geometric information are used to obtain an intermediate face video from a generative model by inputting the fundamental image and the geometric information to the generative model. The intermediate face video is a video including a face. The fundamental image is further used to generate the synthesized face video by embedding, into a background region in the intermediate face video, a corresponding region in the fundamental image.

With this, it may be possible to provide the fundamental image and the geometric attributes for generating the synthesized face video. In generating the synthesized face video, it may be possible to reduce the background distortion in the fundamental image using the original fundamental image while giving motion to the face in the fundamental image using the geometric attributes corresponding to each frame. Accordingly, it may be possible to contribute to the reduction in degradation of the image quality.

Alternatively, encoder 100 may include an input terminal, an entropy encoder, and an output terminal. The operation performed by circuitry 151 may be performed by the entropy encoder. Moreover, the input terminal may receive data for use in the operation of the entropy encoder. The output terminal may output the data obtained by the operation of the entropy encoder.

FIG. 34 is a block diagram illustrating an implementation example of bitstream generator 300. Bitstream generator 300 includes circuitry 351 and memory 352. For example, bitstream generator 300, circuitry 351, and memory 352 may correspond to encoder 100, circuitry 151, and memory 152, respectively. Moreover, bitstream generator 300, circuitry 351, and memory 352 may play the same roles as encoder 100, circuitry 151, and memory 152, respectively.

Circuitry 351 is an electrical circuit that performs information processing, and is accessible to memory 352. For example, circuitry 351 may be a dedicated circuit that performs the bitstream generating method according to the present disclosure, or a general circuit that executes a program corresponding to the bitstream generating method according to the present disclosure. Circuitry 351 also may be a processor such as a CPU. Circuitry 351 further may be an aggregate of multiple circuits.

Memory 352 is a dedicated or general memory that stores information for circuitry 351 to generate a bitstream. Memory 352 may be an electrical circuit, and may be connected to circuitry 351. Memory 352 also may be included in circuitry 351. Memory 352 also may be an aggregate of multiple circuits. Memory 352 also may be a magnetic disk or an optical disk, or may be referred to as a storage, a recording medium, or the like. Memory 352 also may be a non-volatile memory, or a volatile memory.

For example, memory 352 may store data for generating a bitstream, or a bitstream. Memory 352 also may store a program for causing circuitry 351 to perform generation processing. Memory 352 also may store a generative model in circuitry 351. Memory 352 also may store the fundamental image, store the background image, or store the background image candidate.

FIG. 35 is a flow chart illustrating a first basic operation example performed by bitstream generator 300. In operation of this example, circuitry 351 of bitstream generator 300 performs the following steps using memory 352.

Specifically, circuitry 351 generates a bitstream including a fundamental image, geometric information, and background information for generating a synthesized face video (S501). The synthesized face video is a video including a face and synthesized with a background image. The fundamental image is an image including a face. The geometric information is information indicating geometric attributes of a subject and corresponding to each of frames of a captured video by a camera. The background information is information regarding the background image.

With this, it may be possible to provide the fundamental image, the geometric attributes, and the background image for generating the synthesized face video. Accordingly, in generating the synthesized face video, it may be possible to reduce the background distortion in the fundamental image using the background image while giving motion to the face in the fundamental image using the geometric attributes corresponding to each frame. Accordingly, it may be possible to contribute to the reduction in degradation of the image quality.

FIG. 36 is a flow chart illustrating a second basic operation example performed by bitstream generator 300. In operation of this example, circuitry 351 of bitstream generator 300 performs the following steps using memory 352.

Specifically, circuitry 351 generates a bitstream including a fundamental image and geometric information for generating a synthesized face video (S511). The fundamental image is an image including a face. The geometric information is information indicating geometric attributes of a subject and corresponding to each of frames of a captured video by a camera.

In generating the synthesized face video, the fundamental image and the geometric information are used to obtain an intermediate face video from a generative model by inputting the fundamental image and the geometric information to the generative model. The intermediate face video is a video including a face. The fundamental image is further used to generate the synthesized face video by embedding, into a background region in the intermediate face video, a corresponding region in the fundamental image.

With this, it may be possible to provide the fundamental image and the geometric attributes for generating the synthesized face video. In generating the synthesized face video, it may be possible to reduce the background distortion in the fundamental image using the original fundamental image while giving motion to the face in the fundamental image using the geometric attributes corresponding to each frame. Accordingly, it may be possible to contribute to the reduction in degradation of the image quality.

FIG. 37 is a block diagram illustrating an implementation example of decoder 200. Decoder 200 includes circuitry 251 and memory 252. For example, the components of decoder 200 described above are implemented by circuitry 251 and memory 252.

Circuitry 251 is an electrical circuit that performs information processing, and is accessible to memory 252. For example, circuitry 251 may be a dedicated circuit that performs the decoding method according to the present disclosure, or a general circuit that executes a program corresponding to the decoding method according to the present disclosure. Circuitry 251 also may be a processor such as a CPU. Circuitry 251 further may be an aggregate of multiple circuits.

Memory 252 is a dedicated or general memory that stores information for circuitry 251 to decode an image. Memory 252 may be an electrical circuit, and may be connected to circuitry 251. Memory 252 also may be included in circuitry 251. Memory 252 also may be an aggregate of multiple circuits. Memory 252 also may be a magnetic disk or an optical disk, or may be referred to as a storage, a recording medium, or the like. Memory 252 also may be a non-volatile memory, or a volatile memory.

For example, memory 252 may store data to be decoded such as a bitstream, or decoded data such as an image. Memory 252 also may store a program for causing circuitry 251 to perform image processing. Memory 252 also may store a generative model in circuitry 251. Memory 252 also may store the fundamental image, store the background image, or store the background image candidate.

FIG. 38 is a flow chart illustrating a first basic operation example performed by decoder 200. In operation of this example, circuitry 251 of decoder 200 performs the following steps using memory 252.

Specifically, circuitry 251 decodes, from one or more streams, a fundamental image, geometric information, and background information (S401). The fundamental image is an image including a face. The geometric information is information indicating geometric attributes of a subject and corresponding to each of frames of a captured video by a camera. The background information is information regarding a background image.

Circuitry 251 then generates a synthesized face video using a generative model from the fundamental image, the geometric information, and the background information (S402). The synthesized face video is a video including a face and synthesized with the background image.

With this, it may be possible to apply the fundamental image, the geometric attributes, and the background image in generating the synthesized face video. Accordingly, it may be possible to reduce the background distortion in the fundamental image using the background image while giving motion to the face in the fundamental image using the geometric attributes corresponding to each frame. Accordingly, it may be possible to reduce the degradation of the image quality in generating the synthesized face video.

For example, circuitry 251 may input the fundamental image, the geometric information, and the background image to the generative model to obtain the synthesized face video from the generative model.

With this, it may be possible to easily obtain the synthesized face video from the generative model. Then, in the generative model, it may be possible to apply the fundamental image, the geometric attributes, and the background image in generating the synthesized face video. Accordingly, it may be possible to reduce the background distortion in the fundamental image using the background image while giving motion to the face in the fundamental image using the geometric attributes corresponding to each frame.

Moreover, for example, circuitry 251 may input the fundamental image and the geometric information to the generative model to obtain the intermediate face video from the generative model. The intermediate face video is a video including the face and not yet synthesized with the background image. Circuitry 251 may then generate the synthesized face video by embedding, into a background region in the intermediate face video, a corresponding region in the background image.

With this, it may be possible to obtain, from the generative model, the intermediate face video in which motion is given to the face in the fundamental image using the geometric attributes corresponding to each frame. It may be possible to apply the background image to the intermediate face video. Accordingly, it may be possible to reduce the background distortion in the fundamental image using the background image while giving motion to the face in the fundamental image using the geometric attributes corresponding to each frame.

Moreover, for example, circuitry 251 may perform a segmentation process on the intermediate face video to obtain intermediate-face-video segmentation information indicating a foreground region and a background region in the intermediate face video. Circuitry 251 may then identify the background region in the intermediate face video using the intermediate-face-video segmentation information.

With this, it may be possible to appropriately identify the background region in the intermediate face video according to the intermediate-face-video segmentation information obtained as the result of the segmentation process for the intermediate face video. Accordingly, it may be possible to appropriately apply, to the background region in the intermediate face video, the corresponding region in the background image.

Moreover, for example, circuitry 251 may decode, from the one or more streams, captured-video segmentation information indicating a foreground region and a background region in the captured video. Circuitry 251 may then identify the background region in the intermediate face video using the captured-video segmentation information.

With this, it may be possible to appropriately identify the background region in the intermediate face video according to the captured-video segmentation information obtained from the one or more streams. Accordingly, it may be possible to appropriately apply, to the background region in the intermediate face video, the corresponding region in the background image.

Moreover, for example, a specified background color code may be embedded in a background region in the fundamental image. With this, it may be possible to efficiently identify the background region in the fundamental image according to the specified background color code. Moreover, it may be possible to reduce the distortion to be generated in the background in the fundamental image even when motion is given to the face in the fundamental image.

Moreover, for example, circuitry 251 may identify, as the background region in the intermediate face video, a region having the specified background color code in the intermediate face video.

With this, it may be possible to efficiently identify the background region in the intermediate face video according to the specified background color code. Specifically, it is assumed that the specified background color code is embedded in the background region in the intermediate face video obtained by giving motion to the face in the fundamental image including the background region into which the specified background color code has been embedded. Accordingly, it may be possible to efficiently identify the background region in the intermediate face video according to the specified background color code.

Moreover, for example, circuitry 251 may decode, from the one or more streams, background color-code information indicating the specified background color code. With this, it may be possible to efficiently identify the background region in the fundamental image according to the specified background color code obtained from the one or more streams. Then, it may be possible to change the specified background color code according to the fundamental image.

Moreover, for example, the background color-code information may indicate, as the specified background color code, a range including continuous values. Then, the specified background color code may be specified within the range indicated by the background color-code information. With this, it may be possible to flexibly specify the specified background color code. It may be possible to flexibly apply the specified background color code to the background region.

Moreover, for example, the specified background color code may be specified to be a color code whose occurrence frequency is less than or equal to a threshold in the foreground region in the fundamental image. With this, it may be possible to reduce misidentification of the foreground-region portion as the background-region portion. Accordingly, it may be possible to appropriately identify the background region.

Moreover, for example, circuitry 251 may decode, from the one or more streams, fundamental-image segmentation information indicating a foreground region and a background region in the fundamental image. Circuitry 251 may then embed the specified background color code into the background region in the fundamental image using the fundamental-image segmentation information.

With this, it may be possible to efficiently identify the background region in the fundamental image according to the fundamental-image segmentation information obtained from the one or more streams. Moreover, the specified background color code is embedded into the background region in the fundamental image, and thus it may be possible to reduce the distortion to be generated in the background in the fundamental image even when motion is given to the face in the fundamental image.

Moreover, for example, the background image may be an image prepared regardless of the fundamental image and the captured video. With this, it may be possible to apply, to the synthesized face video, the background image prepared separately from the fundamental image and the captured video. Accordingly, it may be possible to reduce the effect from the foreground region in the background image, or the like.

Moreover, for example, circuitry 251 may decode an identifier of the background image as the background information. Circuitry 251 may then select the background image from among background image candidates using the identifier.

With this, it may be possible to flexibly select the background image from among background image candidates. Accordingly, it may be possible to apply an appropriate background image to the synthesized face video according to the intended use of the synthesized face video.

Moreover, for example, the background image may be an image included in the captured video, or a synthesized image of images included in the captured video. With this, it may be possible to apply, to the synthesized face video, the background image obtained from the captured video. Accordingly, it may be possible to apply, to the synthesized face video, the background image corresponding to a capturing state.

Moreover, for example, circuitry 251 may decode the fundamental image as the background information. Then, the fundamental image may be applied to the background image. With this, it may be possible to use the fundamental image as the background image. It may be possible to reduce the background distortion in the fundamental image by using the original fundamental image as the background image while giving motion to the face in the fundamental image using the geometric attributes corresponding to each frame.

Moreover, for example, when the background image includes a foreground region, circuitry 251 may interpolate a missing portion of a background region in the background image using a region surrounding the foreground region in the background image or using a background region in a previous synthesized face video. With this, even when the background image includes the foreground region, it may be possible to appropriately interpolate the missing portion of the background region. Accordingly, it may be possible to reduce a missing portion of the background region in the synthesized face video.

Moreover, for example, circuitry 251 may perform a segmentation process on the background image to obtain background-image segmentation information indicating the foreground region and the background region in the background image. Circuitry 251 may then identify the foreground region and the background region in the background image using the background-image segmentation information.

With this, it may be possible to appropriately identify the foreground region and the background region in the background image according to the background-image segmentation information obtained as the result of the segmentation process for the background image. Accordingly, it may be possible to appropriately interpolate a missing portion of the background region in the background image.

Moreover, for example, a specified foreground color code may be embedded in the foreground region in the background image. With this, it may be possible to efficiently identify the foreground region in the background image according to the specified foreground color code. Moreover, it may be possible to reduce the reflection of the foreground such as a face on the background region in the synthesized face video.

Moreover, for example, circuitry 251 may decode, from the one or more streams, foreground color-code information indicating the specified foreground color code. Circuitry 251 may then identify, as the foreground region in the background image, a region having the specified foreground color code in the background image. With this, it may be possible to efficiently identify the foreground region in the background image according to the specified foreground color code obtained from the one or more streams. Then, it may be possible to change the specified foreground color code according to the background image.

Moreover, for example, the foreground color-code information may indicate, as the specified foreground color code, a range including continuous values. Then, the specified foreground color code may be specified within the range indicated by the foreground color-code information. With this, it may be possible to flexibly specify the specified foreground color code. It may be possible to flexibly apply the specified foreground color code to the foreground region.

Moreover, for example, the specified foreground color code may be specified to be a color code whose occurrence frequency is less than or equal to a threshold in the background region in the background image. With this, it may be possible to reduce misidentification of the background-region portion as the foreground-region portion. Accordingly, it may be possible to appropriately identify the foreground region.

Moreover, for example, in the one or more streams, a stream from which the background information is decoded may be the same as either a stream from which the fundamental image is decoded or a stream from which the geometric information is decoded. With this, it may be possible to decode the background information from the same stream as the fundamental image or the geometric information instead of a different stream. Accordingly, it may be possible to efficiently decode the background information together with the fundamental image or the geometric information.

Moreover, for example, in the one or more streams, a stream from which the background information is decoded may be different from both a stream from which the fundamental image is decoded and a stream from which the geometric information is decoded. With this, it may be possible to decode the background information from a different stream from the fundamental image and the geometric information instead of the same stream. Accordingly, it may be possible to decode the background information at any time separately from the fundamental image or the geometric information.

Moreover, for example, the background image may be decoded as a top picture in a sequence including pictures, or as a top picture in the GOP. With this, it may be possible to obtain the background image earlier. Accordingly, it may be possible to apply the background image to the synthesized face video earlier.

Moreover, for example, the background image may be decoded as a picture from an access unit in the one or more streams. With this, it may be possible to process the background image as a picture in the access unit. In other words, it may be possible to process the background image in the same manner as a normal picture.

Moreover, for example, the access unit from which the background image is decoded may be the same as the access unit from which the fundamental image is decoded. With this, it may be possible to decode the background image from the same access unit as the fundamental image instead of a different access unit. Accordingly, it may be possible to efficiently decode the background information together with the fundamental image.

Moreover, for example, the access unit from which the background image is decoded may be different from the access unit from which the fundamental image is decoded. With this, it may be possible to decode the background image from a different access unit from the fundamental image instead of the same access unit. Accordingly, it may be possible to decode the background image at any time separately from the fundamental image.

Moreover, for example, a signal indicating that the background image is present in an access unit may be decoded from SEI associated with the access unit including the background image. With this, it may be possible to recognize the presence of the background image in the access unit according to the signal obtained from SEI in the access unit. Accordingly, it may be possible to appropriately communicate the background image.

Moreover, for example, the background image may be decoded as a picture from an access unit in the one or more streams. Moreover, a signal indicating that the background image is present in the access unit may be decoded from SEI associated with the access unit including the background image.

With this, it may be possible to process the background image as a picture in the access unit. In other words, it may be possible to process the background image in the same manner as a normal picture. With this, it may be possible to recognize the presence of the background image in the access unit according to the signal obtained from SEI in the access unit. Accordingly, it may be possible to appropriately communicate the background image.

Moreover, for example, the background image may be decoded as the intra picture. With this, it may be possible to process the background image as the intra picture. In other words, it may be possible to process the background image independently from another picture.

Moreover, for example, the background image may be applied in common to frames of the synthesized face video. With this, it may be possible to reduce the total code amount of the synthesized face video. Moreover, it may be possible to reduce the processing amount of decoding the background image.

Moreover, for example, circuitry 251 may decode the background color-code information from SEI in the one or more streams. With this, it may be possible to efficiently identify the background region in the fundamental image according to the specified background color code obtained from SEI. Then, it may be possible to change the specified background color code according to the fundamental image.

Moreover, for example, circuitry 251 may decode the foreground color-code information from SEI in the one or more streams. With this, it may be possible to efficiently identify the foreground region in the background image according to the specified foreground color code obtained from SEI. Then, it may be possible to change the specified foreground color code according to the background image.

Moreover, for example, circuitry 251 may decode, from SEI in the one or more streams, at least one of: background color-code information indicating a specified background color code; or foreground color-code information indicating a specified foreground color code. With this, it may be possible to efficiently identify the background region according to the specified background color code obtained from SEI.

Moreover, for example, circuitry 251 may decode the captured-video segmentation information from SEI in the one or more streams. With this, it may be possible to appropriately identify the background region in the intermediate face video according to the captured-video segmentation information obtained from SEI. Accordingly, it may be possible to appropriately apply, to the background region in the intermediate face video, the corresponding region in the background image.

Moreover, for example, circuitry 251 may decode the fundamental-image segmentation information from SEI in the one or more streams. With this, it may be possible to efficiently identify the background region in the fundamental image according to the fundamental-image segmentation information obtained from SEI. Then, it may be possible to appropriately embed the specified background color code into the background region in the fundamental image.

FIG. 39 is a flow chart illustrating a second basic operation example performed by decoder 200. In operation of this example, circuitry 251 of decoder 200 performs the following steps using memory 252.

Moreover, for example, circuitry 251 may decode at least one of captured-video segmentation information or fundamental-image segmentation information from SEI in the one or more streams. The captured-video segmentation information indicates a foreground region and a background region in the captured video. The fundamental-image segmentation information indicates a foreground region and a background region in the fundamental image. With this, it may be possible to efficiently identify the background region according to the segmentation information obtained from SEI.

Specifically, circuitry 251 decodes, from one or more streams, a fundamental image and geometric information (S411). The fundamental image is an image including a face. The geometric information is information indicating geometric attributes of a subject and corresponding to each of frames of a captured video by a camera.

Next, circuitry 251 inputs the fundamental image and the geometric information to the generative model to obtain the intermediate face video from the generative model (S412). The intermediate face video is a video including a face. Circuitry 251 may then generate the synthesized face video by embedding, into a background region in the intermediate face video, a corresponding region in the fundamental image (S413).

With this, it may be possible to obtain, from the generative model, the intermediate face video in which motion is given to the face in the fundamental image using the geometric attributes corresponding to each frame. It may be possible to apply, to the background region in the intermediate face video, the corresponding region in the original fundamental image. Accordingly, it may be possible to reduce the background distortion in the fundamental image using the original fundamental image while giving motion to the face in the fundamental image using the geometric attributes corresponding to each frame. Accordingly, it may be possible to reduce the degradation of the image quality in generating the synthesized face video.

Alternatively, decoder 200 may include an input terminal, an entropy decoder, and an output terminal. The operation performed by circuitry 251 may be performed by the entropy decoder. Moreover, the input terminal may receive data for use in the operation of the entropy decoder. The output terminal may output the data obtained by the operation of the entropy decoder.

Moreover, for example, a non-transitory computer readable medium storing one or more bitstreams may be used. The one or more bitstreams may include at least one fundamental image for use in display of a video, and geometric information indicating geometric attributes in a region including a face as information corresponding to each of images in a video. The one or more bitstream may cause decoder 200 to perform processes of: (i) decoding the at least one fundamental image; and (ii) decoding the geometric information.

With this, it may be possible to implement the medium storing one or more bitstreams corresponding to the decoder and decoding method described above. Accordingly, it may be possible to produce the similar effect to decoder 200 described above using the medium.

### [Other Examples]

Encoder 100 and decoder 200 in each of the above-described examples may be used as an image encoder and an image decoder, respectively, or may be used as a video encoder and a video decoder, respectively. Moreover, the components included in encoder 100 and the components included in decoder 200 may perform operations corresponding to each other.

Moreover, the term "encode" may be replaced with another term such as store, include, write, describe, signal, send out, notice, or hold, and these terms are interchangeable. For example, encoding information may be including information in a bitstream. Moreover, encoding information into a bitstream may mean that information is encoded to generate a bitstream including the encoded information.

Moreover, the term "decode" may be replaced with another term such as retrieve, parse, read, load, derive, obtain, receive, extract, or restore, and these terms are interchangeable. For example, decoding information may be obtaining information from a bitstream. Moreover, decoding information from a bitstream may mean that a bitstream is decoded to obtain information included in the bitstream.

Moreover, for example, encoding information, compressed information, and the like included in a bitstream may be referred to just as information.

In addition, at least a part of each example described above may be used as an encoding method or a decoding method, may be used as an entropy encoding method or an entropy decoding method, or may be used as another method.

In addition, each component may be configured with dedicated hardware, or may be implemented by executing a software program suitable for the component. Each component may be implemented by causing a program executer such as a CPU or a processor to read out and execute a software program stored on a medium such as a hard disk or a semiconductor memory.

More specifically, each of encoder 100 and decoder 200 may include processing circuitry and storage which is electrically connected to the processing circuitry and is accessible from the processing circuitry. For example, the processing circuitry corresponds to circuit 151 or 251, and the storage corresponds to memory 152 or 252.

The processing circuitry includes at least one of a dedicated hardware and a program executer, and performs processing using the storage. Moreover, when the processing circuitry includes the program executer, the storage stores a software program to be executed by the program executer.

An example of the software program described above is a bitstream. The bitstream includes an encoded image and syntaxes for performing a decoding process that decodes an image. The bitstream causes decoder 200 to execute the process according to the syntaxes, and thereby causes decoder 200 to decode an image. Moreover, for example, the software which implements encoder 100, decoder 200, or the like described above is a program indicated below.

For example, this program may cause a computer to execute an encoding method including encoding, into one or more streams, (i) a fundamental image that is an image including a face, (ii) geometric information indicating geometric attributes of a subject and corresponding to each of frames of a captured video by a camera, and (iii) background information regarding a background image, (i) the fundamental image, (ii) the geometric information, and (iii) the background information being for generating a synthesized face video that is a video including a face and synthesized with the background image.

Moreover, for example, this program may cause a computer to execute a decoding method including: decoding, from one or more streams, (i) a fundamental image that is an image including a face, (ii) geometric information indicating geometric attributes of a subject and corresponding to each of frames of a captured video by a camera, and (iii) background information regarding a background image; and generating a synthesized face video using a generative model from the fundamental image, the geometric information, and the background information. The synthesized face video is a video including the face and synthesized with the background image.

Moreover, each component as described above may be a circuit. The circuits may compose circuitry as a whole, or may be separate circuits. Alternatively, each component may be implemented as a general processor, or may be implemented as a dedicated processor.

Moreover, the process that is executed by a particular component may be executed by another component. Moreover, the processing execution order may be modified, or a plurality of processes may be executed in parallel. Moreover, any two or more of the examples of the present disclosure may be performed by being combined appropriately. Moreover, an encoding and decoding device may include encoder 100 and decoder 200.

Moreover, all the components according to the present disclosure need not be implemented, and only some of the components according to the present disclosure may be implemented. Likewise, all the processes according to the present disclosure need not be implemented, and only some of the processes according to the present disclosure may be implemented.

In addition, the ordinal numbers such as "first" and "second" used for explanation may be changed appropriately. Moreover, the ordinal number may be newly assigned to a component, etc., or may be deleted from a component, etc. Moreover, the ordinal numbers may be assigned to components to differentiate between the components, and may not correspond to the meaningful order.

Moreover, for example, the expression of "at least one of the first element, the second element, or the third element (or one or more elements among the first element, the second element, and the third element)" corresponds to the first element, the second element, the third element, or any combination of the first element, the second element, and the third element.

Although aspects of encoder 100 and decoder 200 have been described based on a plurality of examples, aspects of encoder 100 and decoder 200 are not limited to these examples. The scope of the aspects of encoder 100 and decoder 200 may encompass embodiments obtainable by adding, to any of these embodiments, various kinds of modifications that a person skilled in the art would conceive and embodiments configurable by combining components in different embodiments, without deviating from the scope of the present disclosure.

The present aspect may be performed by combining one or more aspects disclosed herein with at least part of other aspects according to the present disclosure. In addition, the present aspect may be performed by combining, with the other aspects, part of the processes indicated in any of the flow charts according to the aspects, part of the configuration of any of the devices, part of syntaxes, etc.

### [Implementations and Applications]

As described in each of the above embodiments, each functional or operational block may typically be realized as an MPU (micro processing unit) and memory, for example. Moreover, processes performed by each of the functional blocks may be realized as a program execution unit, such as a processor which reads and executes software (a program) recorded on a medium such as ROM. The software may be distributed. The software may be recorded on a variety of media such as semiconductor memory. Note that each functional block can also be realized as hardware (dedicated circuit).

The processing described in each of the embodiments may be realized via integrated processing using a single apparatus (system), and, alternatively, may be realized via decentralized processing using a plurality of apparatuses. Moreover, the processor that executes the above-described program may be a single processor or a plurality of processors. In other words, integrated processing may be performed, and, alternatively, decentralized processing may be performed.

Embodiments of the present disclosure are not limited to the above exemplary embodiments; various modifications may be made to the exemplary embodiments, the results of which are also included within the scope of the embodiments of the present disclosure.

Next, application examples of the moving picture encoding method (image encoding method) and the moving picture decoding method (image decoding method) described in each of the above embodiments will be described, as well as various systems that implement the application examples. Such a system may be characterized as including an image encoder that employs the image encoding method, an image decoder that employs the image decoding method, or an image encoder-decoder that includes both the image encoder and the image decoder. Other configurations of such a system may be modified on a case-by-case basis.

### [Usage Examples]

FIG. 40 illustrates an overall configuration of content providing system ex100 suitable for implementing a content distribution service. The area in which the communication service is provided is divided into cells of desired sizes, and base stations ex106, ex107, ex108, ex109, and ex110, which are fixed wireless stations in the illustrated example, are located in respective cells.

In content providing system ex100, devices including computer ex111, gaming device ex112, camera ex113, home appliance ex114, and smartphone ex115 are connected to internet ex101 via internet service provider ex102 or communications network ex104 and base stations ex106 through ex110. Content providing system ex100 may combine and connect any of the above devices. In various implementations, the devices may be directly or indirectly connected together via a telephone network or near field communication, rather than via base stations ex106 through ex110. Further, streaming server ex103 may be connected to devices including computer ex111, gaming device ex112, camera ex113, home appliance ex114, and smartphone ex115 via, for example, internet ex101. Streaming server ex103 may also be connected to, for example, a terminal in a hotspot in airplane ex117 via satellite ex116.

Note that instead of base stations ex106 through ex110, wireless access points or hotspots may be used. Streaming server ex103 may be connected to communications network ex104 directly instead of via internet ex101 or internet service provider ex102, and may be connected to airplane ex117 directly instead of via satellite ex116.

Camera ex113 is a device capable of capturing still images and video, such as a digital camera. Smartphone ex115 is a smartphone device, cellular phone, or personal handyphone system (PHS) phone that can operate under the mobile communications system standards of the 2G, 3G, 3.9G, and 4G systems, as well as the next-generation 5G system.

Home appliance ex114 is, for example, a refrigerator or a device included in a home fuel cell cogeneration system.

In content providing system ex100, a terminal including an image and/or video capturing function is capable of, for example, live streaming by connecting to streaming server ex103 via, for example, base station ex106. When live streaming, a terminal (e.g., computer ex111, gaming device ex112, camera ex113, home appliance ex114, smartphone ex115, or a terminal in airplane ex117) may perform the encoding processing described in the above embodiments on still-image or video content captured by a user via the terminal, may multiplex video data obtained via the encoding and audio data obtained by encoding audio corresponding to the video, and may transmit the obtained data to streaming server ex103. In other words, the terminal functions as the image encoder according to one aspect of the present disclosure.

Streaming server ex103 streams transmitted content data to clients that request the stream. Client examples include computer ex111, gaming device ex112, camera ex113, home appliance ex114, smartphone ex115, and terminals inside airplane ex117, which are capable of decoding the above-described encoded data. Devices that receive the streamed data decode and reproduce the received data. In other words, the devices may each function as the image decoder, according to one aspect of the present disclosure.

### [Decentralized Processing]

Streaming server ex103 may be realized as a plurality of servers or computers between which tasks such as the processing, recording, and streaming of data are divided. For example, streaming server ex103 may be realized as a content delivery network (CDN) that streams content via a network connecting multiple edge servers located throughout the world. In a CDN, an edge server physically near a client is dynamically assigned to the client. Content is cached and streamed to the edge server to reduce load times. In the event of, for example, some type of error or change in connectivity due, for example, to a spike in traffic, it is possible to stream data stably at high speeds, since it is possible to avoid affected parts of the network by, for example, dividing the processing between a plurality of edge servers, or switching the streaming duties to a different edge server and continuing streaming.

Decentralization is not limited to just the division of processing for streaming; the encoding of the captured data may be divided between and performed by the terminals, on the server side, or both. In one example, in typical encoding, the processing is performed in two loops. The first loop is for detecting how complicated the image is on a frame-by-frame or scene-by-scene basis, or detecting the encoding load. The second loop is for processing that maintains image quality and improves encoding efficiency. For example, it is possible to reduce the processing load of the terminals and improve the quality and encoding efficiency of the content by having the terminals perform the first loop of the encoding and having the server side that received the content perform the second loop of the encoding. In such a case, upon receipt of a decoding request, it is possible for the encoded data resulting from the first loop performed by one terminal to be received and reproduced on another terminal in approximately real time. This makes it possible to realize smooth, real-time streaming.

In another example, camera ex113 or the like extracts a feature amount from an image, compresses data related to the feature amount as metadata, and transmits the compressed metadata to a server. For example, the server determines the significance of an object based on the feature amount and changes the quantization accuracy accordingly to perform compression suitable for the meaning (or content significance) of the image. Feature amount data is particularly effective in improving the precision and efficiency of motion vector prediction during the second compression pass performed by the server. Moreover, encoding that has a relatively low processing load, such as variable length coding (VLC), may be handled by the terminal, and encoding that has a relatively high processing load, such as context-adaptive binary arithmetic coding (CABAC), may be handled by the server.

In yet another example, there are instances in which a plurality of videos of approximately the same scene are captured by a plurality of terminals in, for example, a stadium, shopping mall, or factory. In such a case, for example, the encoding may be decentralized by dividing processing tasks between the plurality of terminals that captured the videos and, if necessary, other terminals that did not capture the videos, and the server, on a per-unit basis. The units may be, for example, groups of pictures (GOP), pictures, or tiles resulting from dividing a picture. This makes it possible to reduce load times and achieve streaming that is closer to real time.

Since the videos are of approximately the same scene, management and/or instructions may be carried out by the server so that the videos captured by the terminals can be cross-referenced. Moreover, the server may receive encoded data from the terminals, change the reference relationship between items of data, or correct or replace pictures themselves, and then perform the encoding. This makes it possible to generate a stream with increased quality and efficiency for the individual items of data.

Furthermore, the server may stream video data after performing transcoding to convert the encoding format of the video data. For example, the server may convert the encoding format from MPEG to VP (e.g., VP9), and may convert H.264 to H.265.

In this way, encoding can be performed by a terminal or one or more servers. Accordingly, although the device that performs the encoding is referred to as a "server" or "terminal" in the following description, some or all of the processes performed by the server may be performed by the terminal, and likewise some or all of the processes performed by the terminal may be performed by the server. This also applies to decoding processes.

### [3D, Multi-angle]

There has been an increase in usage of images or videos combined from images or videos of different scenes concurrently captured, or of the same scene captured from different angles, by a plurality of terminals such as camera ex113 and/or smartphone ex115. Videos captured by the terminals are combined based on, for example, the separately obtained relative positional relationship between the terminals, or regions in a video having matching feature points.

In addition to the encoding of two-dimensional moving pictures, the server may encode a still image based on scene analysis of a moving picture, either automatically or at a point in time specified by the user, and transmit the encoded still image to a reception terminal. Furthermore, when the server can obtain the relative positional relationship between the video capturing terminals, in addition to two-dimensional moving pictures, the server can generate three-dimensional geometry of a scene based on video of the same scene captured from different angles. The server may separately encode three-dimensional data generated from, for example, a point cloud and, based on a result of recognizing or tracking a person or object using three-dimensional data, may select or reconstruct and generate a video to be transmitted to a reception terminal, from videos captured by a plurality of terminals.

This allows the user to enjoy a scene by freely selecting videos corresponding to the video capturing terminals, and allows the user to enjoy the content obtained by extracting a video at a selected viewpoint from three-dimensional data reconstructed from a plurality of images or videos. Furthermore, as with video, sound may be recorded from relatively different angles, and the server may multiplex audio from a specific angle or space with the corresponding video, and transmit the multiplexed video and audio.

In recent years, content that is a composite of the real world and a virtual world, such as virtual reality (VR) and augmented reality (AR) content, has also become popular. In the case of VR images, the server may create images from the viewpoints of both the left and right eyes, and perform encoding that tolerates reference between the two viewpoint images, such as multi-view coding (MVC), and, alternatively, may encode the images as separate streams without referencing. When the images are decoded as separate streams, the streams may be synchronized when reproduced, so as to recreate a virtual three-dimensional space in accordance with the viewpoint of the user.

In the case of AR images, the server superimposes virtual object information existing in a virtual space onto camera information representing a real-world space, based on a three-dimensional position or movement from the perspective of the user. The decoder may obtain or store virtual object information and three-dimensional data, generate two-dimensional images based on movement from the perspective of the user, and then generate superimposed data by seamlessly connecting the images. Alternatively, the decoder may transmit, to the server, motion from the perspective of the user in addition to a request for virtual object information. The server may generate superimposed data based on three-dimensional data stored in the server, in accordance with the received motion, and encode and stream the generated superimposed data to the decoder. Note that superimposed data includes, in addition to RGB values, an α value indicating transparency, and the server sets the α value for sections other than the object generated from three-dimensional data to, for example, 0, and may perform the encoding while those sections are transparent. Alternatively, the server may set the background to a determined RGB value, such as a chroma key, and generate data in which areas other than the object are set as the background.

Decoding of similarly streamed data may be performed by the client (i.e., the terminals), on the server side, or divided therebetween. In one example, one terminal may transmit a reception request to a server, the requested content may be received and decoded by another terminal, and a decoded signal may be transmitted to a device having a display. It is possible to reproduce high image quality data by decentralizing processing and appropriately selecting content regardless of the processing ability of the communications terminal itself. In yet another example, while a TV, for example, is receiving image data that is large in size, a region of a picture, such as a tile obtained by dividing the picture, may be decoded and displayed on a personal terminal or terminals of a viewer or viewers of the TV. This makes it possible for the viewers to share a big-picture view as well as for each viewer to check his or her assigned area, or inspect a region in further detail up close.

In situations in which a plurality of wireless connections are possible over near, mid, and far distances, indoors or outdoors, it may be possible to seamlessly receive content using a streaming system standard such as MPEG-Dynamic Adaptive Streaming over HTTP (MPEG-DASH). The user may switch between data in real time while freely selecting a decoder or display apparatus including the user's terminal, displays arranged indoors or outdoors, etc. Moreover, using, for example, information on the position of the user, decoding can be performed while switching which terminal handles decoding and which terminal handles the displaying of content. This makes it possible to map and display information, while the user is on the move in route to a destination, on the wall of a nearby building in which a device capable of displaying content is embedded, or on part of the ground. Moreover, it is also possible to switch the bit rate of the received data based on the accessibility to the encoded data on a network, such as when encoded data is cached on a server quickly accessible from the reception terminal, or when encoded data is copied to an edge server in a content delivery service.

### [Web Page Optimization]

FIG. 41 illustrates an example of a display screen of a web page on computer ex111, for example. FIG. 42 illustrates an example of a display screen of a web page on smartphone ex115, for example. As illustrated in FIG. 41 and FIG. 42, a web page may include a plurality of image links that are links to image content, and the appearance of the web page differs depending on the device used to view the web page. When a plurality of image links are viewable on the screen, until the user explicitly selects an image link, or until the image link is in the approximate center of the screen or the entire image link fits in the screen, the display apparatus (decoder) may display, as the image links, still images included in the content or I pictures; may display video such as an animated gif using a plurality of still images or I pictures; or may receive only the base layer, and decode and display the video.

When an image link is selected by the user, the display apparatus performs decoding while giving the highest priority to the base layer. Note that if there is information in the HyperText Markup Language (HTML) code of the web page indicating that the content is scalable, the display apparatus may decode up to the enhancement layer. Further, in order to guarantee real-time reproduction, before a selection is made or when the bandwidth is severely limited, the display apparatus can reduce delay between the point in time at which the leading picture is decoded and the point in time at which the decoded picture is displayed (that is, the delay between the start of the decoding of the content to the displaying of the content) by decoding and displaying only forward reference pictures (I picture, P picture, forward reference B picture). Still further, the display apparatus may purposely ignore the reference relationship between pictures, and coarsely decode all B and P pictures as forward reference pictures, and then perform normal decoding as the number of pictures received over time increases.

### [Autonomous Driving]

When transmitting and receiving still image or video data such as two-or three-dimensional map information for autonomous driving or assisted driving of an automobile, the reception terminal may receive, in addition to image data belonging to one or more layers, information on, for example, the weather or road construction as metadata, and associate the metadata with the image data upon decoding. Note that metadata may be assigned per layer and, alternatively, may simply be multiplexed with the image data.

In such a case, since the automobile, drone, airplane, etc., containing the reception terminal is mobile, the reception terminal may seamlessly receive and perform decoding while switching between base stations among base stations ex106 through ex110 by transmitting information indicating the position of the reception terminal. Moreover, in accordance with the selection made by the user, the situation of the user, and/or the bandwidth of the connection, the reception terminal may dynamically select to what extent the metadata is received, or to what extent the map information, for example, is updated.

In content providing system ex100, the client may receive, decode, and reproduce, in real time, encoded information transmitted by the user.

### [Streaming of Individual Content]

In content providing system ex100, in addition to high image quality, long content distributed by a video distribution entity, unicast or multicast streaming of low image quality, and short content from an individual are also possible. Such content from individuals is likely to further increase in popularity. The server may first perform editing processing on the content before the encoding processing, in order to refine the individual content. This may be achieved using the following configuration, for example.

In real time while capturing video or image content, or after the content has been captured and accumulated, the server performs recognition processing based on the raw data or encoded data, such as capture error processing, scene search processing, meaning analysis, and/or object detection processing. Then, based on the result of the recognition processing, the server - either when prompted or automatically - edits the content, examples of which include: correction such as focus and/or motion blur correction; removing low-priority scenes such as scenes that are low in brightness compared to other pictures, or out of focus; object edge adjustment; and color tone adjustment. The server encodes the edited data based on the result of the editing. It is known that excessively long videos tend to receive fewer views. Accordingly, in order to keep the content within a specific length that scales with the length of the original video, the server may, in addition to the low-priority scenes described above, automatically clip out scenes with low movement, based on an image processing result. Alternatively, the server may generate and encode a video digest based on a result of an analysis of the meaning of a scene.

There may be instances in which individual content may include content that infringes a copyright, moral right, portrait rights, etc. Such instance may lead to an unfavorable situation for the creator, such as when content is shared beyond the scope intended by the creator. Accordingly, before encoding, the server may, for example, edit images so as to blur faces of people in the periphery of the screen or blur the inside of a house, for example. Further, the server may be configured to recognize the faces of people other than a registered person in images to be encoded, and when such faces appear in an image, may apply a mosaic filter, for example, to the face of the person. Alternatively, as pre- or post-processing for encoding, the user may specify, for copyright reasons, a region of an image including a person or a region of the background to be processed. The server may process the specified region by, for example, replacing the region with a different image, or blurring the region. If the region includes a person, the person may be tracked in the moving picture, and the person's head region may be replaced with another image as the person moves.

Since there is a demand for real-time viewing of content produced by individuals, which tends to be small in data size, the decoder first receives the base layer as the highest priority, and performs decoding and reproduction, although this may differ depending on bandwidth. When the content is reproduced two or more times, such as when the decoder receives the enhancement layer during decoding and reproduction of the base layer, and loops the reproduction, the decoder may reproduce a high image quality video including the enhancement layer. If the stream is encoded using such scalable encoding, the video may be low quality when in an unselected state or at the start of the video, but it can offer an experience in which the image quality of the stream progressively increases in an intelligent manner. This is not limited to just scalable encoding; the same experience can be offered by configuring a single stream from a low quality stream reproduced for the first time and a second stream encoded using the first stream as a reference.

### [Other Implementation and Application Examples]

The encoding and decoding may be performed by LSI (large scale integration circuitry) ex500 (see FIG. 40), which is typically included in each terminal. LSI ex500 may be configured of a single chip or a plurality of chips. Software for encoding and decoding moving pictures may be integrated into some type of a medium (such as a CD-ROM, a flexible disk, or a hard disk) that is readable by, for example, computer ex111, and the encoding and decoding may be performed using the software. Furthermore, when smartphone ex115 is equipped with a camera, video data obtained by the camera may be transmitted. In this case, the video data is coded by LSI ex500 included in smartphone ex115.

Note that LSI ex500 may be configured to download and activate an application. In such a case, the terminal first determines whether it is compatible with the scheme used to encode the content, or whether it is capable of executing a specific service. When the terminal is not compatible with the encoding scheme of the content, or when the terminal is not capable of executing a specific service, the terminal first downloads a codec or application software and then obtains and reproduces the content.

Aside from the example of content providing system ex100 that uses internet ex101, at least the moving picture encoder (image encoder) or the moving picture decoder (image decoder) described in the above embodiments may be implemented in a digital broadcasting system. The same encoding processing and decoding processing may be applied to transmit and receive broadcast radio waves superimposed with multiplexed audio and video data using, for example, a satellite, even though this is geared toward multicast, whereas unicast is easier with content providing system ex100.

### [Hardware Configuration]

FIG. 43 illustrates further details of smartphone ex115 shown in FIG. 40. FIG. 44 illustrates a configuration example of smartphone ex115. Smartphone ex115 includes antenna ex450 for transmitting and receiving radio waves to and from base station ex110, camera ex465 capable of capturing video and still images, and display ex458 that displays decoded data, such as video captured by camera ex465 and video received by antenna ex450. Smartphone ex115 further includes user interface ex466 such as a touch panel, audio output unit ex457 such as a speaker for outputting speech or other audio, audio input unit ex456 such as a microphone for audio input, memory ex467 capable of storing decoded data such as captured video or still images, recorded audio, received video or still images, and mail, as well as decoded data, and slot ex464 which is an interface for Subscriber Identity Module (SIM) ex468 for authorizing access to a network and various data. Note that external memory may be used instead of memory ex467.

Main controller ex460, which comprehensively controls display ex458 and user interface ex466, power supply circuit ex461, user interface input controller ex462, video signal processor ex455, camera interface ex463, display controller ex459, modulator/demodulator ex452, multiplexer/demultiplexer ex453, audio signal processor ex454, slot ex464, and memory ex467 are connected via bus ex470.

When the user turns on the power button of power supply circuit ex461, smartphone ex115 is powered on into an operable state, and each component is supplied with power from a battery pack.

Smartphone ex115 performs processing for, for example, calling and data transmission, based on control performed by main controller ex460, which includes a CPU, ROM, and RAM. When making calls, an audio signal recorded by audio input unit ex456 is converted into a digital audio signal by audio signal processor ex454, to which spread spectrum processing is applied by modulator/demodulator ex452 and digital-analog conversion and frequency conversion processing are applied by transmitter/receiver ex451, and the resulting signal is transmitted via antenna ex450. The received data is amplified, frequency converted, and analog-digital converted, inverse spread spectrum processed by modulator/demodulator ex452, converted into an analog audio signal by audio signal processor ex454, and then output from audio output unit ex457. In data transmission mode, text, still-image, or video data is transmitted by main controller ex460 via user interface input controller ex462 based on operation of user interface ex466 of the main body, for example. Similar transmission and reception processing is performed. In data transmission mode, when sending a video, still image, or video and audio, video signal processor ex455 compression encodes, by the moving picture encoding method described in the above embodiments, a video signal stored in memory ex467 or a video signal input from camera ex465, and transmits the encoded video data to multiplexer/demultiplexer ex453. Audio signal processor ex454 encodes an audio signal recorded by audio input unit ex456 while camera ex465 is capturing a video or still image, and transmits the encoded audio data to multiplexer/demultiplexer ex453. Multiplexer/demultiplexer ex453 multiplexes the encoded video data and encoded audio data using a determined scheme, modulates and converts the data using modulator/demodulator (modulator/demodulator circuit) ex452 and transmitter/receiver ex451, and transmits the result via antenna ex450.

When a video appended in an email or a chat, or a video linked from a web page, is received, for example, in order to decode the multiplexed data received via antenna ex450, multiplexer/demultiplexer ex453 demultiplexes the multiplexed data to divide the multiplexed data into a bitstream of video data and a bitstream of audio data, supplies the encoded video data to video signal processor ex455 via synchronous bus ex470, and supplies the encoded audio data to audio signal processor ex454 via synchronous bus ex470. Video signal processor ex455 decodes the video signal using a moving picture decoding method corresponding to the moving picture encoding method described in the above embodiments, and video or a still image included in the linked moving picture file is displayed on display ex458 via display controller ex459. Audio signal processor ex454 decodes the audio signal and outputs audio from audio output unit ex457. Since real-time streaming is becoming increasingly popular, there may be instances in which reproduction of the audio may be socially inappropriate, depending on the user's environment. Accordingly, as an initial value, a configuration in which only video data is reproduced, i.e., the audio signal is not reproduced, may be preferable; and audio may be synchronized and reproduced only when an input is received from the user clicking video data, for instance.

Although smartphone ex115 was used in the above example, three other implementations are conceivable: a transceiver terminal including both an encoder and a decoder; a transmitter terminal including only an encoder; and a receiver terminal including only a decoder. In the description of the digital broadcasting system, an example is given in which multiplexed data obtained as a result of video data being multiplexed with audio data is received or transmitted. The multiplexed data, however, may be video data multiplexed with data other than audio data, such as text data related to the video. Further, the video data itself rather than multiplexed data may be received or transmitted.

Although main controller ex460 including a CPU is described as controlling the encoding or decoding processes, various terminals often include Graphics Processing Units (GPUs). Accordingly, a configuration is acceptable in which a large area is processed at once by making use of the performance ability of the GPU via memory shared by the CPU and GPU, or memory including an address that is managed so as to allow common usage by the CPU and GPU. This makes it possible to shorten encoding time, maintain the real-time nature of streaming, and reduce delay. In particular, processing relating to motion estimation, deblocking filtering, sample adaptive offset (SAO), and transformation/quantization can be effectively carried out by the GPU, instead of the CPU, in units of pictures, for example, all at once.

### [Industrial Applicability]

The present disclosure is available for an encoder for encoding a video, etc., and applicable to a video teleconferencing system, etc.

### [Reference Signs List]

100, 700 encoder
102 splitter
104 subtractor
106 transformer
108 quantizer
110 entropy encoder
112, 204 inverse quantizer
114, 206 inverse transformer
116, 208 adder
118, 210 block memory
120, 212 loop filter unit
122, 214 frame memory
124, 216 intra predictor
126, 218 inter predictor
128, 220 prediction controller
130, 222 prediction parameter generator
131, 133, 134, 731, 733 compressor
132, 232, 732, 832 deriver
151, 251, 351 circuitry
152, 252, 352 memory
200, 800 decoder
202 entropy decoder
224 splitting determiner
231, 233, 235, 831, 833 decompressor
234, 834 generator
236 synthesizer
300 bitstream generator

## Claims

1. A decoder comprising:
memory; and
circuitry coupled to the memory, wherein
in operation, the circuitry:
decodes, from one or more streams, (i) a fundamental image that is an image including a face, (ii) geometric information indicating geometric attributes of a subject and corresponding to each of frames of a captured video by a camera, and (iii) background information regarding a background image; and
generates a synthesized face video using a generative model from the fundamental image, the geometric information, and the background information, the synthesized face video being a video including the face and synthesized with the background image.

2. The decoder according to claim 1, wherein
the circuitry inputs the fundamental image, the geometric information, and the background image to the generative model to obtain the synthesized face video from the generative model.

3. The decoder according to claim 1, wherein
the circuitry:
inputs the fundamental image and the geometric information to the generative model to obtain an intermediate face video from the generative model, the intermediate face video being a video including the face and not yet synthesized with the background image; and
generates the synthesized face video by embedding, into a background region in the intermediate face video, a corresponding region in the background image.

4. The decoder according to claim 3, wherein
the circuitry:
performs a segmentation process on the intermediate face video to obtain intermediate-face-video segmentation information indicating a foreground region and the background region in the intermediate face video; and
identifies the background region in the intermediate face video using the intermediate-face-video segmentation information.

5. The decoder according to claim 3, wherein
the circuitry:
decodes, from the one or more streams, captured-video segmentation information indicating a foreground region and a background region in the captured video; and
identifies the background region in the intermediate face video using the captured-video segmentation information.

6. The decoder according to claim 3, wherein
a specified background color code is embedded in a background region in the fundamental image.

7. The decoder according to claim 6, wherein
the circuitry identifies, as the background region in the intermediate face video, a region having the specified background color code in the intermediate face video.

8. The decoder according to claim 6 or 7, wherein
the circuitry decodes, from the one or more streams, background color-code information indicating the specified background color code.

9. The decoder according to claim 8, wherein
the background color-code information indicates, as the specified background color code, a range including continuous values, and
the specified background color code is specified within the range indicated by the background color-code information.

10. The decoder according to claim 3, wherein
the circuitry:
decodes, from the one or more streams, fundamental-image segmentation information indicating a foreground region and a background region in the fundamental image; and
embeds a specified background color code into the background region in the fundamental image using the fundamental-image segmentation information.

11. The decoder according to any one of claims 1 to 7, wherein
the background image is an image prepared regardless of the fundamental image and the captured video.

12. The decoder according to any one of claims 1 to 7, wherein
the circuitry:
decodes an identifier of the background image as the background information; and
selects the background image from among background image candidates using the identifier.

13. The decoder according to any one of claims 1 to 7, wherein
the background image is an image included in the captured video, or a synthesized image of images included in the captured video.

14. The decoder according to any one of claims 1 to 7, wherein
the circuitry decodes the fundamental image as the background information, and
the fundamental image is applied to the background image.

15. The decoder according to claim 13, wherein
when the background image includes a foreground region, the circuitry interpolates a missing portion of a background region in the background image using a region surrounding the foreground region in the background image or using a background region in a previous synthesized face video.

16. The decoder according to claim 15, wherein
the circuitry:
performs a segmentation process on the background image to obtain background-image segmentation information indicating the foreground region and the background region in the background image; and
identifies the foreground region and the background region in the background image using the background-image segmentation information.

17. The decoder according to claim 15, wherein
a specified foreground color code is embedded in the foreground region in the background image.

18. The decoder according to claim 17, wherein
the circuitry:
decodes, from the one or more streams, foreground color-code information indicating the specified foreground color code; and
identifies, as the foreground region in the background image, a region having the specified foreground color code in the background image.

19. The decoder according to claim 18, wherein
the foreground color-code information indicates, as the specified foreground color code, a range including continuous values, and
the specified foreground color code is specified within the range indicated by the foreground color-code information.

20. The decoder according to any one of claims 1 to 7, wherein
the background image is decoded as a picture from an access unit in the one or more streams, and
a signal indicating that the background image is present in the access unit is decoded from supplemental enhancement information (SEI) associated with the access unit including the background image.

21. The decoder according to any one of claims 1 to 7, wherein
the background image is applied in common to frames of the synthesized face video.

22. The decoder according to any one of claims 1 to 7, wherein
the circuitry decodes at least one of: background color-code information indicating a specified background color code; or foreground color-code information indicating a specified foreground color code, from supplemental enhancement information (SEI) in the one or more streams.

23. The decoder according to any one of claims 1 to 7, wherein
the circuitry decodes at least one of: captured-video segmentation information indicating a foreground region and a background region in the captured video; or fundamental-image segmentation information indicating a foreground region and a background region in the fundamental image, from supplemental enhancement information (SEI) in the one or more streams.

24. A decoder comprising:
memory; and
circuitry coupled to the memory, wherein
in operation, the circuitry:
decodes, from one or more streams, (i) a fundamental image that is an image including a face and (ii) geometric information indicating geometric attributes of a subject and corresponding to each of frames of a captured video by a camera;
inputs the fundamental image and the geometric information to the generative model to obtain an intermediate face video from the generative model, the intermediate face video being a video including the face; and
generates a synthesized face video by embedding, into a background region in the intermediate face video, a corresponding region in the fundamental image.

25. An encoder comprising:
memory; and
circuitry coupled to the memory, wherein
in operation, the circuitry:
encodes, into one or more streams, (i) a fundamental image that is an image including a face, (ii) geometric information indicating geometric attributes of a subject and corresponding to each of frames of a captured video by a camera, and (iii) background information regarding a background image, (i) the fundamental image, (ii) the geometric information, and (iii) the background information being for generating a synthesized face video that is a video including a face and synthesized with the background image.

26. The encoder according to claim 25, wherein
the circuitry:
performs a segmentation process on the captured video to obtain captured-video segmentation information indicating a foreground region and a background region in the captured video; and
encodes, into the one or more streams, the captured-video segmentation information.

27. The encoder according to claim 25, wherein
the circuitry:
performs a segmentation process on the fundamental image to obtain fundamental-image segmentation information indicating a foreground region and a background region in the fundamental image;
embeds a specified background color code into the background region in the fundamental image using the fundamental-image segmentation information; and
encodes the fundamental image in which the specified background color code has been embedded into the background region.

28. The encoder according to claim 27, wherein
the circuitry encodes, into the one or more streams, background color-code information indicating the specified background color code.

29. The encoder according to claim 28, wherein
the background color-code information indicates, as the specified background color code, a range including continuous values, and
the specified background color code is specified within the range indicated by the background color-code information.

30. The encoder according to any one of claims 27 to 29, wherein
the specified background color code is specified to be a color code whose occurrence frequency is less than or equal to a threshold in the foreground region in the fundamental image.

31. The encoder according to claim 25, wherein
the circuitry:
performs a segmentation process on the fundamental image to obtain fundamental-image segmentation information indicating a foreground region and a background region in the fundamental image; and
encodes, into the one or more streams, the fundamental-image segmentation information.

32. The encoder according to any one of claims 25 to 29, wherein
the background image is an image prepared regardless of the fundamental image and the captured video.

33. The encoder according to any one of claims 25 to 29, wherein
the circuitry:
selects the background image from among background image candidates; and
encodes an identifier of the background image as the background information.

34. The encoder according to any one of claims 25 to 29, wherein
the background image is an image included in the captured video, or a synthesized image of images included in the captured video.

35. The encoder according to any one of claims 25 to 29, wherein
the circuitry encodes the fundamental image as the background information, and
the fundamental image is applied to the background image.

36. The encoder according to claim 34, wherein
when the background image includes a foreground region, the circuitry interpolates a missing portion of a background region in the background image using a region surrounding the foreground region in the background image or using a background region in another image included in the captured video.

37. The encoder according to claim 36, wherein
the circuitry:
performs a segmentation process on the background image to obtain background-image segmentation information indicating the foreground region and the background region in the background image; and
identifies the foreground region and the background region in the background image using the background-image segmentation information.

38. The encoder according to claim 34, wherein
the circuitry:
performs a segmentation process on the background image to obtain background-image segmentation information indicating a foreground region and a background region in the background image; and
embeds a specified foreground color code into the foreground region in the background image using the background-image segmentation information.

39. The encoder according to claim 38, wherein
the circuitry encodes, into the one or more streams, foreground color-code information indicating the specified foreground color code.

40. The encoder according to claim 39, wherein
the foreground color-code information indicates, as the specified foreground color code, a range including continuous values, and
the specified foreground color code is specified within the range indicated by the foreground color-code information.

41. The encoder according to claim 38, wherein
the specified foreground color code is specified to be a color code whose occurrence frequency is less than or equal to a threshold in the background region in the background image.

42. The encoder according to any one of claims 25 to 29, wherein
the background image is encoded as a picture into an access unit in the one or more streams, and
a signal indicating that the background image is present in the access unit is encoded into supplemental enhancement information (SEI) associated with the access unit into which the background image is encoded.

43. The encoder according to any one of claims 25 to 29, wherein
the circuitry encodes at least one of: background color-code information indicating a specified background color code; or foreground color-code information indicating a specified foreground color code, into supplemental enhancement information (SEI) in the one or more streams.

44. The encoder according to any one of claims 25 to 29, wherein
the circuitry encodes at least one of: captured-video segmentation information indicating a foreground region and a background region in the captured video; or fundamental-image segmentation information indicating a foreground region and a background region in the fundamental image, into supplemental enhancement information (SEI) in the one or more streams.

45. An encoder comprising:
memory; and
circuitry coupled to the memory, wherein
in operation, the circuitry:
encodes, into one or more streams, (i) a fundamental image that is an image including a face and (ii) geometric information indicating geometric attributes of a subject and corresponding to each of frames of a captured video by a camera, (i) the fundamental image and (ii) the geometric information being for generating a synthesized face video, and
in generating the synthesized face video, the fundamental image and the geometric information are used to obtain an intermediate face video from a generative model by inputting the fundamental image and the geometric information to the generative model, and the fundamental image is further used to generate the synthesized face video by embedding, into a background region in the intermediate face video, a corresponding region in the fundamental image, the intermediate face video being a video including the face.

46. A bitstream generator comprising:
memory; and
circuitry coupled to the memory, wherein
in operation, the circuitry:
generates a bitstream including: (i) a fundamental image that is an image including a face; (ii) geometric information indicating geometric attributes of a subject and corresponding to each of frames of a captured video by a camera; and (iii) background information regarding a background image, (i) the fundamental image, (ii) the geometric information, and (iii) the background information being for generating a synthesized face video that is a video including a face and synthesized with the background image.

47. A decoding method comprising:
decoding, from one or more streams, (i) a fundamental image that is an image including a face, (ii) geometric information indicating geometric attributes of a subject and corresponding to each of frames of a captured video by a camera, and (iii) background information regarding a background image; and
generating a synthesized face video using a generative model from the fundamental image, the geometric information, and the background information, the synthesized face video being a video including the face and synthesized with the background image.

48. An encoding method comprising:
encoding, into one or more streams, (i) a fundamental image that is an image including a face, (ii) geometric information indicating geometric attributes of a subject and corresponding to each of frames of a captured video by a camera, and (iii) background information regarding a background image, (i) the fundamental image, (ii) the geometric information, and (iii) the background information being for generating a synthesized face video that is a video including a face and synthesized with the background image.
